(19) Europäisches Patentamt / European Patent Office / Office européen des brevets

(11) **EP 3 648 395 A1**

(12) **EUROPEAN PATENT APPLICATION**
published in accordance with Art. 153(4) EPC

(43) Date of publication:
**06.05.2020 Bulletin 2020/19**

(51) Int Cl.:
***H04L 9/08*** *(2006.01)*

(21) Application number: **17918542.6**

(86) International application number:
**PCT/JP2017/026283**

(22) Date of filing: **20.07.2017**

(87) International publication number:
**WO 2019/016916 (24.01.2019 Gazette 2019/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Corporation Chiyoda-ku Tokyo 100-8310 (JP)**

(72) Inventor: **TAKASHIMA, Katsuyuki Tokyo 100-8310 (JP)**

(74) Representative: **Pfenning, Meinig & Partner mbB Patent- und Rechtsanwälte Theresienhöhe 11a 80339 München (DE)**

(54) **ENCRYPTION DEVICE, DECRYPTION DEVICE, ENCRYPTION METHOD, ENCRYPTION PROGRAM, DECRYPTION METHOD AND DECRYPTION PROGRAM**

(57) A cryptographic system (1) uses a group $G_0$, a group $G_t$ associated with the group $G_0$, a group $G^\wedge_0$, a group $G^\wedge_t$ associated with the group $G^\wedge_0$, and a group $G_T$ associated with the group $G_0$ and the group $G^\wedge_0$ by pairing operation $e_0$ and associated with the group $G_t$ and the group $G^\wedge$ by pairing operation $e_t$. The cryptographic system (1) generates a ciphertext ct using an element X of the group $G_T$ and an element $Y^\wedge$ of the group $G^\wedge_t$, at least either one of the element X and the element $Y^\wedge$ being generated through conversion of a generator by a key generation random.

# Fig. 1

**Description**

**Technical Field**

The present invention relates to at least either one of a high-security identity (ID)-based encryption (to be referred to as IBE hereinafter) scheme and a high-security attribute-based encryption (to be referred to as ABE hereinafter) scheme.

**Background Art**

Quantum computers are being developed worldwide. Ciphers using isogenies have been proposed as encryption schemes that can maintain security even against the quantum computers. Non-Patent Literature 1 describes a partially quantum-resistant attribute-based encryption scheme that provides pre-challenge quantum security based on Isog-DBDH assumption.

**Citation List**

**Patent Literature**

Non-Patent Literature 1: Koshiba, T., Takashima, K.: Pairing cryptography meets isogeny: A new framework of isogenous pairing groups. IACR Cryptology ePrint Archive 2016, 1138 (2016)

**Summary of Invention**

**Technical Problem**

However, it is unclear whether the scheme described in Non-Patent Literature 1 can prove its security from a pairing-related problem hardness such as DBDH assumption that has been conventionally used widely. In general, the isogeny problem is recognized as harder than the pairing-related problem because, for example, it indicates quantum resistance. Meanwhile, since the hardness has not yet been fully verified, it is worried that unknown attacks might be found.
It is an objective of the present invention to make it possible to configure an encryption scheme capable of providing security from a plurality of problem hardnesses.

**Solution to Problem**

An encryption device according to the present invention is an encryption device in a cryptographic system that uses a group $G_0$, a group $G_t$ associated with the group $G_0$, a group $G^\wedge_0$, a group $G^\wedge_t$ associated with the group $G^\wedge_0$, and a group $G_T$ associated with the group $G_0$ and the group $G^\wedge_0$ by pairing operation $e_0$ and associated with the group $G_t$ and the group $G^\wedge_t$ by pairing operation $e_t$, the encryption device comprising;
a ciphertext generation unit to generate a ciphertext ct using a generation element of an element X of the group $G_T$ and a generation element of an element $Y^\wedge$ of the group $G^\wedge_t$, the element X being generated through conversion of a generator of the group $G_T$ by a key generation random, or the element $Y^\wedge$ being generated through conversion of a generator of the group $G^\wedge_t$ by the key generation random,
wherein the ciphertext generation unit comprises:

a first cipher element generation unit to generate a cipher element $c_T$ which is an element of the ciphertext ct, by setting a message m to conversion information z in which an encryption random $\zeta$ is set to the element X; and
a second cipher element generation unit to generate a cipher element c which is an element of the ciphertext ct, by setting the encryption random $\zeta$ to the element $Y^\wedge$.

**Advantageous Effects of Invention**

In the present invention, it is possible to provide security from a certain problem hardness by using a plurality of groups that are associated with each other. Also, in the present invention, it is possible to provide security from another problem hardness by generating a ciphertext $ct_{ID'}$ using a generation element generated by conversion using a key generation random.

**Brief Description of Drawings**

Fig. 1 is an explanatory diagram of an isogenous pairing group employed in the IBE scheme according to Embodiment 1.
Fig. 2 is a configuration diagram of a cryptographic system 1 according to Embodiment 1.
Fig. 3 is a configuration diagram of a key generation device 10 according to Embodiment 1.
Fig. 4 is a configuration diagram of an encryption device 20 according to Embodiment 1.
Fig. 5 is a configuration diagram of a decryption device 30 according to Embodiment 1.
Fig. 6 is a flowchart of Setup algorithm according to Embodiment 1.
Fig. 7 is an explanatory diagram of IPG according to Embodiment 1.
Fig. 8 is a flowchart of KeyGen algorithm according to Embodiment 1.
Fig. 9 is a flowchart of Enc algorithm according to Embodiment 1.
Fig. 10 is a flowchart of Dec algorithm according to Embodiment 1.
Fig. 11 is a configuration diagram of a key generation device 10 according to Modification 1.
Fig. 12 is a configuration diagram of an encryption device 20 according to Modification 1.
Fig. 13 is a configuration diagram of a decryption device 30 according to Modification 1.
Fig. 14 is an explanatory diagram of properties of ID groups according to Embodiment 2.
Fig. 15 is an explanatory diagram of ID groups in Setup algorithm according to Embodiment 2.
Fig. 16 is an explanatory diagram of ID groups in KeyGen algorithm according to Embodiment 2.
Fig. 17 is an explanatory diagram of ID groups in Enc algorithm according to Embodiment 2.
Fig. 18 is an explanatory diagram of ID groups in Dec algorithm according to Embodiment 2.
Fig. 19 is a configuration diagram of a key generation device 10 according to Embodiment 2.
Fig. 20 is a configuration diagram of an encryption device 20 according to embodiment 2.
Fig. 21 is a flowchart of Setup algorithm according to Embodiment 2.
Fig. 22 is a flowchart of KeyGen algorithm according to Embodiment 2.
Fig. 23 is a flowchart of Enc algorithm according to Embodiment 2.
Fig. 24 is a configuration diagram of a cryptographic system 1 according to Embodiment 3.
Fig. 25 is a configuration diagram of a cryptographic system 1 according to Embodiment 5.
Fig. 26 is a configuration diagram of a key delegation device 40 according to Embodiment 5.
Fig. 27 is a flowchart of Delegate algorithm according to Embodiment 5.

**Description of Embodiments**

Embodiment 1.

In Embodiment 1, high-security, high-efficient IBE scheme will be described.

*** Explanation of Notation ***

The notation in the following description will be explained.
In the following explanation, when in a formula a symbol or the like is written above a variable, in the sentence this symbol or the like is placed on an upper right of the variable. Specifically, in a formula a symbol "^" or a symbol "→" is written above a variable, but in the sentence it is placed on an upper right of the variable. For example, formula 101 is written as B^ in the sentence.

[Formula 101]

$$\hat{B}$$

When a symbol "→" expressing a vector is annexed to a superscript, assume that this symbol "→" is a superscript to that superscript. This means that in $g^{y^{\rightarrow}}$, $y^{\rightarrow}$ is expressed as a superscript to g.
When A is a random variable or distribution, formula 102 denotes that y is randomly selected from A according to the distribution of A. That is, in formula 102, y is a random.

[Formula 102]

$$y \xleftarrow{\quad R \quad} A$$

When A is a set, formula 103 denotes that y is uniformly selected from A. That is, in formula 103, y is a uniform random.

[Formula 103]

$$y \xleftarrow{\quad U \quad} A$$

Formula 104, namely $F_q$, denotes a finite field of order q.

[Formula 104]

$$\mathbb{F}_q$$

Assume that formula 105 holds for an integer n larger than 0.

[Formula 105]

$$[n] := \{1, \ldots, n\},$$
$$[0, n] := \{0, \ldots, n\}$$

Formula 106 denotes an inner product indicated by formula 108 of two vectors $\vec{y}$ and $\vec{v}$ indicated in formula 107.

[Formula 106]

$$\vec{x} \cdot \vec{v}$$

[Formula 107]

$$\vec{x} = (x_1, \ldots, x_n),$$
$$\vec{v} = (v_1, \ldots, v_n)$$

[Formula 108]

$$\sum_{i=1}^{n} x_i v_i$$

For an element g in a product group K (resp. an element g^ in a product group K^) indicated in formula 109 and a vector y denoted by formula 110, $g^{y \rightarrow}$ denotes a group element denoted by formula 111.

[Formula 109]

$$\mathbb{K} := \mathbb{G}_1 \times \cdots \times \mathbb{G}_r \quad (\text{resp. } \hat{\mathbb{K}} := \hat{\mathbb{G}}_1 \times \cdots \times \hat{\mathbb{G}}_r) ,$$

$$g := (g_i) \quad (\text{resp. } \hat{g} := (\hat{g}_i))$$

[Formula 110]

$$\vec{y} = (y_i)_{y \in [r]} \in \mathbb{F}_q^r$$

[Formula 111]

$$(g_i^{y_i})_{i \in [r]}$$

For a scalar $\zeta \in F_q$, $g^\zeta$ denotes a scalar exponentiation denoted by formula 112.

[Formula 112]

$$(g_i^{\zeta})_{i \in [r]}$$

For the element g := (g_i) and the element g^ := (g^_i) in the respective product groups K and K^ mentioned above, if a pairing $e_i$ is defined on a space denoted by formula 113, a pairing $e_K$ is defined as in Formula 114.

[Formula 113]

$$\mathbb{G}_i \times \hat{\mathbb{G}}_i \quad \text{for } i \in [r]$$

[Formula 114]

$$e_{\mathbb{K}}(g,\hat{g}) := \prod_{i \in [r]} e_i(g_i, \hat{g}_i)$$

*** Explanation of Idea ***

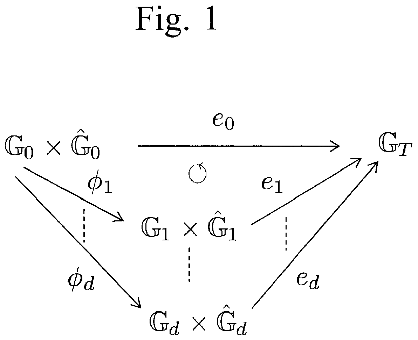

An isogenous pairing group (to be referred to as IPG hereinafter) employed in an IBE scheme according to Embodiment 1 will be explained referring to Fig. 1.

IPG has a plurality of groups that are associated by isogeny and pairing operation.

More specifically, IPG has a group $G_0$, groups $G_t$ for t = 1, ..., d associated with the group $G_0$ by isogeny $\phi_t$, groups $G^\wedge_t$ for t = 1, ..., d associated with a group $G^\wedge_0$ by isogeny $\phi_t$, and a group $G_T$ associated with the groups $G_t$ and the group $G^\wedge_t$ for t = 1, ..., d by pairing operation $e_t$. In IPG, assuming a case where elements from group $G_0 \times$ group $G^\wedge_0$ are converted by pairing operation $e_0$ and a case where elements from group $G_0 \times$ group $G^\wedge_0$ are converted to groups $G_t \times$ groups $G^\wedge_t$ by isogeny $\phi_t$ for any one integer t of t = 1, ..., d and then converted by pairing operation $e_t$, results between the two cases are equal.

For example, groups $G_t$ and groups $G^\wedge_t$ for each integer t of t = 0, ..., d are groups on different elliptic curves.

More precisely, IPG is defined as follows.

According to IPG generation algorithm $Gen^{IPG}(1^\lambda, N)$, a master key pair of a public parameter $pk^{IPG}$ and a master secret key $msk^{IPG}$ indicated in formula 115 is generated randomly.

[Formula 115]

$$Gen^{IPG}(1^\lambda, N)$$
$$\xrightarrow{R} (pk^{IPG} := ((\mathbb{G}_t, \hat{\mathbb{G}}_t, g_t, \hat{g}_t, e_t)_{t \in [0,N]}, \mathbb{G}_T)),$$
$$msk^{IPG} := (\phi_t)_{t \in [N]})$$

Note that $(G_t, G^\wedge_t, e_t, G_T)$ are asymmetric pairing groups of a prime order q with pairings $e_t$: $G_t \times G^\wedge_t \to G_T$ and trapdoor homomorphisms $\phi_t$. Trapdoor homomorphisms $\phi_t$ are mapping from $G_0 \times G^\wedge_0$ to $G_t \times G^\wedge_t$ such that $G_t = \phi_t(G_0)$ and $G^\wedge_t = \phi_t(G^\wedge_0)$ under natural identifications $G = G \times 1_{G^\wedge}$ and $G^\wedge = 1_G \times G^\wedge$ given by isogenies between different elliptic curves. Also, $g_t = \phi_t(g_0) \in G_t$, $g^\wedge_t = \phi_t(g^\wedge_0) \in G^\wedge_t$.

IPG has compatibility denoted by formula 116.

[Formula 116]

$$e_0(g_0, \hat{g}_0) = e_t(g_t, \hat{g}_t) = e_t(\phi_t(g_0), \hat{g}_0) \text{ for any } t \in [N]$$

Note that $g_T = e_0(g_0, g^\wedge_0) \neq 1$ and $G_t \neq G^\wedge_t$.

*** Description of Configuration ***

A configuration of the IBE scheme according to Embodiment 1 will be described.

The IBE scheme comprises Setup algorithm, KeyGen algorithm, Enc algorithm, and Dec algorithm.

Setup algorithm takes as input a security parameter $1^\lambda$ and outputs public parameters pk and a master secret key msk.

KeyGen algorithm takes as input the public parameters pk, the master secret key msk, and an identity ID, and outputs a decryption key $sk_{ID}$ corresponding to the identity ID.

Enc algorithm takes as input the public parameters pk, a message m in a message space msg, and an identity ID', and outputs a ciphertext $ct_{ID'}$.

Dec algorithm takes as input the public parameters pk, the decryption key $sk_{ID}$ corresponding to the identity ID, and the ciphertext $ct_{ID'}$ encrypted under the identity ID', and outputs either a message m' $\in$ msg or a distinguished symbol $\bot$ which indicates that decryption failed.

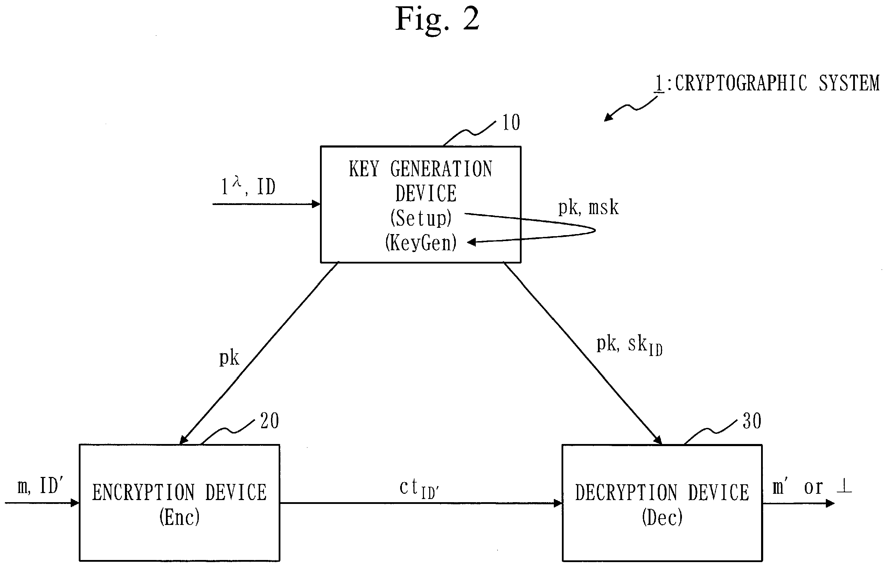

A configuration of a cryptographic system 1 according to Embodiment 1 will be described referring to Fig. 2.

The cryptographic system 1 is provided with a key generation device 10, an encryption device 20, and a decryption device 30. The key generation device 10, the encryption device 20, and the decryption device 30 are connected to each other via a transmission line. A specific example of the transmission line is a local area network (LAN) or the Internet. The key generation device 10, the encryption device 20, and the decryption device 30 can communicate with each other via the transmission line.

The key generation device 10 takes as input a security parameter $1^\lambda$ and executes Setup algorithm to generate public parameters pk and a master secret key msk. The key generation device 10 also takes as input the public parameters pk, the master secret key msk, and an identity ID and executes KeyGen algorithm to generate a decryption key $sk_{ID}$.

The key generation device 10 publishes the public parameters pk and outputs the decryption key $sk_{ID}$ to the decryption device 30 corresponding to the identity ID. The key generation device 10 keeps the master secret key msk.

Setup algorithm may be executed only once in setup or the like of the cryptographic system 10.

The encryption device 20 takes as input the public parameters pk, a message m, and an identity ID' and executes Enc algorithm to generate a ciphertext $ct_{ID'}$. The encryption device 20 outputs the ciphertext $ct_{ID'}$ to the decryption device 30.

The decryption device 30 takes as input the public parameters pk, the decryption key $sk_{ID}$, and the ciphertext $ct_{ID'}$ and executes Dec algorithm to generate a message m' or a distinguished symbol $\bot$ which indicates that decryption failed.

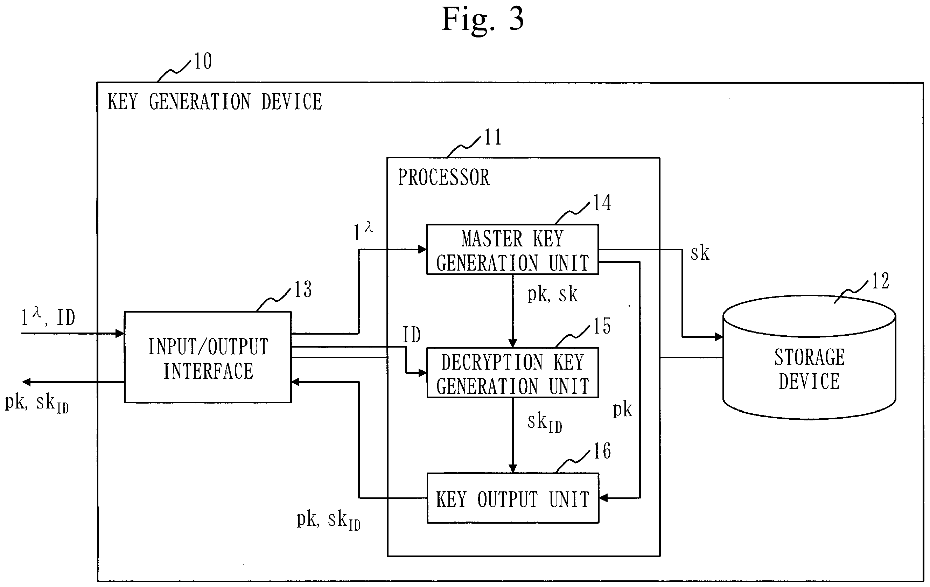

A configuration of the key generation device 10 according to Embodiment 1 will be described referring to Fig. 3.

The key generation device 10 is provided with hardware devices which are a processor 11, a storage device 12, and an input/output interface 13. The processor 11 is connected to the other hardware devices via a signal line and controls these other hardware devices.

The key generation device 10 is provided with a master key generation unit 14, a decryption key generation unit 15, and a key output unit 16, as function configuration elements. Functions of the master key generation unit 14, decryption key generation unit 15, and key output unit 16 are implemented by software.

A program that implements the functions of the individual units of the key generation device 10 is stored in the storage device 12. This program is read by the processor 11 and executed by the processor 11. The functions of the individual units of the key generation device 10 are thus implemented.

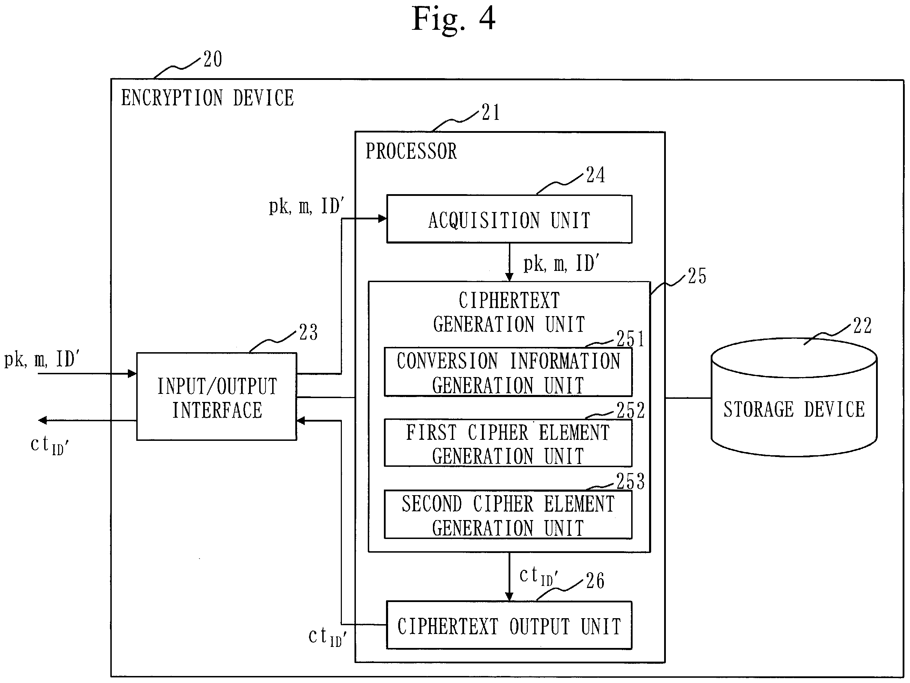

A configuration of the encryption device 20 according to Embodiment 1 will be described referring to Fig. 4.

The encryption device 20 is provided with hardware devices which are a processor 21, a storage device 22, and an input/output interface 23. The processor 21 is connected to the other hardware devices via a signal line and controls these other hardware devices.

The encryption device 20 is provided with an acquisition unit 24, a ciphertext generation unit 25, and a ciphertext output unit 26, as function configuration elements. The ciphertext generation unit 25 is provided with a conversion information generation unit 251, a first cipher element generation unit 252, and a second cipher element generation unit 253. Functions of the acquisition unit 24, ciphertext generation unit 25, conversion information generation unit 251, first cipher element generation unit 252, second cipher element generation unit 253, and ciphertext output unit 26 are implemented by software.

A program that implements the functions of the individual units of the encryption device 20 is stored in the storage device 22. This program is read by the processor 21 and executed by the processor 21. The functions of the individual units of the encryption device 20 are thus implemented.

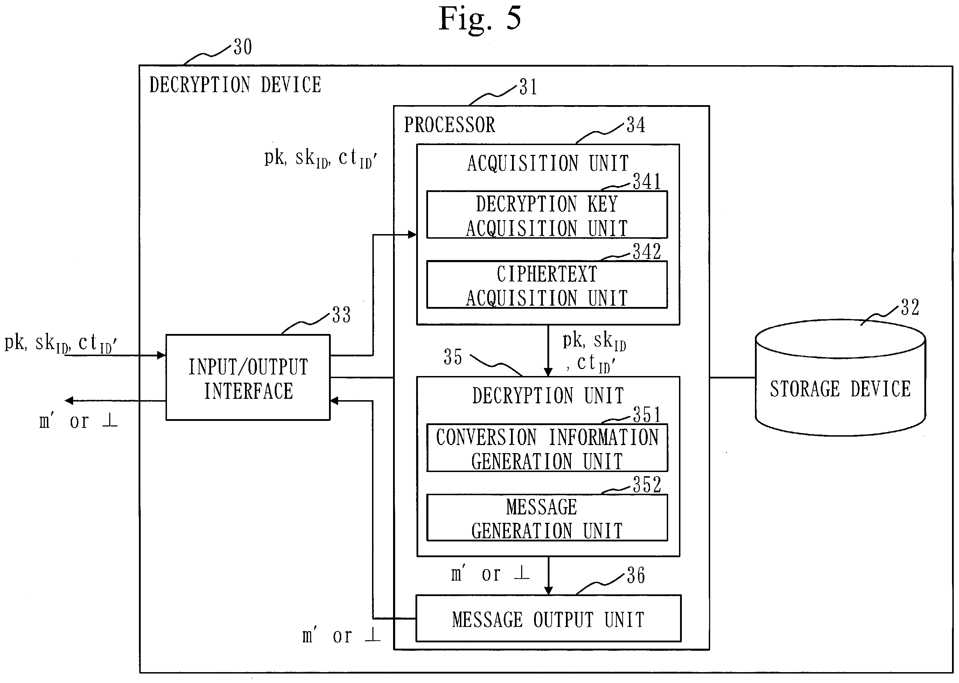

A configuration of the decryption device 30 according to Embodiment 1 will be described referring to Fig. 5.

The decryption device 30 is provided with hardware devices which are a processor 31, a storage device 32, and an input/output interface 33. The processor 31 is connected to the other hardware devices via a signal line and controls these other hardware devices.

The decryption device 30 is provided with an acquisition unit 34, a decryption unit 35, and a message output unit 36, as function configuration elements. The acquisition unit 34 is provided with a decryption key acquisition unit 341 and a ciphertext acquisition unit 342. The decryption unit 35 is provided with a conversion information generation unit 351 and a message generation unit 352. Functions of the acquisition unit 34, decryption key acquisition unit 341, ciphertext acquisition unit 342, decryption unit 35, conversion information generation unit 351, message generation unit 352, and message output unit 36 are implemented by software.

A program that implements the functions of the individual units of the decryption device 30 is stored in the storage device 32. This program is read by the processor 31 and executed by the processor 31. The functions of the individual units of the decryption device 30 are thus implemented.

Each of the processors 11, 21, and 31 is an integrated circuit (IC) that performs processing. Specific examples of each of the processors 11, 21, and 31 are a central processing unit (CPU), a digital signal processor (DSP), and a graphics processing unit (GPU).

Specific examples of each of the storage devices 12, 22, and 32 are a random access memory (RAM) and a hard disk drive (HDD). Each of the storage devices 12, 22, and 32 may be a portable storage medium such as a secure digital (SD) memory card, a compact flash (CF), a NAND flash, a flexible disk, an optical disk, a compact disk, a blu-ray (registered trademark) disk, and a DVD.

Each of the input/output interfaces 13, 23, and 33 is an interface to receive as input, data from the outside and to output data to the outside. A specific example of each of the input/output interfaces 13, 23, and 33 is a connector such as a universal serial bus (USB), PS/2, and a high-definition multimedia interface (HDMI; registered trademark) that connects an input device such as a keyboard and an output device such as a display. A specific example of each of the input/output interfaces 13, 23, and 33 may also be a network interface card (NIC) that receives data from the outside and transmits data via the network.

Information, data, signal values, and variable values indicating processing results of the functions of the individual units implemented by the processor 11 are stored in the storage device 12, or a register or cache memory in the processor 11. Likewise, information, data, signal values, and variable values indicating processing results of the functions of the individual units implemented by the processor 21 are stored in the storage device 22, or a register or cache memory in the processor 21. Likewise, information, data, signal values, and variable values indicating processing results of the functions of the individual units implemented by the processor 31 are stored in the storage device 32, or a register or cache memory in the processor 31.

The program that implements the individual functions implemented by the processor 11 is stored in the storage device 12, as described above. Likewise, the program that implements the individual functions implemented by the processor 21 is stored in the storage device 22, as described above. Likewise, the program that implements the individual functions implemented by the processor 31 is stored in the storage device 32. Alternatively, these programs may be stored in a portable storage medium such as a magnetic disk, a flexible disk, an optical disk, a compact disk, a blu-ray (registered trademark) disk, and a DVD.

Fig. 3 illustrates only one processor 11. However, the key generation device 10 may be provided with a plurality of processors that replace the processor 11. The plurality of processors share execution of the program that implements the functions of the individual units of the key generation device 10. Each processor is an IC that performs processing, as the processor 11 does. Likewise, the encryption device 20 may be provided with a plurality of processors that replace the processor 21. The decryption device 30 may be provided with a plurality of processors that replace the processor 31.

*** Description of Operation ***

An operation of the cryptographic system 1 according to Embodiment 1 will be described referring to Figs. 3 to 10.

The operation of the cryptographic system 1 according to Embodiment 1 is equivalent to a cryptographic method according to Embodiment 1. The operation of the cryptographic system 1 according to Embodiment 1 is also equivalent to processing of a cryptographic program according to Embodiment 1.

An operation of the key generation device 10 according to Embodiment 1 is equivalent to a key generation method according to Embodiment 1. The operation of the key generation device 10 according to Embodiment 1 is also equivalent to processing of a key generation program according to Embodiment 1.

An operation of the encryption device 20 according to Embodiment 1 is equivalent to an encryption method according to Embodiment 1. The operation of the encryption device 20 according to Embodiment 1 is also equivalent to processing of an encryption program according to Embodiment 1.

An operation of the decryption device 30 according to Embodiment 1 is equivalent to a decryption method according to Embodiment 1. The operation of the decryption device 30 according to Embodiment 1 is also equivalent to processing of a decryption program according to Embodiment 1.

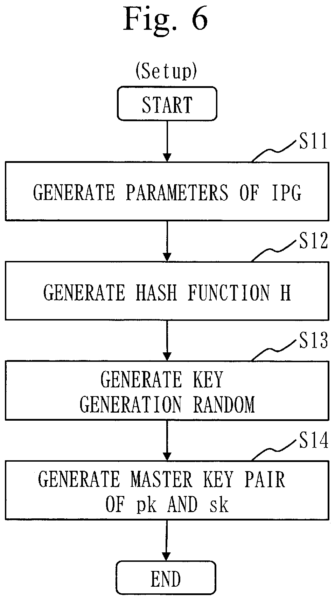

Setup algorithm according to Embodiment 1 will be described referring to Figs. 3 and 6.

Setup algorithm is executed by the key generation device 10.

(Step S11: IPG Generation Process)

The master key generation unit 14 receives as input the security parameter $1^\lambda$ via the input/output interface 13. The master key generation unit 14 takes as input the received security parameter $1^\lambda$ and d = 1 and executes IPG generation algorithm $\text{Gen}^{IPG}(1^\lambda, d)$ to generate a master key pair of the public parameters $\text{pk}^{IPG}$ and the master secret key $\text{msk}^{IPG}$ indicated in formula 117.

[Formula 117]

$$(pk^{IPG} := ((\mathbb{G}_t, \hat{\mathbb{G}}_t, g_t, \hat{g}_t, e_t)_{t=0,1}, \mathbb{G}_T)), \; msk^{IPG} := \phi_1)$$

$$\xleftarrow{\quad R \quad} Gen^{IPG}(1^\lambda, 1)$$

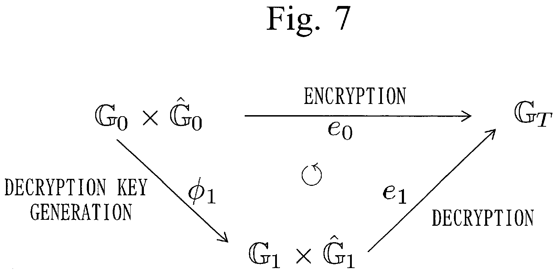

That is, in Embodiment 1, the group $G_t$ and the group $G^\wedge_t$ for t = 0, 1, the pairing operation $e_t$, the group $G_T$, and isogeny $\phi_1$ are generated, as illustrated in Fig. 7.

As illustrated in Fig. 7, conversion from $G_0$ to $G_1$ roughly corresponds to "decryption key generation (KeyGen)", conversion from $G_0 \times G^\wedge_0$ to $G_T$ roughly corresponds to "encryption (Enc)", and conversion from $G_1 \times G^\wedge_1$ to $G_T$ roughly corresponds to "decryption (Dec)".

(Step S12: Hash Function Generation Process)

The master key generation unit 14 generates a random hash function H which converts an element of a field $F_q$, being a space of an identity, to an element of the group $G_0$.

(Step S13: Key Generation Random Generation Process)

The master key generation unit 14 generates a key generation random $\gamma$ which is a uniform random.

(Step S14: Master Key Generation Process)

Using the public parameters $pk^{IPG}$ generated in step S11 and the hash function H generated in step S12, the master key generation unit 14 generates the public parameters pk := $((G_t, G^\wedge_t, e_t)_{t=0,1}, g^\wedge_0{}' := g^\wedge_0{}^\gamma, g^\wedge_1, G_T, H)$. The key output unit 16 outputs the public parameters pk to the encryption device 20 and the decryption device 30 by outputting the public parameters pk to an external public server or the like via the input/output interface 13.

Using the master secret key $msk_{IPG}$ generated in step S11 and the key generation random $\gamma$ generated in step S13, the master key generation unit 14 generates the master secret key msk := $(\phi_1, \gamma)$. The master key generation unit 14 writes the generated master secret key msk to the storage device 12.

That is, the master key generation unit 14 generates the master key pair by executing the Setup algorithm indicated in formula 118.

[Formula 118]

$$Setup(1^\lambda):$$

$$(pk^{IPG} := ((\mathbb{G}_t, \hat{\mathbb{G}}_t, g_t, \hat{g}_t, e_t)_{t=0,1}, \mathbb{G}_T)), \; msk^{IPG} := \phi_1)$$

$$\xleftarrow{\quad R \quad} Gen^{IPG}(1^\lambda, 1),$$

$$\text{generate a random hash } H : \{0,1\}^* \to \mathbb{G}_0, \; \gamma \xleftarrow{\quad U \quad} \mathbb{F}_q,$$

$$\text{return } pk := ((\mathbb{G}_t, \hat{\mathbb{G}}_t, e_t)_{t=0,1}, \hat{g}_0{}' := \hat{g}_0^\gamma, \hat{g}_1, \mathbb{G}_T, H), \; msk := (\phi_1, \gamma).$$

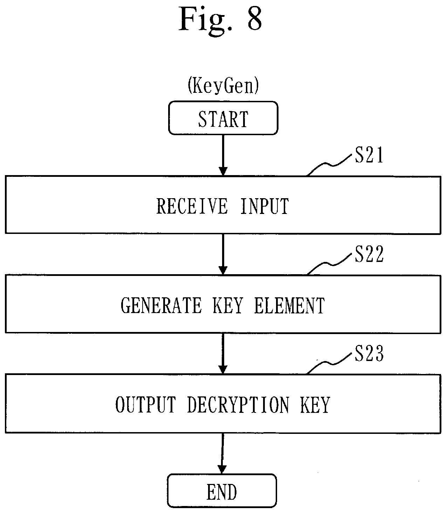

KeyGen algorithm according to Embodiment 1 will be described referring to Figs. 3 and 8.

KeyGen algorithm is executed by the key generation device 10.

(S21: ID Receipt Process)

The decryption key generation unit 15 receives as input the identity ID of a user who uses the decryption key $sk_{ID}$, via the input/output interface 13. The identity ID is inputted by, for example, a user of the key generation device 10, via the input device.

(Step S22: Key Element Generation Process)

The decryption key generation unit 15 takes as input the identity ID received in step S21 and calculates the hash function H included in the public parameters pk, to generate an element $h_0$ which is an element of the group $G_0$.
The decryption key generation unit 15 converts the element $h_0$ by isogeny $\phi_1$ and the key generation random $\gamma$ both included in the master secret key msk, to generate an element $h_1$. More specifically, the decryption key generation unit 15 converts the element $h_0$ by isogeny $\phi_1$ and the key generation random $\gamma$, to generate the element $h_1$ which is a key element k, as indicated in formula 119.

[Formula 119]

$$h_1 := \phi_1(h_0^{\gamma})$$

That is, the element $h_1$ is an element of the group $G_t$ (= group $G_1$) converted by the key generation random $\gamma$.

(Step S23: Key Output Process)

The key output unit 16 outputs the decryption key $sk_{ID}$ including the identity ID received in step S21 and the element $h_1$ generated in step S22 to the decryption device 30 via the input/output interface 13. At this time, the key output unit 16 prevents leakage of the decryption key $sk_{ID}$ to a third party by taking a method such as encryption according to some encryption scheme.
That is, the decryption key generation unit 15 generates the decryption key $sk_{ID}$ by executing the KeyGen algorithm indicated in formula 120.

[Formula 120]

$$\text{KeyGen}(\text{pk}, \text{sk}, ID):$$

$$h_0 := H(ID) \in \mathbb{G}_0, \; h_1 := \phi_1(h_0^{\gamma}),$$

$$\text{return sk}_{ID} := (ID, h_1).$$

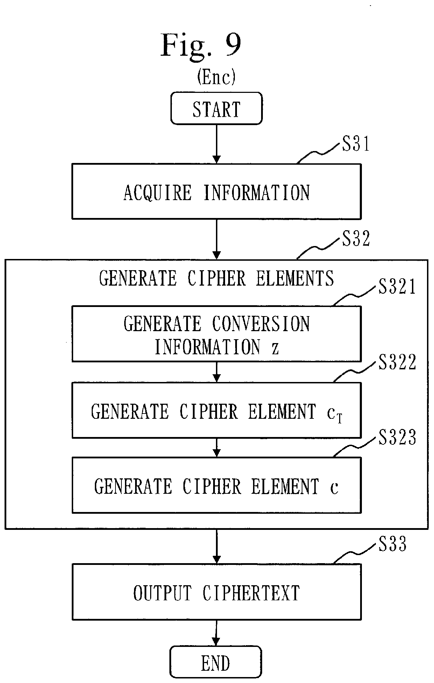

Enc algorithm according to Embodiment 1 will be described referring to Figs. 4 and 9.
Enc algorithm is executed by the encryption device 20.

(Step S31: Acquisition Process)

The acquisition unit 24 acquires, via the input/output interface 23, the public parameters pk generated by the key generation device 10. The acquisition unit 24 also receives as input the message m being an encryption target and the identity ID' being a decryption condition. The message m and the identity ID' are inputted by, for example, a user of he encryption device 20 via the input device.

(Step S32: Ciphertext Generation Process)

The ciphertext generation unit 25 generates elements of the ciphertext $ct_{ID'}$ using the public parameters pk and the identity ID' which are acquired in step S31. The ciphertext generation unit 25 generates the elements of the ciphertext

$ct_{ID'}$ using a generation element of an element X of the group $G_T$ and a generation element of an element $Y^\wedge$ of the group $G^\wedge_t$. The element X refers to $e_0(h_0, g^\wedge{}_0')$ described later. The element $Y^\wedge$ refers to $g^\wedge{}_1$ included in the public parameters pk.

The ciphertext generation process includes processes of step S321 to step S323.

(Step S321: Conversion Information Generation Process)

The conversion information generation unit 251 takes as input the identity ID' received in step S31 and calculates the hash function H included in the public parameters pk to generate the element $h_0$ which is an element of the group $G_0$. The conversion information generation unit 251 also generates an encryption random $\zeta$ which is a uniform random.

Using the element $h_0$ and the encryption random $\zeta$, the conversion information generation unit 251 generates conversion information z, as indicated in formula 121.

[Formula 121]

$$z := e_0(h_0, \hat{g}_0')^\zeta$$

That is, the conversion information generation unit 251 generates the conversion information z by converting $e_0(h_0, g^\wedge{}_0')$ which is the element X of the group $G_T$, using the encryption random $\zeta$. Since $e_0(h_0, g^\wedge{}_0')$ which is the element X includes $g^\wedge{}_0' := g^\wedge{}_0{}^\gamma$, $e_0(h_0, g^\wedge{}_0')$ is generated by converting a generator $(g^\wedge{}_0)$ of the group $G_T$ using the key generation random $\gamma$.

(Step S322: First Cipher Element Generation Process)

The first cipher element generation unit 252 generates a cipher element $c_T$ which is an element of the ciphertext $ct_{ID'}$ by setting the message m to the conversion information z generated in step S321, as indicated in formula 122.

[Formula 122]

$$c_T := z \cdot m$$

(Step S323: Second Cipher Element Generation Process)

The second cipher element generation unit 253 generates a cipher element c which is an element of the ciphertext $ct_{ID'}$ by setting the encryption random $\zeta$ to $g^\wedge{}_1$ which is the element $Y^\wedge$, as indicated in formula 123.

[Formula 123]

$$c := \hat{g}_1^\zeta$$

(Step S33: Ciphertext Output Process)

The ciphertext output unit 26 outputs the ciphertext $ct_{ID'}$ having, as cipher elements, the identity ID' received in step S31 and the cipher elements $c_T$ and c generated in step S32 to the decryption device 30 via the input/output interface 23.

That is, the encryption device 20 generates the ciphertext $ct_{ID'}$ by executing the Enc algorithm indicated in formula 124.

[Formula 124]

$$\text{Enc}(\text{pk}, m, ID'):$$

$$h_0 := H(ID'), \quad \zeta \xleftarrow{\mathrm{U}} \mathbb{F}_q^{\mathrm{X}},$$

$$c := \hat{g}_1^{\zeta}, \quad z := e_0(h_0, \hat{g}_0')^{\zeta}, \quad c_T := z \cdot m,$$

$$\text{return } \text{ct}_{ID'} := (ID', c, c_T).$$

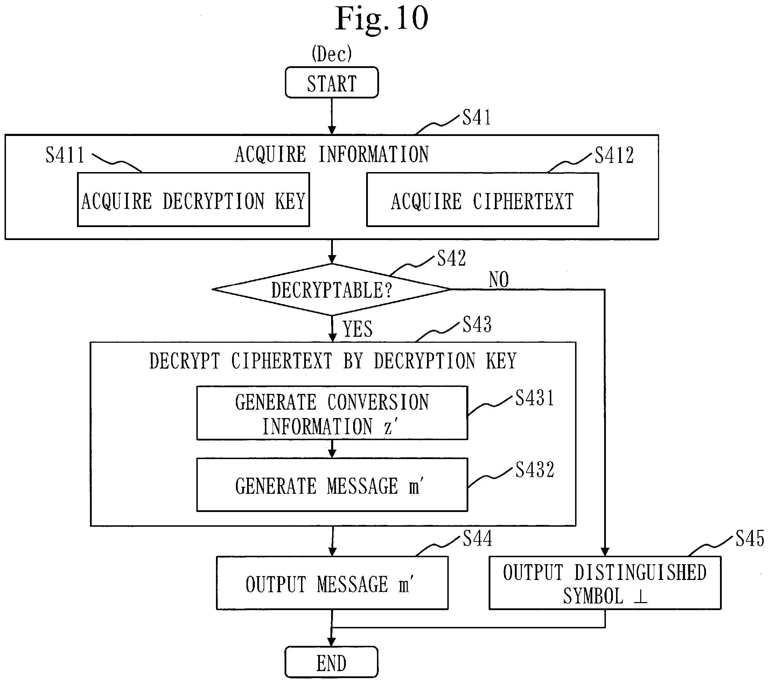

Dec algorithm according to Embodiment 1 will be described referring to Figs. 5 and 10.

Dec algorithm is executed by the decryption device 30.

(Step S41: Acquisition Process)

The acquisition unit 34 acquires, via the input/output interface 33, the public parameters pk and the decryption key $sk_{ID}$ which are generated by the key generation device 10 and the ciphertext $ct_{ID'}$ generated by the encryption device 20.

The acquisition process includes processes of step S411 and step S412.

(Step S411: Decryption Key Acquisition Process)

The decryption key acquisition unit 341 acquires, via the input/output interface 33, the public parameters pk and the decryption key $sk_{ID}$ which are generated by the key generation device 10. The decryption key $sk_{ID}$ includes, as the key element k, the element $h_1$ which is an element of the group $G_t$ (= group $G_1$) converted by the key generation random $\gamma$.

(Step S412: Ciphertext Acquisition Process)

The ciphertext acquisition unit 342 acquires the ciphertext $ct_{ID'}$ generated by the encryption device 20. The ciphertext $ct_{ID'}$ includes the cipher element $c_T$ and the cipher element c. In the cipher element $c_T$, the message m is set to the conversion information z in which the encryption random $\zeta$ is set to the element X which is generated through conversion of the generator ($e_0(h_0, g\hat{}_0')$) of the group $G_T$ by the key generation random $\gamma$. In the cipher element c, the encryption random $\zeta$ is set to $g\hat{}_1$ which is the element Y^.

(Step S42: Decryption Determination Process)

The decryption unit 35 determines whether or not the identity ID included in the decryption key $sk_{ID}$ received in step S41 and the identity ID' included in the ciphertext $ct_{ID'}$ received in step S41 are equal. Hence, whether the ciphertext $ct_{ID'}$ can be decrypted by the decryption key $sk_{ID}$ is determined.

If it is determined that the identity ID and the identity DI' are equal, that is, if it is determined that decryption is possible, the decryption unit 35 advances the processing to step S43. If not, the decryption unit 35 advances the processing to step S45.

(Step S43: Decryption Process)

The decryption unit 35 generates the message m' by decrypting the ciphertext $ct_{ID'}$ by the decryption key $sk_{ID}$ received in step S41.

The decryption process includes processes of step S431 and step S432.

(Step S431: Conversion Information Generation Process)

The conversion information generation unit 351 generates conversion information z' using the element $h_1$ included in the decryption key $sk_{ID}$ acquired in step S411 and the cipher element c included in the ciphertext $ct_{ID'}$ acquired in step S412, as indicated in formula 125.

[Formula 125]

$$z' := e_1(h_1, c)$$

Since formula 126 holds, if the decryption key $sk_{ID}$ can decrypt the ciphertext $ct_{ID'}$, then the conversion information z' and the conversion information z are identical.

[Formula 126]

$$e_1(h_1, c)$$
$$= e_1(\phi_1(h_0^\gamma), \hat{g}_1^\zeta)$$
$$= e_1(\phi_1(h_0), \hat{g}_1^\gamma)^\zeta$$
$$= e_1(h_1, \hat{g}_1')^\zeta$$
$$= e_0(h_0, \hat{g}_0')^\zeta$$
$$= z$$

(Step S432: Message Generation Process)

The message generation unit 352 generates the message m' using the conversion information z' generated in step S431 and the cipher element $c_T$ included in the ciphertext $ct_{ID'}$ acquired in step S412, as indicated in formula 127.

[Formula 127]

$$m' := c_T \cdot (z')^{-1}$$

(Step S44: Message Output Process)

The message output unit 36 outputs the message m' calculated in step S43, via the input/output interface 33.

(Step S45: Distinguished Symbol Output Process)

The message output unit 36 outputs the distinguished symbol ⊥ which indicates that decryption failed, via the input/output interface 33.
That is, the decryption device 30 executes the Dec algorithm indicated in formula 128 to decrypt the ciphertext $ct_{ID'}$ by the decryption key $SK_{ID}$.

[Formula 128]

$$\mathrm{Dec}(\mathrm{pk}, \mathrm{sk}_{ID}, \mathrm{ct}_{ID'}):$$

$$\mathrm{if}\ ID = ID',$$

$$z' := e_1(h_1, c),\ m' := c_T \cdot (z')^{-1},$$

$$\mathrm{return}\ m',$$

$$\mathrm{otherwise,\ return}\ \perp.$$

*** Effect of Embodiment 1 ***

As described above, the cryptographic system 1 according to Embodiment 1 implements the IBE scheme using IPG. IPG is formed of a plurality of groups associated with each other. Therefore, it is possible to provide security from the problem hardness that is based on mapping used for associating the plurality of groups. More specifically, in IPG, the group $G_0$ and each group $G_T$ for t = 1, ..., d are associated with each other by isogeny $\phi_t$, and the group $G^\wedge_0$ and each group $G^\wedge_t$ for t = 1, ..., d are associated with each other by isogeny $\phi_t$. Therefore, it is possible to provide security from the isogeny problem hardness.

The cryptographic system 1 according to Embodiment 1 generates the ciphertext $\mathrm{ct}_{ID'}$ using the element X which is a generation element converted by the key generation random $\gamma$. More specifically, the cryptographic system 1 generates the cipher element $c_T$ which is an element of the ciphertext $\mathrm{ct}_{ID'}$, using $e_0(h_0, g^\wedge_0')$ which is the element X. Note that $e_0(h_0, g^\wedge_0')$ which is the element X is generated by converting the generator $(g^\wedge_0)$ of the group $G_T$ by the key generation random $\gamma$. Therefore, it is possible to provide security from pairing problem hardness.

*** Other Configurations ***

<Modification 1>

In Embodiment 1, the functions of the individual units of each of the key generation device 10, encryption device 20, and decryption device 30 are implemented by software. In Modification 1, functions of individual units of each of a key generation device 10, encryption device 20, and decryption device 30 may be implemented by hardware. Modification 1 will now be described regarding its differences from Embodiment 1.

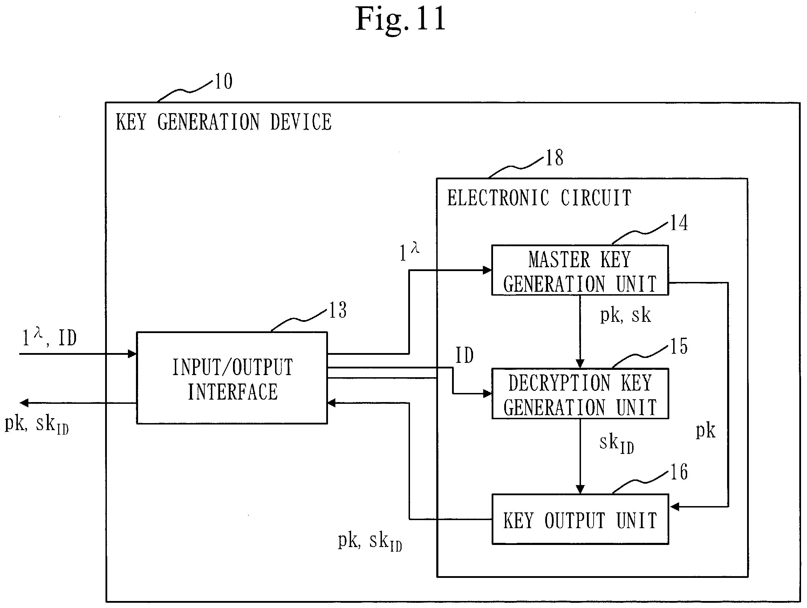

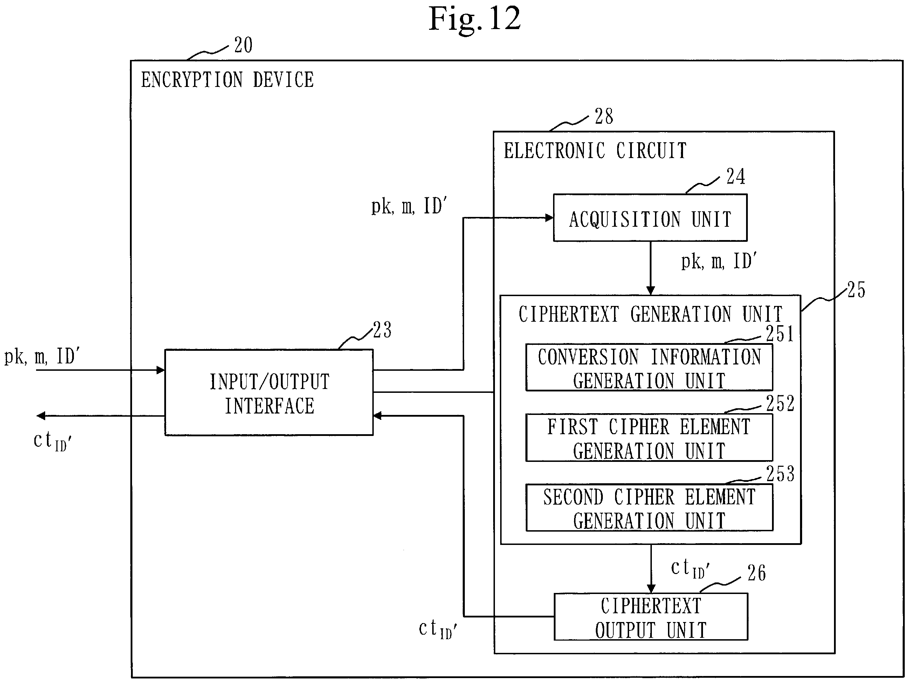

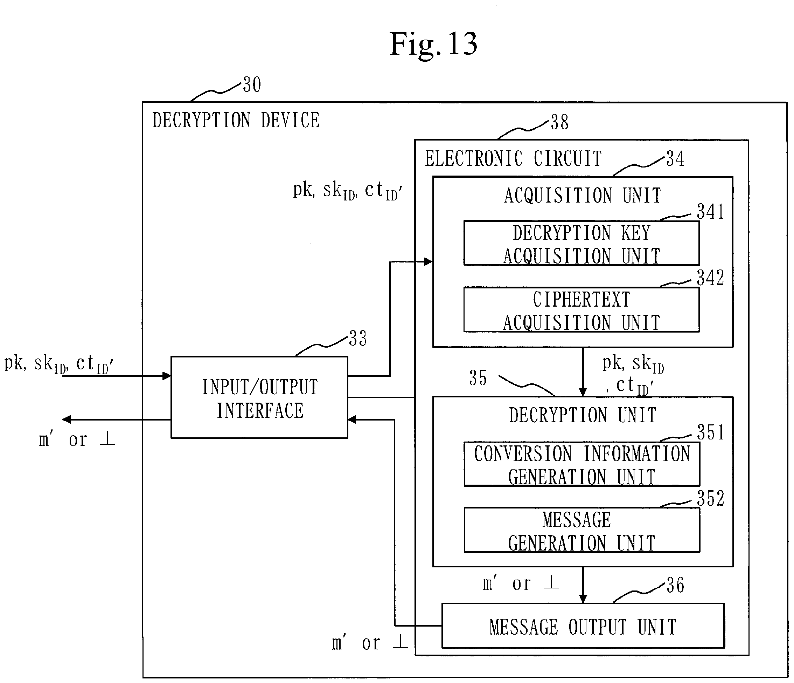

Configurations of the key generation device 10, encryption device 20, and decryption device 30 according to Modification 1 will be described referring to Figs. 11 to 13.

In cases where the functions of the individual units are implemented by hardware, the key generation device 10, encryption device 20, and decryption device 30 are respectively provided with electronic circuits 18, 28, and 38 in place of the respective processors 11, 21, and 31 and the respective storage devices 12, 22, and 32. The electronic circuits 18, 28, and 38 are dedicated circuits that implement functions of the individual units of the key generation device 10, encryption device 20, and decryption device 30, respectively, and functions of the storage devices 12, 22, and 32, respectively.

It is assumed that each of the electronic circuits 18, 28, and 38 is a single circuit, a composite circuit, a programmed processor, a parallel-programmed processor, a logic IC, a gate array (GA), an application specific integrated circuit (ASIC), or a field-programmable gate array (FPGA).

The key generation device 10, encryption device 20, and decryption device 30 may be each provided with a plurality of electronic circuits that replace the electronic circuits 18, 28, and 38, respectively. These plurality of electronic circuits implement together the functions of the individual units. Each electronic circuit is a dedicated circuit, as each of the electronic circuits 18, 28, and 38 is.

<Modification 2>

In Modification 2, some functions may be implemented by hardware, and the other functions may be implemented by software. That is, of the functions of each of the key generation device 10, encryption device 20, and decryption device 30, some may be implemented by hardware, and the other may be implemented by software.

The processors 11, 21, 31, the storage devices 12, 22, 32, and the electronic circuits 18, 28, and 38 are called processing circuitry. That is, the functions of the individual units are implemented by the processing circuitry.

Embodiment 2.

In Embodiment 2, high-security basic IBE scheme will be described.

In Embodiment 2, description on matters that are identical with their counterparts of Embodiment 1 will be omitted, and differences from Embodiment 1 will be described.

*** Key Technique ***

A key technique known in the IBE scheme according to Embodiment 2 will be described.

In IBE which is conventionally implemented using pairing, a secret key and a ciphertext are encoded on only one pair of paring groups $G$ and $G^\wedge$. In contrast to this, in IBE according to Embodiment 2, different groups $G_{ID}$ and $G^\wedge_{ID}$ are made to correspond to different IDs. These groups $G_{ID}$ and $G^\wedge_{ID}$ will be called ID groups.

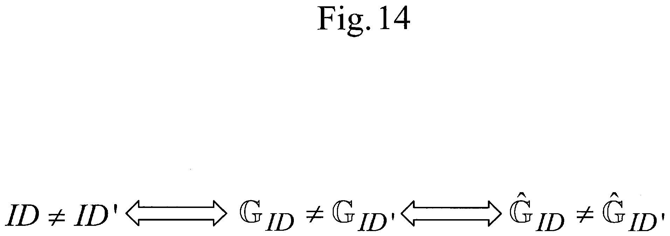

Hence, a relation illustrated in Fig. 14 holds. In Fig. 14, an arrow signifies "if and only if". That is, $G_{ID} \neq G_{ID'}$ holds if and only if $ID \neq ID'$. Also, $G^\wedge_{ID} \neq G^\wedge_{ID'}$ holds if and only if $G_{ID} \neq G_{ID'}$.

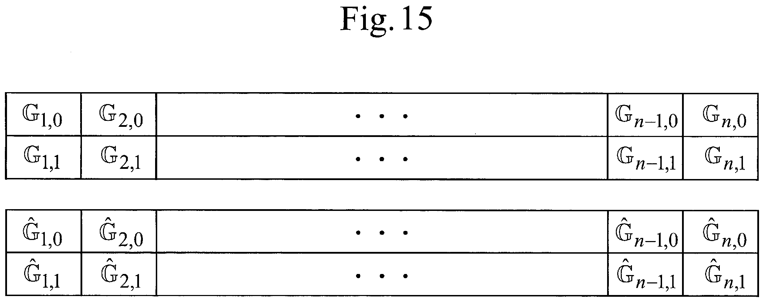

This will be described more specifically referring to Figs. 15 to 18. In the following description, when IDj is expressed as a subscript, this IDj signifies $ID_j$. When ID'j is expressed as a subscript, this ID'j signifies $ID'_j$.

As illustrated in Fig. 15, with Setup algorithm, groups $G_{j,\iota}$ and groups $G^\wedge_{j,\iota}$ for each integer $j$ of $j$ = 1..., n and for each integer $\iota$ of $\iota$ = 0, 1 are generated as groups $G_t$. Namely, $2n$ of groups $G_{j,\iota}$ and $2n$ of groups $G^\wedge_{j,\iota}$ are generated.

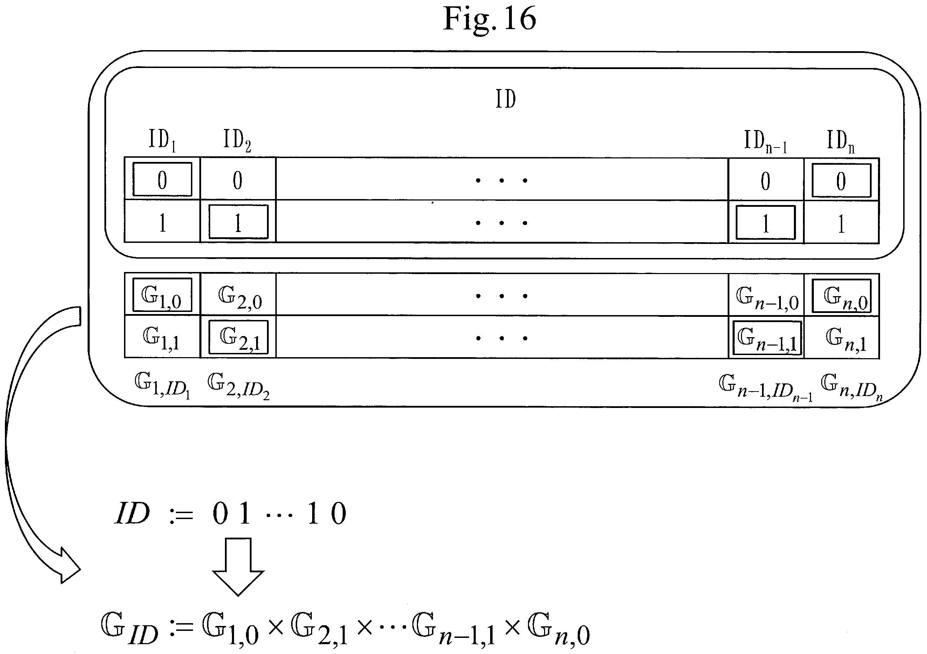

As illustrated in Fig. 16, with KeyGen algorithm, ID which is a set of $ID_j$ for each integer $j$ of $j$ = 1, ..., n is inputted. Note that $ID_j$ is 0 or 1. A group $G_{j,IDj}$ is assigned to $ID_j$ for each integer $j$ of $j$ = 1, ..., n. A direct product of the group $G_{j,IDj}$ assigned to $ID_j$ for each integer $j$ of $j$ = 1, ..., n is the ID group $G_{ID}$. Namely, when ID = 01...10, ID group $G_{ID} := G_{1,0} \times G_{2,1} \times ...x\ G_{n-1,1} \times G_{n,0}$ holds.

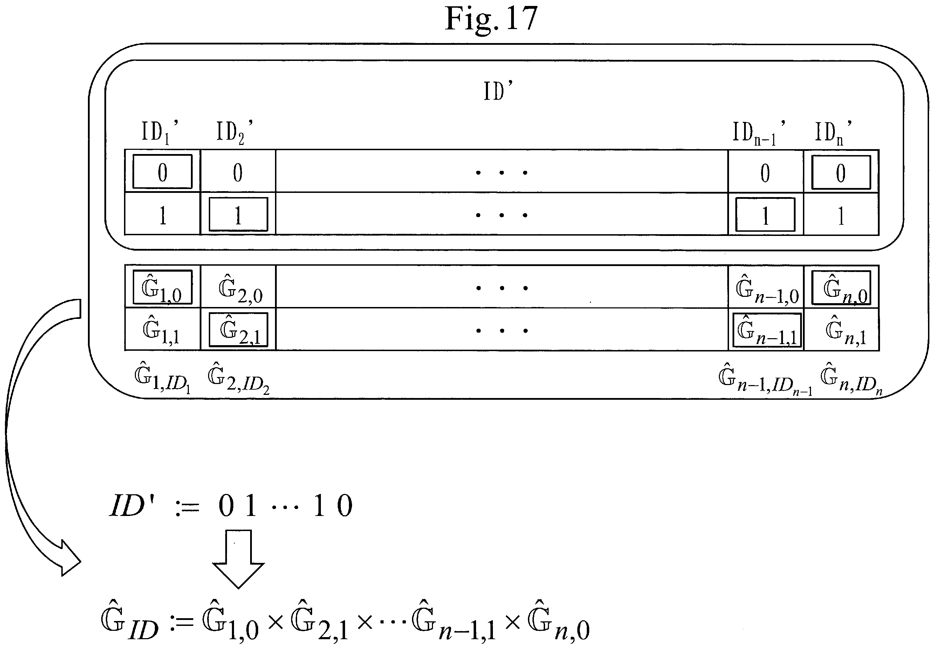

As illustrated in Fig. 17, with Enc algorithm, ID' which is a set of $ID'_j$ for each integer $j$ of $j$ = 1, ..., n is inputted. Note that $ID'_j$ is 0 or 1. A group $G^\wedge_{j,ID'j}$ is assigned to $ID'_j$ for each integer $j$ of $j$ = 1, ..., n. A direct product of the group $G^\wedge_{j,ID'j}$ assigned to $ID'_j$, for each integer $j$ of $j$ = 1, ..., n, is an ID group $G^\wedge_{ID'}$. Namely, when ID' = 01...10, ID group $G^\wedge_{ID'} := G^\wedge_{1,0} \times G^\wedge_{2,1} \times ...\times G^\wedge_{n-1,1} \times G^\wedge_{n,0}$ holds.

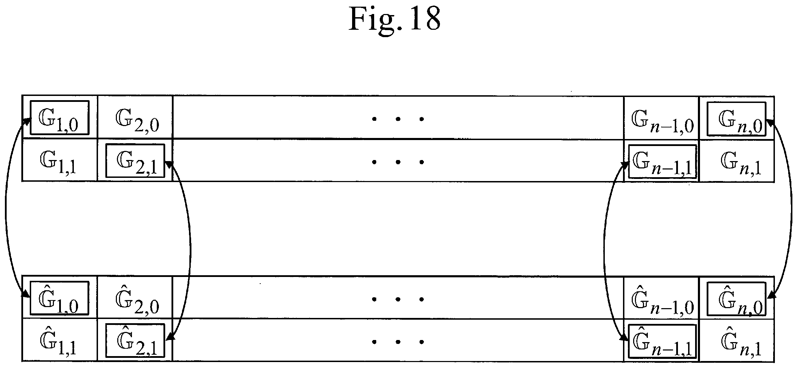

As illustrated in Fig. 18, with Dec algorithm, a direct product by pairing operation of an element of the group $G_{j,IDj}$ assigned to $ID_j$ and an element of the group $G^\wedge_{j,ID'j}$ assigned to $ID'_j$, for each integer $j$ of $j$ = 1, ..., n, is calculated. At this time, if ID = ID', the group $G_{j,IDj}$ and the group $G^\wedge_{j,ID'j}$ for each integer $j$ of $j$ = 1, ..., n correspond to each other. Hence, calculation results of pairing operation for each integer $j$ of $j$ = 1, ..., n constitute elements of a group $G_T$. If ID $\neq$ ID', the group $G_{j,IDj}$ and the group $G^\wedge_{j,ID'j}$ for at least one or more integers $j$ of $j$ = 1, ..., n do not correspond to each other. Accordingly, calculation results of pairing operation for at least one or more integers $j$ of $j$ = 1, ..., n do not constitute elements of the group $G_T$. Correct decryption cannot be achieved unless calculation results of pairing operation constitute elements of the group $G_T$ for one or more integers $j$ as well.

*** Description of Configuration ***

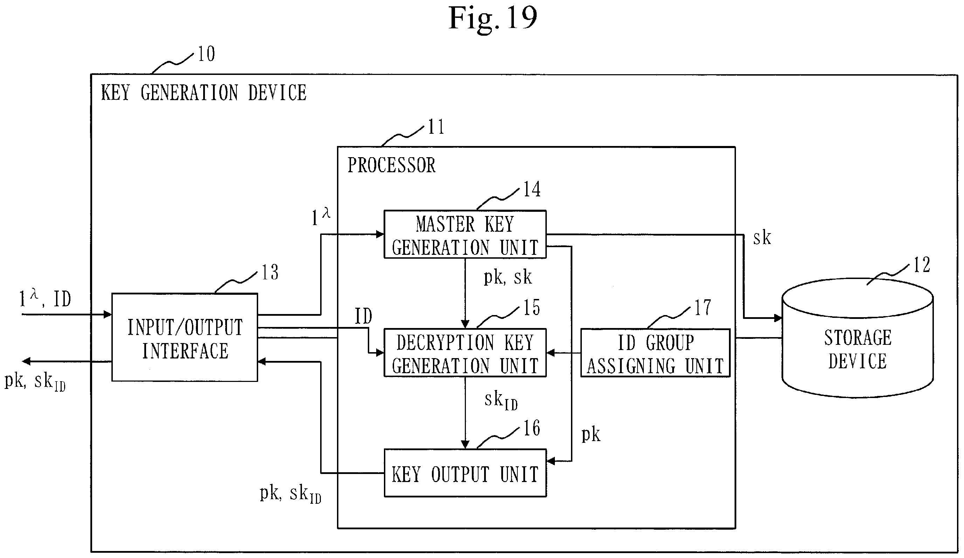

A configuration of a key generation device 10 according to Embodiment 2 will be described referring to Fig. 19.

The key generation device 10 is different from the key generation device 10 illustrated in Fig. 3 in that it is provided with an ID group assigning unit 17 as a function configuration element. The ID group assigning unit 17 is implemented by software or hardware as the other function configuration elements are.

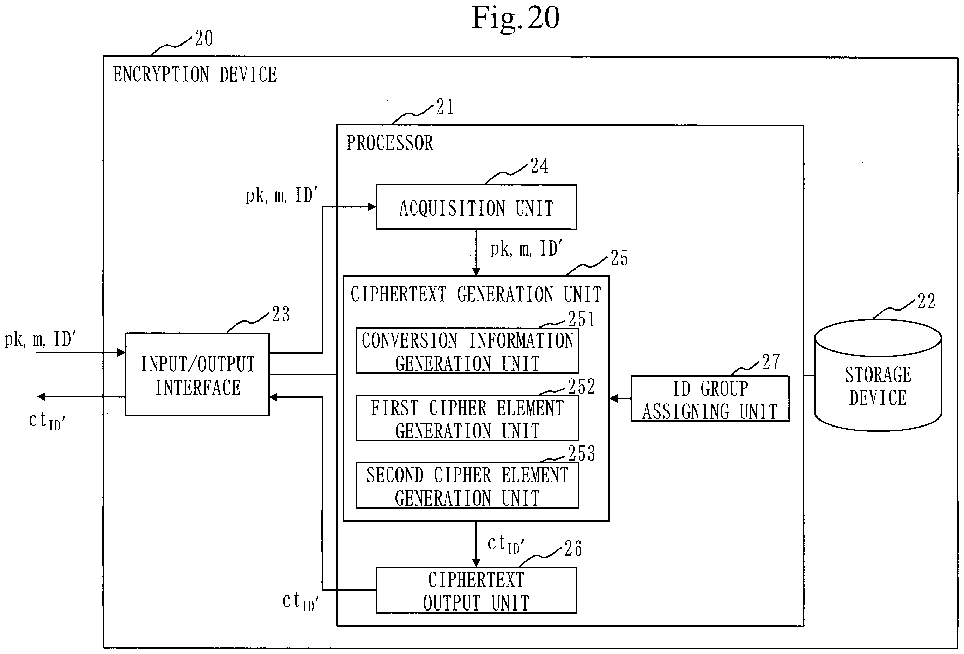

A configuration of an encryption device 20 according to Embodiment 2 will be described referring to Fig. 20.

The encryption device 20 is different from the encryption device 20 illustrated in Fig. 4 in that it is provided with an ID group assigning unit 27 as a function configuration element. The ID group assigning unit 27 is implemented by software or hardware as the other function configuration elements are.

*** Description of Operation ***

An operation of a cryptographic system 1 according to Embodiment 2 will be described referring to Fig. 5, Fig. 10, and Figs. 19 to 23. Operations of Embodiment 2 are equivalent to processes of methods and programs, as with Embodiment 1.

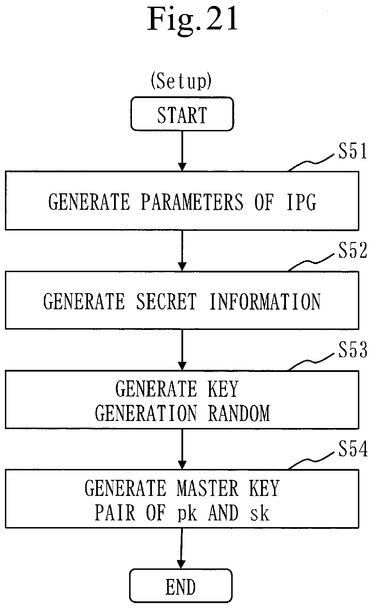

Setup algorithm according to Embodiment 2 will be described referring to Figs. 19 and 21.

(Step S51: IPG Generation Process)

A master key generation unit 14 receives as input a security parameter $1^\lambda$ and a value n which is a bit number of the ID via an input/output interface 13. The master key generation unit 14 takes as input the received security parameter $1^\lambda$ and d = 2n and executes IPG generation algorithm $Gen^{IPG}$ $(1^\lambda, d)$ to generate a master key pair of public parameters $pk^{IPG}$ and a master secret key $msk^{IPG}$ indicated in formula 129.

[Formula 129]

$$(pk^{IPG} := ((\mathbb{G}_0, \hat{\mathbb{G}}_0, g_0, \hat{g}_0, e_0),$$

$$(\mathbb{G}_{j,\iota}, \hat{\mathbb{G}}_{j,\iota}, g_{j,\iota}, \hat{g}_{j,\iota}, e_{j,\iota})_{j\in[n], \iota\in[0,1]},$$

$$\mathbb{G}_T),$$

$$msk^{IPG} := (\phi_{j,\iota}))_{j\in[n], \iota\in[0,1]})$$

$$\xleftarrow{\quad R \quad} Gen^{IPG}(1^\lambda, 2n)$$

(Step S52: Secret Information Generation Process)

The master key generation unit 14 generates secret information $s_0$ which is a uniform random.
The master key generation unit 14 generates an element $h_T$ by setting the secret information $s_0$ to an element $g_T$ of the group $G_T$, as indicated in formula 130.

[Formula 130]

$$h_T := g_T^{s_0}$$

(Step S53: Key Generation Random Generation Process)

The master key generation unit 14 generates a key generation random $\tau_{j,\iota}$ which is a uniform random, for each integer j of j = 1, ..., n and each integer $\iota$ of $\iota$ = 0, 1.

The master key generation unit 14 generates an element $\hat{h}_{j,\iota}$ for each integer j of j = 1, ..., n and each integer $\iota$ of $\iota$ = 0, 1 by setting the key generation random $\tau_{j,\iota}$ to an element $\hat{g}_{j,\iota}$ of the group $\hat{G}_{j,\iota}$, as indicated in Formula 131.

[Formula 131]

$$\hat{h}_{j,\iota} := \hat{g}_{j,\iota}^{\tau_{j,\iota}}$$

The master key generation unit 14 also generates an element $h_{j,\iota}$ for each integer j of j = 1, ..., n and each integer $\iota$ of $\iota$ = 0, 1 by setting a reciprocal $1/\tau_{j,\iota}$ of the key generation random $\tau_{j,\iota}$ to an element $g_{j,\iota}$ of the group $G_{j,\iota}$,

as indicated in Formula 132.

[Formula 132]

$$h_{j,\iota} := g_{j,\iota}^{1/\tau_{j,\iota}}$$

(Step S54: Master Key Generation Process)

Using the public parameters $pk^{IPG}$ generated in step S51, the element $h_T$ generated in step S52, and the element $h^{\wedge}_{j,\iota}$ generated in step S53, the master key generation unit 14 generates public parameters $pk := ((G_{j,\iota}, G^{\wedge}_{j,\iota}, h^{\wedge}_{j,\iota}, e_{j,\iota})_{j\in[n],\iota\in[0,1]}, G_T, h_T)$. A key output unit 16 outputs the public parameters pk to an encryption device 20 and a decryption device 30 by outputting the public parameters pk to an external public server or the like via the input/output interface 13.

Using the secret information $s_0$ generated in step S52 and the element $h_{j,\iota}$ generated in step S53, the master key generation unit 14 generates a master secret key $msk := (s_0, (h_{j,\iota})_{j\in[n],\iota\in[0,1]})$. The master key generation unit 14 writes the generated master secret key msk to a storage device 12.

That is, the master key generation unit 14 generates the master key pair by executing the Setup algorithm indicated in formula 133.

[Formula 133]

$$\text{Setup}(1^\lambda, n):$$

$$(pk^{IPG} := ((\mathbb{G}_0, \hat{\mathbb{G}}_0, g_0, \hat{g}_0, e_0),$$

$$(\mathbb{G}_{j,\iota}, \hat{\mathbb{G}}_{j,\iota}, g_{j,\iota}, \hat{g}_{j,\iota}, e_{j,\iota})_{j\in[n],\iota\in[0,1]},$$

$$\mathbb{G}_T),$$

$$msk^{IPG} := (\phi_{j,\iota}))_{j\in[n],\iota\in[0,1]})$$

$$\xleftarrow{R} \text{Gen}^{IPG}(1^\lambda, 2n),$$

$$s_0 \xleftarrow{U} \mathbb{F}_q, \quad h_T := g_T^{s_0},$$

$$\tau_{j,\iota} \xleftarrow{U} \mathbb{F}_q, \quad \hat{h}_{j,\iota} := \hat{g}_{j,\iota}^{\tau_{j,\iota}}, \quad h_{j,\iota} := g_{j,\iota}^{1/\tau_{j,\iota}} \text{ for all } j, \iota,$$

$$\text{return } pk := ((\mathbb{G}_{j,\iota}, \hat{\mathbb{G}}_{j,\iota}, \hat{h}_{j,\iota}, e_{j,\iota})_{j\in[n],\iota\in[0,1]}, \mathbb{G}_T, h_T),$$

$$msk := (s_0, (h_{j,\iota})_{j\in[n],\iota\in[0,1]}).$$

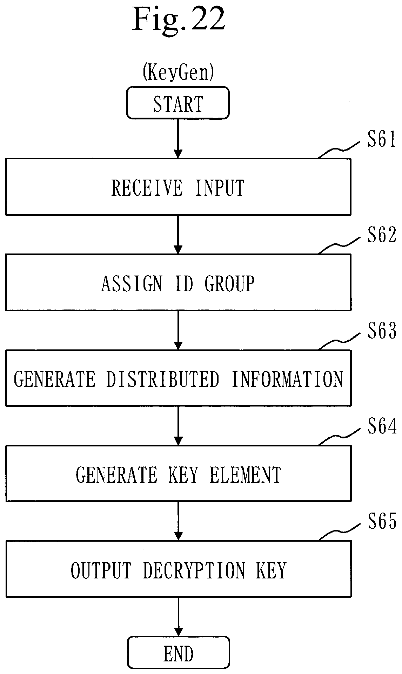

KeyGen algorithm according to Embodiment 2 will be described referring to Figs. 19 and 22.

(S61: ID Receipt Process)

A decryption key generation unit 15 receives as input the identity ID of a user who uses a decryption key $sk_{ID}$, via the input/output interface 13. The identity ID is inputted by, for example, a user of the key generation device 10, via an input device.

As described above, identity ID := $(ID_j)_{j=1,...,n}$. Each $ID_j$ is 0 or 1.

(Step S62: ID Group Assigning Process)

The ID group assigning unit 17 assigns $ID_j$ for each integer j of j = 1, ..., n to different groups out of the groups $G_{j,\iota}$ which are the group $G_t$. More specifically, the ID group assigning unit 17 assigns $ID_j$ for each integer j of j = 1, ..., n to the groups $G_{j,ID_j}$. Then, the ID group assigning unit 17 takes a direct product of the groups $G_{j,ID_j}$ for each integer j of j = 1, ..., n as an ID group $G_{ID}$. Namely, the ID group assigning unit 17 generates the ID group $G_{ID}$, as indicated in formula 134.

[Formula 134]

$$\mathbb{G}_{ID} := \mathbb{G}_{1,ID_1} \times \cdots \times \mathbb{G}_{n,ID_n}$$

Out of the elements $h_{j,\iota}$ included in the master secret key msk, the ID group assigning unit 17 generates, as an element $h_{ID}$, a set of those elements $h_{j,\iota}$ that are included in the ID group $G_{ID}$. More specifically, the ID group assigning unit 17 generates the element $h_{ID}$, as indicated in formula 135.

[Formula 135]

$$h_{ID} := (h_{j,ID_j}) \in \mathbb{G}_{ID}$$

(Step S63: Distributed Information Generation Process)

The decryption key generation unit 15 generates distributed information $s^{\rightarrow}$ randomly, as indicated in formula 136. The distributed information $s^{\rightarrow}$ is information in which the secret information $s_0$ is distributed.

[Formula 136]

$$\vec{s} := (s_j)_{j \in [n]} \in \mathbb{F}_q^n \text{ such that } s_0 = \sum_{j=1}^{n} s_j$$

(Step 64: Key Element Generation Process)

The decryption key generation unit 15 generates a key element k by setting the distributed information $s^{\rightarrow}$ generated in step S63 to the element $h_{ID}$ generated in step S62, as indicated in Formula 137.

[Formula 137]

$$k := h_{ID}^{\vec{s}}$$

(Step S65: Key Output Process)

The key output unit 16 outputs the decryption key $sk_{ID}$ including the identity ID received in step S61 and the key element k generated in step S64 to the decryption device 30 via the input/output interface 13.

That is, the decryption key generation unit 15 generates the decryption key $sk_{ID}$ by executing the KeyGen algorithm indicated in formula 138.

[Formula 138]

$$\text{KeyGen}(\text{pk}, \text{sk}, ID := (ID_j)):$$

$$/* \text{ ID-group setup } */$$

$$\mathbb{G}_{ID} := \mathbb{G}_{1,ID_1} \times \cdots \times \mathbb{G}_{n,ID_n},$$

$$h_{ID} := (h_{j,ID_j}) \in \mathbb{G}_{ID},$$

$$/* \text{ Group element encoding } */$$

$$\text{choose random } \vec{s} := (s_j)_{j \in [n]} \in \mathbb{F}_q^n \text{ such that } s_0 = \sum\nolimits_{j=1}^{n} s_j,$$

$$k := h_{ID}^{\vec{s}},$$

$$\text{return } sk_{ID} := (ID, k).$$

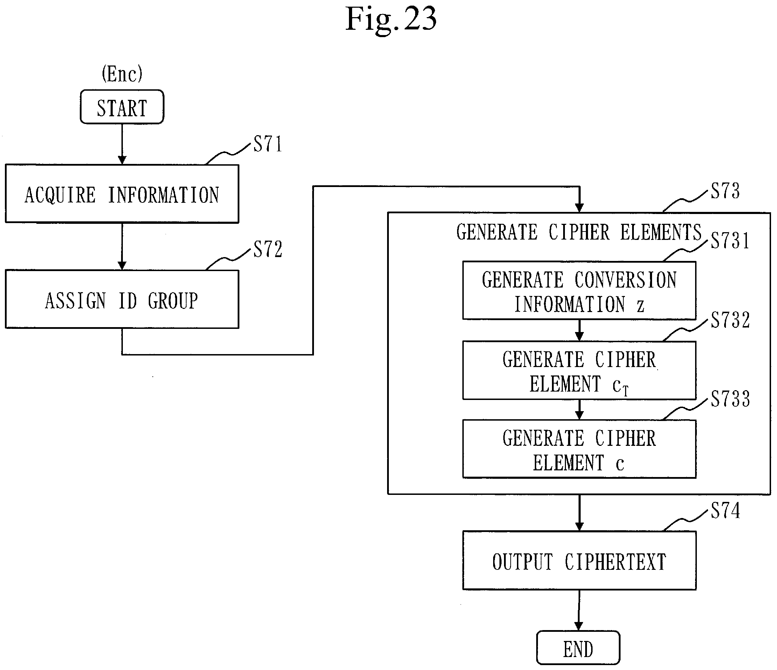

Enc algorithm according to Embodiment 2 will be described referring to Figs. 20 and 23.

(Step S71: Acquisition Process)

An acquisition unit 24 acquires, via an input/output interface 23, the public parameters pk generated by the key generation device 10. The acquisition unit 24 also receives as input a message m being an encryption target and the identity ID' being a decryption condition. The message m and the identity ID' are inputted by, for example, a user of the encryption device 20 via the input device.

As described above, identity ID' := $(ID'_j)_{j=1,...,n}$. Each $ID'_j$ is 0 or 1.

(Step S72: ID Group Assigning Process)

The ID group assigning unit 27 assigns $ID'_j$ for each integer j of j = 1, ..., n to different groups out of groups $G^{\wedge}_{j,\iota}$ which are a group $G^{\wedge}_t$. More specifically, the ID group assigning unit 17 assigns $ID'_j$ for each integer j of j = 1, ..., n to groups $G^{\wedge}_{j,ID'j}$. Then, the ID group assigning unit 17 takes a direct product of the groups $G^{\wedge}_{j,ID'j}$ for each integer j of j = 1, ..., n as an ID group $G^{\wedge}_{ID}$. Namely, the ID group assigning unit 17 generates the ID group $G^{\wedge}_{ID}$, as indicated in formula 139.

[Formula 139]

$$\hat{\mathbb{G}}_{ID} := \hat{\mathbb{G}}_{1,ID_1'} \times \cdots \times \hat{\mathbb{G}}_{n,ID_n'}$$

Out of the elements $h^\wedge_{j,\iota}$ included in the public parameters pk, the ID group assigning unit 17 generates, as an element $h^\wedge_{ID}$, a set of those elements $h^\wedge_{j,\iota}$ that are included in the ID group $G^\wedge_{ID}$. More specifically, the ID group assigning unit 17 generates the element $h^\wedge_{ID}$, as indicated in formula 140.

[Formula 140]

$$\hat{h}_{ID} := (\hat{h}_{j,ID_j'}) \in \hat{\mathbb{G}}_{ID}$$

(Step S73: Ciphertext Generation Process)

A ciphertext generation unit 25 generates elements of a ciphertext $ct_{ID'}$ using the public parameters pk acquired in step S71 and the element $h^\wedge_{ID}$ generated in step S72. The ciphertext generation unit 25 generates the elements of the ciphertext $ct_{ID'}$ using a generation element of an element X of the group $G_T$ and a generation element of an element $Y^\wedge$ of a group $G^\wedge_t$. The element X refers to the element $h_T$ included in the public parameters pk. The element $Y^\wedge$ refers to the element $h^\wedge_{ID}$ generated in step S72.
The ciphertext generation process includes processes of step S731 to step S733.

(Step S731: Conversion Information Generation Process)

A conversion information generation unit 251 generates an encryption random $\zeta$ which is a uniform random.
Using the element $h_T$ and the encryption random $\zeta$, the conversion information generation 251 generates conversion information z, as indicated in formula 141.

[Formula 141]

$$z := h_T^\zeta$$

(Step S732: First Cipher Element Generation Process)

A first cipher element generation unit 252 generates a cipher element $c_T$ which is an element of the ciphertext $ct_{ID'}$ by setting the message m to the conversion information z generated in step S731, as indicated in formula 142.

[Formula 142]

$$c_T := z \cdot m$$

(Step S733: Second Cipher Element Generation Process)

A second cipher element generation unit 253 generates a cipher element c which is an element of the ciphertext $ct_{ID'}$ by setting the encryption random $\zeta$ to the element $h^\wedge_{ID}$ which is the element $Y^\wedge$, as indicated in formula 143.

[Formula 143]

$$c := \hat{h}_{ID}^{\zeta}$$

(Step S74: Ciphertext Output Process)

A ciphertext output unit 26 outputs the ciphertext $ct_{ID'}$ having, as cipher elements, the identity ID' received in step S71 and the cipher elements $c_T$ and c generated in step S73, to the decryption device 30 via the input/output interface 23.

That is, the encryption device 20 generates the ciphertext $ct_{ID'}$ by executing the Enc algorithm indicated in formula 144.

[Formula 144]

$$\text{Enc}(pk, m, ID' := (ID'_j)):$$

$$/* \text{ ID-group setup } */$$

$$\hat{\mathbb{G}}_{ID} := \hat{\mathbb{G}}_{1,ID'_1} \times \cdots \times \hat{\mathbb{G}}_{n,ID'_n},$$

$$\hat{h}_{ID} := (\hat{h}_{j,ID'_j}) \in \hat{\mathbb{G}}_{ID},$$

$$/* \text{ Group element encoding } */$$

$$\zeta \xleftarrow{\text{U}} \mathbb{F}_q, \quad c := \hat{h}_{ID}^{\zeta}, \quad z := h_T^{\zeta}, \quad c_T := z \cdot m,$$

$$\text{return } ct_{ID} := (ID', c, c_T).$$

Dec algorithm according to Embodiment 2 will be described referring to Figs. 5 and 10.

Processes of step S41 and step S42 and processes of step S44 and step S45 are the same as those in Embodiment 1.

Note that the decryption key $sk_{ID}$ includes the key element k in which the distributed information $s^{\rightarrow}$ is set to the element $h_{ID}$. Note that the element $h_{ID}$ is generated using the element $h_{j,\iota}$. In the element $h_{j,\iota}$, the reciprocal $1/\tau_{j,\iota}$ of the key generation random $\tau_{j,\iota}$ is set to the element $g_{j,\iota}$ of the group $G_{j,\iota}$. Therefore, the decryption key $sk_{ID}$ includes the key element k which is an element of the group $G_t$ (= group $G_{j,\iota}$) converted by the key generation random $\tau_{j,\iota}$.

The ciphertext $ct_{ID'}$ includes the cipher element $c_T$ and the cipher element c. In the cipher element $c_T$, the message m is set to the conversion information z in which the encryption random $\zeta$ is set to the element X which is the generator $h_T$ of the group $G_T$. In the cipher element c, the encryption random $\zeta$ is set to the element $h^{\wedge}_{ID}$ which is the element $Y^{\wedge}$ being converted from a generator $g^{\wedge}_{j,\iota}$ of the group $G^{\wedge}_t$ by the key generation random $\tau_{j,\iota}$.

(Step S43: Decryption Process)

A decryption unit 35 generates a message m' by decrypting the ciphertext $ct_{ID'}$ by the decryption key $sk_{ID}$ received in step S41.

The decryption process includes processes of step S431 and step S432.

(Step S431: Conversion Information Generation Process)

A conversion information generation unit 351 generates conversion information z' using the element k included in the decryption key $sk_{ID}$ and the cipher element c included in the ciphertext $ct_{ID'}$, as indicated in formula 145.

[Formula 145]

$$z' := e_1(k, c)$$

Since formula 146 holds, if the decryption key $sk_{ID}$ can decrypt the ciphertext $ct_{ID'}$, then the conversion information z' and the conversion information z are identical.

[Formula 146]

$$e_1(k, c)$$
$$= \prod_{j \in [n]} e_{j, ID_j}(h^{s_j}_{j, ID_j}, \hat{h}^{\zeta}_{j, ID'_j})$$
$$= \prod_{j \in [n]} e_{j, ID_j}(g^{s_j/\tau_{j, ID_j}}_{j, ID_j}, \hat{g}^{\zeta \cdot \tau_{j, ID_j}}_{j, ID'_j})$$
$$= \prod_{j \in [n]} g_T^{s_j \cdot \zeta}$$
$$= g_T^{\sum_{j \in [n]} s_j \cdot \zeta}$$
$$= g_T^{s_0 \cdot \zeta}$$
$$= h_T^{\zeta}$$
$$= z$$

(Step S432: Message Generation Process)

A message generation unit 352 generates the message m' using the conversion information z' generated in step S431 and the cipher element $c_T$ included in the ciphertext $ct_{ID'}$, as indicated in formula 147.

[Formula 147]

$$m' := c_T \cdot (z')^{-1}$$

That is, the decryption device 30 executes the Dec algorithm indicated in formula 148 to decrypt the ciphertext $ct_{ID'}$ by the decryption key $sk_{ID}$.

[Formula 148]

$$\mathrm{Dec}(\mathrm{pk}, \mathrm{sk}_{ID}, \mathrm{ct}_{ID'}):$$

$$\text{if } ID = ID',$$

$$z' := e_1(k, c), \ m' := c_T \cdot (z')^{-1},$$

$$\text{return } m',$$

$$\text{otherwise, return } \perp.$$

*** Effect of Embodiment 2 ***

As described above, the cryptographic system 1 according to Embodiment 2 implements the IBE scheme using IPG, as the cryptographic system 1 according to Embodiment 1 does. Therefore, it is possible to provide security from the isogeny problem hardness.

The cryptographic system 1 according to Embodiment 2 generates the ciphertext $ct_{ID'}$ using the element $Y^\wedge$ which is a generation element converted by the key generation random $\tau_{j,1}$. Therefore, it is possible to provide security from the pairing problem hardness.

The cryptographic system 1 according to Embodiment 2 uses the ID groups $G_{ID}$ and $G^\wedge_{ID}$. Accordingly, in cases where the identity ID and the identity ID' do not coincide, the group $G_{ID}$ and the group $G^\wedge_{ID}$ do not coincide. As a result, decryption can be disabled.

In the cryptographic system 1 according to Embodiment 2, KeyGen algorithm, Enc algorithm, and Dec algorithm do not use isogeny $\phi_t$. Consequently, KeyGen algorithm, Enc algorithm, and Dec algorithm need not use a hash function H.

KeyGen algorithm, Enc algorithm, and Dec algorithm do not use isogeny $\phi_t$. Accordingly, in step S51 of Fig. 21, Gen$^{IPG}$ algorithm need not output isogeny $\phi_t$.

Embodiment 3.

In Embodiment 3, an ABE scheme with a small set of attributes will be described.

In Embodiment 3, description on matters that are identical with their counterparts of Embodiment 2 will be omitted, and differences from Embodiment 2 will be described.

In Embodiment 3, description will be made on a key-policy-type ABE (to be referred to as KP-ABE hereinafter) scheme according to which a policy being a decryption condition is set in a decryption key. The KP-ABE scheme can be converted by a method such as Naor conversion to a ciphertext-policy-type ABE (to be referred to CP-ABE hereinafter) scheme according to which a policy is set in a ciphertext.

*** Description of Configuration ***

The KP-ABE scheme comprises Setup algorithm, KeyGen algorithm, Enc algorithm, and Dec algorithm.

Setup algorithm takes as input a security parameter $1^\lambda$ and outputs public parameters pk and a master secret key msk.

KeyGen algorithm takes as input the public parameters pk, the master secret key msk, and an access structure S := (M, ρ), and outputs a decryption key $sk_S$ corresponding to an input tag *tag* and the access structure S.

Enc algorithm takes as input the public parameters pk, a message m in a message space msg, and a set of attributes, Γ, and outputs a ciphertext $ct_\Gamma$.

Dec algorithm takes as input the public parameters pk, the decryption key $sk_S$ for the access structure S, and the ciphertext $ct_\Gamma$ encrypted under the set of attributes, Γ, and outputs either a message m' ∈ msg or a distinguished symbol ⊥ which indicates that decryption failed.

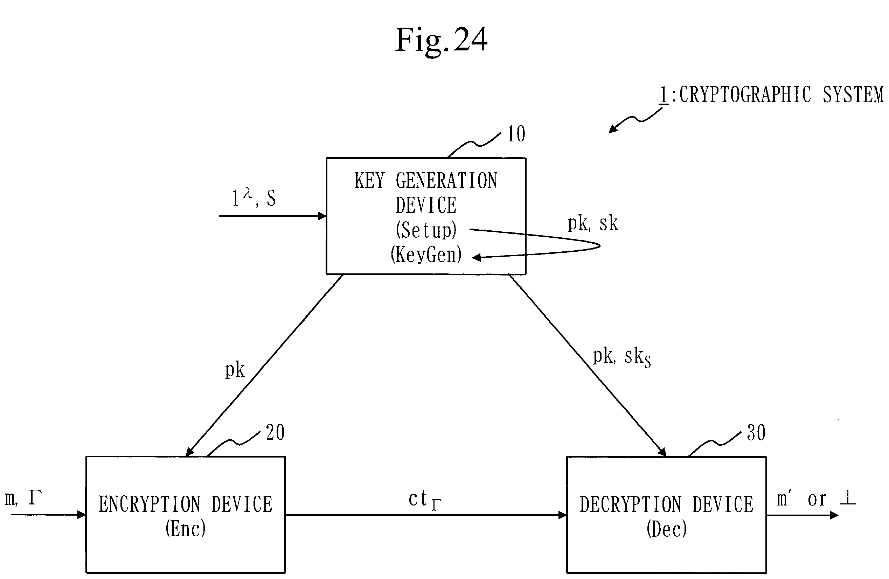

A configuration of a cryptographic system 1 according to Embodiment 3 will be described referring to Fig. 24.

The cryptographic system 1 is provided with a key generation device 10, an encryption device 20, and a decryption device 30. The key generation device 10, the encryption device 20, and the decryption device 30 are connected to each other via a transmission line. A specific example of the transmission line is a local area network (LAN) or the Internet. The key generation device 10, the encryption device 20, and the decryption device 30 can communicate with each other via the transmission line.

The key generation device 10 takes as input a security parameter $1^\lambda$ and executes Setup algorithm to generate public parameters pk and a master secret key msk. The key generation device 10 also takes as input the public parameters pk, the master secret key msk, and an access structure S := (M, ρ) and executes KeyGen algorithm to generate a decryption key $sk_S$.

The key generation device 10 publishes the public parameters pk and outputs the decryption key $sk_S$ to the decryption device 30 corresponding to the access structure S. The key generation device 10 keeps the master secret key msk.

The encryption device 20 takes as input the public parameters pk, a message m, and a set of attributes, Γ, and executes Enc algorithm to generate a ciphertext $ct_\Gamma$. The encryption device 20 outputs the ciphertext $ct_\Gamma$ to the decryption device 30.

The decryption device 30 takes as input the public parameters pk, the decryption key $sk_S$, and the ciphertext $ct_\Gamma$ and executes Dec algorithm to generate a message m' or a distinguished symbol $\perp$ which indicates that decryption failed.

\*\*\* Explanation of Idea \*\*\*

An idea employed in the ABE scheme according to Embodiment 2 will be explained.

A span program will be described. As the span program is an existing idea, it will be explained briefly concerning only on a range necessary in the following description.

A span program over a field $F_q$ is a labeled matrix S := (M, ρ). Note that a matrix M is an (L rows $\times$ r columns) matrix over the field $F_q$. A labeling ρ is a labeling of the rows of the matrix M by an attribute from {(t, v), (t', v'), ...}. Note that every row is labeled by one attribute, that is, ρ : {1, ..., L} → {(t, v), (t', v'), ...}.

The span program accepts or rejects an input by the following criterion. Assume that Γ is a set of attributes, that is, Γ = {(t_j, x_j)}$_{1\le j\le d'}$ (x_j∈U_{tj}). The span program S accepts the set of attributes, Γ, if and only if $1^\rightarrow \in$ span<(Mi)$_{\rho(i)\in\Gamma}$>. Acceptance of the set of attributes, Γ, by the span program S is expressed as R(S, Γ) = 1. That is, the span program S accepts the set of attributes, Γ, if and only if a vector whose elements are all 1 is obtained by linear combination of a row $(M_i)_{\rho(i)\in\Gamma}$ of the matrix M. The span program S will be referred to as access structure.

\*\*\* Description of Operation \*\*\*

An operation of the cryptographic system 1 according to Embodiment 3 will be described referring to Fig. 5, Fig. 10, and Figs. 19 to 23. Operations of Embodiment 3 are equivalent to processes of methods and programs, as with Embodiment 2.

Setup algorithm according to Embodiment 3 will be described referring to Figs. 19 and 21.

(Step S51: IPG Generation Process)

A master key generation unit 14 receives as input the security parameter $1^\lambda$ and a value d which is the maximum number of the attributes, via an input/output interface 13. The master key generation unit 14 takes as input the received security parameter $1^\lambda$ and d and executes IPG generation algorithm $Gen^{IPG}$ ($1^\lambda$, d) to generate a master key pair of public parameters $pk^{IPG}$ and a master secret key $msk^{IPG}$ indicated in formula 149.

[Formula 149]

$$(pk^{IPG} := ((\mathbb{G}_t, \hat{\mathbb{G}}_t, g_t, \hat{g}_t, e_t)_{t\in[0,d]}, \mathbb{G}_T)), \ msk^{IPG} := (\phi_t)_{t\in[d]})$$

$$\xleftarrow{\ \ R\ \ } Gen^{IPG}(1^\lambda, d)$$

(Step S52: Secret Information Generation Process)

The master key generation unit 14 generates secret information $s_0$ which is a uniform random.

The master key generation unit 14 generates an element $h_T$ by setting the secret information $s_0$ to an element $g_T$ of a group $G_T$, as indicated in formula 150.

[Formula 150]

$$h_T := g_T^{s_0}$$

(Step S53: Key Generation Random Generation Process)

The master key generation unit 14 generates a key generation random $\tau_t$ which is a uniform random, for each integer t of $t \in [d]$.

The master key generation unit 14 generates an element $h\hat{}_t$ for each integer t of $t \in [d]$ by setting the key generation random $\tau_t$ to an element $g\hat{}_t$ of a group $G\hat{}_t$, as indicated in Formula 151.

[Formula 151]

$$\hat{h}_t := \hat{g}_t^{\tau_t}$$

The master key generation unit 14 also generates an element $h_t$ for each integer t of $t \in [d]$ by setting a reciprocal $1/\tau_t$ of the key generation random $\tau_t$ to an element $g_t$ of a group $G_t$, as indicated in Formula 152.

[Formula 152]

$$h_t := g_t^{1/\tau_t}$$

(Step S54: Master Key Generation Process)

Using the public parameters $pk^{IPG}$ generated in step S51, the element $h_T$ generated in step S52, and the element $h\hat{}_t$ generated in step S53, the master key generation unit 14 generates the public parameters $pk := ((G_t, G\hat{}_t, h\hat{}_t, e_t)_{t\in[d]}, G_T, h_T)$. A key output unit 16 outputs the public parameters pk to the encryption device 20 and the decryption device 30 by outputting the public parameters pk to an external public server or the like via the input/output interface 13.

Using the secret information $s_0$ generated in step S52 and the element $h_t$ generated in step S53, the master key generation unit 14 generates the master secret key $msk := (s_0, (h_t)_{t\in[d]})$. The master key generation unit 14 writes the generated master secret key msk to a storage device 12.

That is, the master key generation unit 14 generates the master key pair by executing the Setup algorithm indicated in formula 153.

[Formula 153]

$$\text{Setup}(1^{\lambda}, d):$$

$$(\text{pk}^{\text{IPG}} := ((\mathbb{G}_t, \hat{\mathbb{G}}_t, g_t, \hat{g}_t, e_t)_{t \in [0,d]}, \mathbb{G}_T)), \; \text{msk}^{\text{IPG}} := (\phi_t)_{t \in [d]})$$

$$\xleftarrow{\;\;R\;\;} \text{Gen}^{\text{IPG}}(1^{\lambda}, d),$$

$$s_0 \xleftarrow{\;\;U\;\;} \mathbb{F}_q, \; h_T := g_T^{s_0},$$

$$\tau_t \xleftarrow{\;\;U\;\;} \mathbb{F}_q, \; \hat{h}_t := \hat{g}_t^{\tau_t}, \; h_t := g_t^{1/\tau_t} \; \text{for } t \in [d],$$

$$\text{return pk} := ((\mathbb{G}_t, \hat{\mathbb{G}}_t, \hat{h}_t, e_t)_{t \in [d]}, \mathbb{G}_T, h_T),$$

$$\text{msk} := (s_0, (h_t)_{t \in [d]}).$$

KeyGen algorithm according to Embodiment 3 will be described referring to Figs. 19 and 22.

(S61: ID Receipt Process)

A decryption key generation unit 15 receives as input the access structure S := (M, p) of a user who uses a decryption key $sk_S$, via the input/output interface 13. The access structure S is information indicating a range where decryption by the decryption key $sk_S$ is possible.

(Step S62: ID Group Assigning Process)

An ID group assigning unit 17 takes a direct product of the group $G_t$ where t = p(i) for each integer i of i $\in$ [L], as an ID group $G_{ID}$. Out of the elements $h_t$ included in the master secret key msk, the ID group assigning unit 17 generates, as an element $h_{ID}$, a set of those elements $h_t$ that are included in the ID group $G_{ID}$. More specifically, the ID group assigning unit 17 generates the element $h_{ID}$, as indicated in formula 154.

[Formula 154]

$$h_{ID} := (h_t) \in \mathbb{G}_{ID}$$

(Step S63: Distributed Information Generation Process)

The decryption key generation unit 15 generates distributed information $s^{\rightarrow}$, as indicated in formula 155.

[Formula 155]

$$\vec{1} \cdot \vec{u} = s_0,$$

$$s_i := M_i \cdot \vec{u} \text{ for } i \in [L],$$

$$\vec{s} := (s_i)_{i \in [L]}$$

(Step 64: Key Element Generation Process)

The decryption key generation unit 15 generates a key element $k := \{k_i\}$ by setting the distributed information $s^{\rightarrow}$ generated in step S63 to the element $h_{ID}$ generated in step S62, as indicated in Formula 156.

[Formula 156]

$$\text{for } i \in [L]$$

$$t := \rho(i),$$

$$k_i := h_t^{s_i}$$

(Step S65: Key Output Process)

The key output unit 16 outputs the decryption key $sk_S$ including the access structure S received in step S61 and the key element $k := \{k_i\}$ generated in step S64 to the decryption device 30 via the input/output interface 13.

That is, the decryption key generation unit 15 generates the decryption key $sk_S$ by executing the KeyGen algorithm indicated in formula 157.

[Formula 157]

$$\mathrm{KeyGen}(\mathrm{pk}, \mathrm{sk}, \mathbb{S} := (M, \rho)):$$

/* ID-group setup */

$$\mathbb{G}_{ID} := \prod{}_{i \in [L]} \mathbb{G}_{t=\rho(i)},$$

$$h_{ID} := (h_t) \in \mathbb{G}_{ID},$$

/* Group element encoding */

$$\text{choose random } \vec{u} \in \mathbb{F}_q^r \text{ such that } \vec{1} \cdot \vec{u} = s_0,$$

$$\text{for } i \in [L]$$

$$s_i := M_i \cdot \vec{u},$$

$$t := \rho(i), \; k_i := h_t^{s_i}$$

$$\text{return } \mathrm{sk}_{\mathbb{S}} := (\mathbb{S}, k := \{k_i\}_{i \in [L]}).$$

Enc algorithm according to Embodiment 3 will be described referring to Figs. 20 and 23.
A process of step S73 is the same as that of Embodiment 2.

(Step S71: Acquisition Process)

An acquisition unit 24 acquires, via an input/output interface 23, the public parameters pk generated by the key generation device 10. The acquisition unit 24 also receives as input the message m being an encryption target and the set of attributes, $\Gamma$, being a decryption condition.

(Step S72: ID Group Assigning Process)

An ID group assigning unit 27 takes a direct product of the group $G^{\wedge}_t$ for each integer t of $t \in \Gamma$, as $G^{\wedge}_{ID}$. Out of elements $h^{\wedge}_t$ included in the public parameters pk, the ID group assigning unit 17 generates, as an element $h^{\wedge}_{ID}$, a set of those elements $h^{\wedge}_t$ that are included in the ID group $G^{\wedge}_{ID}$. More specifically, the ID group assigning unit 17 generates the element $h^{\wedge}_{ID}$, as indicated in formula 158.

[Formula 158]

$$\hat{h}_{ID} := (\hat{h}_t) \in \hat{\mathbb{G}}_{ID}$$

(Step S74: Ciphertext Output Process)

A ciphertext output unit 26 outputs the ciphertext $ct_\Gamma$ having, as cipher elements, the set of attributes, $\Gamma$, received in step S71 and cipher elements $c_T$ and $c := \{c_t := h^{\wedge}_t \varsigma\}$ generated in step S73, to the decryption device 30 via the input/output interface 23.

That is, the encryption device 20 generates the ciphertext $ct_\Gamma$ by executing the Enc algorithm indicated in formula 159.

[Formula 159]

$$\mathrm{Enc}(\mathrm{pk}, m, \Gamma):$$

$$/* \text{ ID-group setup } */$$

$$\hat{\mathbb{G}}_{ID} := \prod_{t \in \Gamma} \hat{\mathbb{G}}_t,$$

$$\hat{h}_{ID} := (\hat{h}_{j,ID_j'}) \in \hat{\mathbb{G}}_{ID},$$

$$/* \text{ Group element encoding } */$$

$$\zeta \xleftarrow{\mathrm{U}} \mathbb{F}_q, \; c := \hat{h}_{ID}^{\zeta} \; \text{ where } c := (c_t)_{t \in \Gamma}, \; c_t := \hat{h}_t^{\zeta} \; \text{ for } t \in \Gamma,$$

$$z := h_T^{\zeta}, \; c_T := z \cdot m,$$

$$\text{return } ct_\Gamma := (\Gamma, c, c_T).$$

Dec algorithm according to Embodiment 3 will be described referring to Figs. 5 and 10.

Processes of step S44 and step S45 are the same as those in Embodiment 2.

(Step S41: Acquisition Process)

An acquisition unit 34 acquires, via an input/output interface 33, the public parameters pk and the decryption key $sk_S$ which are generated by the key generation device 10, and the ciphertext $ct_\Gamma$ generated by the encryption device 20.

(Step S411: Decryption Key Acquisition Process)

A decryption key acquisition unit 341 acquires, via the input/output interface 33, the public parameters pk and the decryption key $sk_S$ which are generated by the key generation device 10. The decryption key $sk_S$ includes the key element k := {k_i} in which the distributed information $s^\rightarrow$ is set to the element $h_{ID}$. That is, the decryption key $sk_S$ includes the key element k which is an element of the group $G_t$ converted by the key generation random $\tau_t$, as with Embodiment 2.

(Step S412: Ciphertext Acquisition Process)

A ciphertext acquisition unit 342 acquires the ciphertext $ct_\Gamma$ generated by the encryption device 20. The ciphertext $ct_\Gamma$ includes the cipher element $c_T$ and the cipher element c := {c_t}. In the cipher element $c_T$, the message m is set to conversion information z in which an encryption random $\zeta$ is set to an element X which is the generator $h_T$ of the group $G_T$. In the cipher element c, the encryption random $\zeta$ is set to the element $h^\wedge_{ID}$ which is an element $Y^\wedge$ being converted from the generator $g^\wedge_t$ of the group $G^\wedge_t$ by the key generation random $\tau_t$.

(Step S42: Decryption Determination Process)

A decryption unit 35 determines whether or not the access structure S included in the decryption key $sk_S$ received in step S41 accepts the set of attributes, $\Gamma$, included in the ciphertext $ct_\Gamma$. Hence, whether the ciphertext $ct_\Gamma$ can be decrypted by the decryption key $sk_S$ is determined.

If it is determined to accept the set of attributes, $\Gamma$, that is, if it is determined that decryption is possible, the decryption unit 35 advances the processing to step S43. If not, the decryption unit 35 advances the processing to step S45.

(Step S43: Decryption Process)

The decryption unit 35 generates the message m' by decrypting the ciphertext $ct_\Gamma$ by the decryption key $sk_S$ received in step S41.

The decryption process includes processes of step S431 and step S432.

(Step S431: Conversion Information Generation Process)

A conversion information generation unit 351 calculates a complementary coefficient $\sigma_i$ indicated in formula 160.

[Formula 160]

$$\{\sigma_i\}_{\rho(i)\in\Gamma} \text{ such that } \vec{1} = \sum_{\rho(i)\in\Gamma} \sigma_i M_i$$
$$\text{where } M_i \text{ is the } i\text{-th row of } M$$

The conversion information generation unit 351 generates conversion information z' using the complementary coefficient $\sigma_i$, the element k included in the decryption key $sk_S$, and the cipher element c included in the ciphertext $ct_\Gamma$, as indicated in formula 161.

[Formula 161]

$$z' := \prod_{t:=\rho(i)\in\Gamma} e_t(k_i, c_t)^{\sigma_i}$$

Since formula 162 holds, if the decryption key $sk_S$ can decrypt the ciphertext $ct_\Gamma$, then the conversion information z' and the conversion information z are identical.

[Formula 162]

$$\prod_{t:=\rho(i)\in\Gamma} e_t(k_i, c_t)^{\sigma_i}$$
$$= \prod_{t:=\rho(i)\in\Gamma} e_t(g_t^{s_i/\tau_t}, \hat{h}_t^\zeta)^{\sigma_i}$$
$$= \prod_{t:=\rho(i)\in\Gamma} e_t(g_t^{s_i/\tau_t}, \hat{g}_t^{\tau_t})^{\zeta\sigma_i}$$
$$= \prod_{t:=\rho(i)\in\Gamma} e_t(g_t, \hat{g}_t)^{\zeta\sigma_i s_i}$$
$$= g_T^{s_0\zeta}$$
$$= h_T^\zeta$$
$$= z$$

(Step S432: Message Generation Process)

A message generation unit 352 generates the message m' using the conversion information z' generated in step S431 and the cipher element $c_T$ included in the ciphertext $ct_\Gamma$, as indicated in formula 163.

[Formula 163]

$$m' := c_T \cdot (z')^{-1}$$

That is, the decryption device 30 executes the Dec algorithm indicated in formula 164 to decrypt a ciphertext $ct_{ID'}$ by a decryption key $sk_{ID}$.

[Formula 164]

$$\text{Dec}(pk, sk_\mathbb{S}, ct_\Gamma):$$

$$\text{if } \mathbb{S} := (M, \rho) \text{ accepts } \Gamma := \{t\},$$

$$\text{compute } \{\sigma_i\}_{\rho(i)\in\Gamma} \text{ such that } \vec{1} = \sum\nolimits_{\rho(i)\in\Gamma} \sigma_i M_i$$

$$\text{where } M_i \text{ is the } i\text{-th row of } M$$

$$z' := \prod\nolimits_{t:=\rho(i)\in\Gamma} e_t(k_i, c_t)^{\sigma_i}, \quad m' := c_T \cdot (z')^{-1},$$

$$\text{return } m',$$

$$\text{otherwise, return } \perp.$$

*** Effect of Embodiment 3 ***

As described above, the cryptographic system 1 according to Embodiment 3 implements the ABE scheme using IPG. Therefore, it is possible to indicate security from the isogeny problem hardness.

The cryptographic system 1 according to Embodiment 3 generates the ciphertext $ct_\Gamma$ using the element Y^ which is a generation element converted by the key generation random $\tau_t$. Therefore, it is possible to indicate security from the pairing problem hardness.

Embodiment 4.

In Embodiment 4, an ABE scheme with a large set of attributes will be described.

In Embodiment 4, description on matters that are identical with their counterparts of Embodiment 3 will be omitted, and differences from Embodiment 3 will be described.

In Embodiment 3, the attribute t is included in the set of attributes, $\Gamma$. In Embodiment 4, a category t of attribute and an attribute about the category t, $x_t := (x_{t,j}) \in \{0, 1\}^n$, are included in a set of attributes, $\Gamma$.

In the following description, when xt is expressed as a subscript, this xt signifies $x_t$. When vi is expressed as a subscript, this vi signifies $v_i$.

*** Description of Operation ***

An operation of a cryptographic system 1 according to Embodiment 4 will be described referring to Fig. 5, Fig. 10, and Figs. 19 to 23. Operations of Embodiment 4 are equivalent to processes of methods and programs, as with Embodiment 3.

**EP 3 648 395 A1**

Setup algorithm according to Embodiment 4 will be described referring to Figs. 19 and 21.

(Step S51: IPG Generation Process)

A master key generation unit 14 receives as input a security parameter $1^\lambda$, a value d which is the maximum number of attributes, and a value n representing the number of bits of each category t via an input/output interface 13. The master key generation unit 14 takes as input the received security parameter $1^\lambda$, d, and n and executes IPG generation algorithm $Gen^{IPG}$ ($1^\lambda$, d, n) to generate a master key pair of public parameters $pk^{IPG}$ and a master secret key $msk^{IPG}$ indicated in formula 165.

[Formula 165]

$$(pk^{IPG} := ((\mathbb{G}_0, \hat{\mathbb{G}}_0, g_0, \hat{g}_0, e_0),$$
$$(\mathbb{G}_{t,j,\iota}, \hat{\mathbb{G}}_{t,j,\iota}, g_{t,j,\iota}, \hat{g}_{t,j,\iota}, e_{t,j,\iota})_{t\in[d], j\in[n], \iota\in[0,1]},$$
$$\mathbb{G}_T),$$
$$msk^{IPG} := (\phi_{t,j,\iota})_{t\in[d], j\in[n], \iota\in[0,1]})$$
$$\xleftarrow{R} Gen^{IPG}(1^\lambda, 2dn)$$

(Step S52: Secret Information Generation Process)

The master key generation unit 14 generates secret information $s_0$ which is a uniform random.
The master key generation unit 14 generates an element $h_T$ by setting the secret information $s_0$ to an element $g_T$ of a group $G_T$, as indicated in formula 166.

[Formula 166]

$$h_T := g_T^{s_0}$$

(Step S53: Key Generation Random Generation Process)

The master key generation unit 14 generates a key generation random $\tau_{t,j,\iota}$ which is a uniform random, for each integer t, each integer j, and each integer $\iota$ of t ∈ [d], j ∈ [n], and $\iota \in [0, 1]$, respectively.
The master key generation unit 14 generates an element $h^\wedge_{t,j,\iota}$, for each integer t, each integer j, and each integer $\iota$ of t ∈ [d], j ∈ [n], and $\iota \in [0, 1]$, respectively, by setting the key generation random $\tau_{t,j,\iota}$, to an element $g^\wedge_{t,j,\iota}$, of a group $G^\wedge_{t,j,\iota}$, as indicated in Formula 167.

[Formula 167]

$$\hat{h}_{t,j,\iota} := \hat{g}_{t,j,\iota}^{\tau_{t,j,\iota}}$$

The master key generation unit 14 also generates an element $h_{t,j,\iota}$ for each integer t, each integer j, and each integer $\iota$ of $t \in [d]$, $j \in [n]$, and $\iota \in [0, 1]$, respectively, by setting a reciprocal $1/\tau_{t,j,\iota}$ of the key generation random $\tau_{t,j,\iota}$ to an element $g_{t,j,\iota}$ of a group $G_{t,j,\iota}$, as indicated in Formula 168.

[Formula 168]

$$h_{t,j,\iota} := g_{t,j,\iota}^{1/\tau_{t,j,\iota}}$$

(Step S54: Master Key Generation Process)

Using the public parameters $pk^{IPG}$ generated in step S51, the element $h_T$ generated in step S52, and the element $h^{\wedge}_{t,j,\iota}$ generated in step S53, the master key generation unit 14 generates public parameters $pk := ((G_{t,j,\iota}, G^{\wedge}_{t,j,\iota}, h^{\wedge}_{t,j,\iota}, e_{t,j,\iota})_{t\in[d],j\in[n],\iota\in[0,1]}, G_T, h_T)$. A key output unit 16 outputs the public parameters pk to an encryption device 20 and a decryption device 30 by outputting the public parameters pk to an external public server or the like via the input/output interface 13.

Using the secret information $s_0$ generated in step S52 and the element $h_{t,j,\iota}$ generated in step S53, the master key generation unit 14 generates a master secret key $msk := (s_0, (h_{t,j,\iota})_{t\in[d],j\in[n],\iota\in[0,1]})$. The master key generation unit 14 writes the generated master secret key msk to a storage device 12.

That is, the master key generation unit 14 generates the master key pair by executing the Setup algorithm indicated in formula 169.

[Formula 169]

$$\mathrm{Setup}(1^\lambda, d, n):$$

$$(\mathrm{pk}^{IPG} := ((\mathbb{G}_0, \hat{\mathbb{G}}_0, g_0, \hat{g}_0, e_0),$$

$$(\mathbb{G}_{t,j,\iota}, \hat{\mathbb{G}}_{t,j,\iota}, g_{t,j,\iota}, \hat{g}_{t,j,\iota}, e_{t,j,\iota})_{t\in[d],j\in[n],\iota\in[0,1]},$$

$$\mathbb{G}_T),$$

$$\mathrm{msk}^{IPG} := (\phi_{t,j,\iota})_{t\in[d],j\in[n],\iota\in[0,1]})$$

$$\xleftarrow{\;R\;} \mathrm{Gen}^{IPG}(1^\lambda, 2dn),$$

$$s_0 \xleftarrow{\;U\;} \mathbb{F}_q, \; h_T := g_T^{s_0},$$

$$\tau_{t,j,\iota} \xleftarrow{\;U\;} \mathbb{F}_q, \; \hat{h}_{t,j,\iota} := \hat{g}_{t,j,\iota}^{\tau_{t,j,\iota}}, \; h_{t,j,\iota} := g_{t,j,\iota}^{1/\tau_{t,j,\iota}} \text{ for all } t,j,\iota,$$

$$\mathrm{return} \; \mathrm{pk} := ((\mathbb{G}_{t,j,\iota}, \hat{\mathbb{G}}_{t,j,\iota}, \hat{h}_{t,j,\iota}, e_{t,j,\iota})_{t\in[d],j\in[n],\iota\in[0,1]}, \mathbb{G}_T, h_T),$$

$$\mathrm{msk} := (s_0, (h_{t,j,\iota})_{t\in[d],j\in[n],\iota\in[0,1]}).$$

KeyGen algorithm according to Embodiment 4 will be described referring to Figs. 19 and 22.

A process of step S61 is the same as that of Embodiment 3.

(Step S62: ID Group Assigning Process)

For each integer i of i ∈ [L], when p(i) = (t, $v_i := (v_{i,j}) \in \{0, 1\}^n$), an ID group assigning unit 17 takes, as an ID group $G_{t,vi}$, a direct product of a group $G_{t,j,vi}$ for each integer j of j = 1, .., n. Note that the ID group $G_{t,vi}$ is a t-th basis group. That is, the ID group assigning unit 17 generates the ID group $G_{t,vi}$, as indicated in formula 170.

[Formula 170]

$$\text{for } i \in [L]$$

$$\text{if } \rho(i) = (t, v_i := (v_{i,j}) \in \{0,1\}^n$$

$$\mathbb{G}_{t,v_i} := \mathbb{G}_{t,1,v_{i,1}} \times \cdots \times \mathbb{G}_{t,n,v_{i,n}}$$

Out of elements $h_{t,j,}$ included in the master secret key msk, the ID group assigning unit 17 generates, as an element $h_{t,vi}$, a set of those elements $h_{t,j,}$ that are included in the ID group $G_{t,vi}$. More specifically, the ID group assigning unit 17 generates the element $h_{t,vi}$, as indicated in formula 171.

[Formula 171]

$$h_{t,v_i} := \left( h_{t,j,v_{i,j}} \right)_{j \in [n]}$$

(Step S63: Distributed Information Generation Process)

A decryption key generation unit 15 generates distributed information $\vec{s}_i$ for each integer i of i ∈ [L], as indicated in formula 172.

[Formula 172]

$$\vec{1} \cdot \vec{u} = s_0,$$

$$s_i := M_i \cdot \vec{u} \text{ for } i \in [L],$$

$$\vec{s} := (s_{i,j})_{j \in [n]} \in \mathbb{F}_q^n \text{ such that } s_i = \sum_{j=1}^{n} s_{i,j}$$

(Step 64: Key Element Generation Process)

The decryption key generation unit 15 generates a key element $k_i$ by setting the distributed information $\vec{s}_i$ generated in step S63 to the element $h_{t,vi}$ generated in step S62, as indicated in Formula 173.

[Formula 173]

$$\text{for } i \in [L]$$

$$\text{if } \rho(i) = (t, v_i := (v_{i,j}) \in \{0,1\}^n$$

$$k_i := h_{t,v_i}^{\vec{s}_i}$$

(Step S65: Key Output Process)

The key output unit 16 outputs a decryption key $sk_S$ including an access structure S received in step S61 and a key element $k := \{k_i\}$ generated in step S64 to the decryption device 30 via the input/output interface 13.
That is, the decryption key generation unit 15 generates the decryption key $sk_S$ by executing the KeyGen algorithm indicated in formula 174.

[Formula 174]

$$\text{KeyGen}(\text{pk}, \text{sk}, \mathbb{S} := (M, \rho)):$$

$$/* \text{ ID-group setup } */$$

$$\text{for } i \in [L]$$

$$\text{if } \rho(i) = (t, v_i := (v_{i,j}) \in \{0,1\}^n$$

$$\mathbb{G}_{t,v_i} := \mathbb{G}_{t,1,v_{i,1}} \times \cdots \times \mathbb{G}_{t,n,v_{i,n}},$$

$$h_{t,v_i} := (h_{t,j,v_{i,j}})_{j \in [n]},$$

$$/* \text{ Group element encoding } */$$

$$\text{choose random } \vec{u} \in \mathbb{F}_q^r \text{ such that } \vec{1} \cdot \vec{u} = s_0,$$

$$\text{for } i \in [L]$$

$$s_i := M_i \cdot \vec{u}, \ \vec{s} := (s_{i,j})_{j \in [n]} \in \mathbb{F}_q^n \text{ such that } s_i = \sum_{j=1}^n s_{i,j}$$

$$\text{if } \rho(i) = (t, v_i := (v_{i,j}) \in \{0,1\}^n$$

$$k_i := h_{t,v_i}^{\vec{s}_i}$$

$$\text{return } sk_{\mathbb{S}} := (\mathbb{S}, k := (k_i \in \mathbb{G}_{t,v_i})_{i \in [L]}).$$

Enc algorithm according to Embodiment 4 will be described referring to Figs. 20 and 23.

Processes of step S73 and step S74 are the same as those of Embodiment 2.

(Step S71: Acquisition Process)

An acquisition unit 24 acquires, via an input/output interface 23, the public parameters pk generated by a key generation device 10. The acquisition unit 24 also receives as input a message m being an encryption target and a set of attributes, $\Gamma$, being a decryption condition.

(Step S72: ID Group Assigning Process)

An ID group assigning unit 27 takes a direct product of a group $G^{\wedge}_{t,j,xt}$ of each integer j of j = 1, ..., n for each integer t of $(t, x_t := (x_{t,j}) \in \{0, 1\}^n) \in \Gamma$, as an ID group $G^{\wedge}_{t,xt}$. That is, the ID group assigning unit 27 generates the ID group $G^{\wedge}_{t,xt}$, as indicated in formula 175.

[Formula 175]

$$\text{for } (t, x_t := (x_{t,j}) \in \{0,1\}^n) \in \Gamma$$

$$\hat{\mathbb{G}}_{t,x_t} := \hat{\mathbb{G}}_{t,1,x_{t,1}} \times \cdots \times \hat{\mathbb{G}}_{t,n,x_{t,n}}$$

Out of elements $h^{\wedge}_{t,j,xt}$ included in the public parameters pk, the ID group assigning unit 17 generates, as an element $h^{\wedge}_{t,xt}$, a set of those elements $h^{\wedge}_{t,j,tx}$ that are included in the ID group $G^{\wedge}_{t,xt}$. More specifically, the ID group assigning unit 17 generates the element $h^{\wedge}_{t,xt}$, as indicated in formula 176.

[Formula 176]

$$\hat{h}_{t,x_t} := (\hat{h}_{t,j,x_{t,j}})_{j \in [n]}$$

(Step S73: Ciphertext Generation Process)

A ciphertext generation unit 25 generates elements of a ciphertext $ct_\Gamma$ using the public parameters pk acquired in step S71 and the element $h^{\wedge}_{t,xt}$ generated in step S72. The ciphertext generation unit 25 generates the elements of the ciphertext $ct_\Gamma$ using a generation element of an element X of the group $G_T$ and a generation element of an element $Y^{\wedge}$ of the group $G^{\wedge}_{t,xt}$. The element X refers to the element $h_T$ included in the public parameters pk. The element $Y^{\wedge}$ refers to the element $h^{\wedge}_{t,xt}$ generated in step S72.

The ciphertext generation process includes processes of step S731 to step S733.

(Step S731: Conversion Information Generation Process)

A conversion information generation unit 251 generates an encryption random $\zeta$ which is a uniform random.

Using the element $h_T$ and the encryption random $\zeta$, the conversion information generation 251 generates conversion information z, as indicated in formula 177.

[Formula 177]

$$z := h_T^{\zeta}$$

(Step S732: First Cipher Element Generation Process)

A first cipher element generation unit 252 generates a cipher element $c_T$ which is an element of the ciphertext $ct_\Gamma$ by setting the message m to the conversion information z generated in step S731, as indicated in formula 178.

[Formula 178]

$$c_T := z \cdot m$$

(Step S73: Second Cipher Element Generation Process)

A second cipher element generation unit 253 generates, for each integer t of $(t, x_t := (x_{t,j}) \in \{0, 1\}^n) \in \Gamma$, a cipher element $c_t$ which is an element of the ciphertext $ct_\Gamma$ by setting the encryption random $\zeta$ to the element $h^{\wedge}_{t,xt}$ which is the element $Y^{\wedge}$, as indicated in formula 179.

[Formula 179]

$$c_t := \hat{h}_{t,x_t}^{\zeta} \in \mathbb{G}_{t,x_t}$$

(Step S74: Ciphertext Output Process)

A ciphertext output unit 26 outputs the ciphertext $ct_\Gamma$ having, as cipher elements, the set of attributes, $\Gamma$, received in step S71 and cipher elements $c_T$ and $c := \{c_t\}_{t \in \Gamma}$ generated in step S73, to the decryption device 30 via the input/output interface 23.

That is, the encryption device 20 generates the ciphertext $ct_\Gamma$ by executing the Enc algorithm indicated in formula 180.

[Formula 180]

$$\mathrm{Enc}(\mathrm{pk}, m, \Gamma):$$

$$/* \text{ ID-group setup } */$$

$$\text{for } (t, x_t := (x_{t,j}) \in \{0,1\}^n) \in \Gamma$$

$$\hat{\mathbb{G}}_{t,x_t} := \hat{\mathbb{G}}_{t,1,x_{t,1}} \times \cdots \times \hat{\mathbb{G}}_{t,n,x_{t,n}},$$

$$\hat{h}_{t,x_t} := (\hat{h}_{t,j,x_{t,j}})_{j \in [n]},$$

$$/* \text{ Group element encoding } */$$

$$\zeta \xleftarrow{\ \ U\ \ } \mathbb{F}_q,$$

$$c := (c_t)_{t \in \Gamma}, \ c_t := \hat{h}_{t,x_t}^{\zeta} \ \text{ for } (t, x_t := (x_{t,j}) \in \{0,1\}^n) \in \Gamma,$$

$$z := h_T^{\zeta}, \ c_T := z \cdot m,$$

$$\text{return } \mathrm{ct}_\Gamma := (\Gamma, c, c_T).$$

Dec algorithm according to Embodiment 4 will be described referring to Figs. 5 and 10.

Processes of step S41 and step S42 and processes of step S44 and step S45 are the same as those in Embodiment 3.

Note that the decryption key $sk_s$ includes the key element k in which distributed information $s^{\rightarrow}$ is set to the element $h_{t,vi}$. That is, the decryption key $sk_s$ includes the key element $k := \{k_i\}$ which is an element of the group $G_{t,vi}$ converted by the key generation random $\tau_{t,j,\iota}$ as in Embodiment 3.

The ciphertext $ct_\Gamma$ includes the cipher element $c_T$ and the cipher element c. In the cipher element $c_T$, the message m is set to the conversion information z in which the encryption random $\zeta$ is set to the element X which is the generator $h_T$ of the group $G_T$. In the cipher element c, the encryption random $\zeta$ is set to the element $h^\wedge_{t,xt}$ which is the element $Y^\wedge$ being converted from the generator $g^\wedge_{t,j,\iota}$ of the group $G^\wedge_{t,xt}$ by the key generation random $\tau_{t,j,\iota}$.

(Step S43: Decryption Process)

A decryption unit 35 generates a message m' by decrypting the ciphertext $ct_\Gamma$ by the decryption key $sk_s$ received in step S41.

The decryption process includes processes of step S431 and step S432.

(Step S431: Conversion Information Generation Process)

A conversion information generation unit 351 calculates a complementary coefficient $\sigma_i$, indicated in formula 181.

[Formula 181]

$$\{\sigma_i\}_{\rho(i)\in\Gamma} \text{ such that } \vec{1} = \sum_{\rho(i)\in\Gamma} \sigma_i M_i$$

where $M_i$ is the $i$-th row of $M$

The conversion information generation unit 351 generates conversion information z' using the complementary coefficient $\sigma_i$, the element k := {$k_i$} included in the decryption key $sk_s$, and the cipher element c := {$c_t$} included in the ciphertext $ct_\Gamma$, as indicated in formula 182.

[Formula 182]

$$z' := \prod_{\rho(i)=(t,v_i)\in\Gamma} e_{t,v_i}(k_i, c_t)^{\sigma_i}$$

Since formula 183 holds, if the decryption key $sk_s$ can decrypt the ciphertext $ct_\Gamma$, then the conversion information z' and the conversion information z are identical.

[Formula 183]

$$\prod_{\rho(i)=(t,v_i)\in\Gamma} e_{t,v_i}(k_i, c_t)^{\sigma_i}$$

$$= \prod_{\rho(i)=(t,v_i)\in\Gamma} e_{t,v_i}(h_i^{\sigma_i \vec{s}_i}, h_t^{\zeta})$$

$$= g_T^{\zeta \sum_{\rho(i)=(t,v_i)\in\Gamma} \sigma_i \vec{s}_i}$$

$$= (g_T^{s_0})^{\zeta}$$

$$= h_T^{\zeta}$$

$$= z$$

(Step S432: Message Generation Process)

A message generation unit 352 generates the message m' using the conversion information z' generated in step S431 and the cipher element $c_T$ included in the ciphertext $ct_\Gamma$, as indicated in formula 184.

[Formula 184]

$$m' := c_T \cdot (z')^{-1}$$

That is, the decryption device 30 executes the Dec algorithm indicated in formula 185 to decrypt a ciphertext $ct_{ID'}$ by a decryption key $sk_{ID}$.

[Formula 185]

$$\mathrm{Dec}(pk, sk_{\mathbb{S}}, ct_{\Gamma}):$$

$$\text{if } \mathbb{S} := (M, \rho) \text{ accepts } \Gamma := \{t, x_t\},$$

$$\text{compute } \{\sigma_i\}_{\rho(i)\in\Gamma} \text{ such that } \vec{1} = \sum{}_{\rho(i)\in\Gamma}\sigma_i M_i$$

$$\text{where } M_i \text{ is the } i\text{-th row of } M$$

$$z' := \prod{}_{\rho(i)=(t,v_i)\in\Gamma} e_{t,v_i}(k_i, c_t)^{\sigma_i}, \quad m' := c_T \cdot (z')^{-1},$$

$$\text{return } m',$$

$$\text{otherwise, return } \perp.$$

*** Effect of Embodiment 4 ***

As described above, the cryptographic system 1 according to Embodiment 4 implements the ABE scheme using IPG. Therefore, it is possible to indicate security from the isogeny problem hardness.

The cryptographic system 1 according to Embodiment 4 generates the ciphertext $ct_{\Gamma}$ using the element Y^ which is a generation element converted by the key generation random $\tau_{t,j,}\iota$ . Therefore, it is possible to indicate security from the pairing problem hardness.

Embodiment 5.

In Embodiment 5, hierarchical IBE (to be referred to as HIBE hereinafter) based on the IBE scheme described in Embodiment 2 will be described.

In Embodiment 5, description on matters that are identical with their counterparts of Embodiment 2 will be omitted, and differences from Embodiment 2 will be described.

In Embodiment 5, 1-bit HIBE will be described first, and thereafter n (n ≥ 1)-bit HIBE to which 1-bit HIBE is applied will be described.

*** Description of Configuration ***

The HIBE scheme comprises Setup algorithm, KeyGen algorithm, Enc algorithm, Dec algorithm, and Delegate algorithm.

Setup algorithm takes as input a security parameter $1^{\lambda}$ and outputs public parameters pk and a master secret key msk.

KeyGen algorithm takes as input the public parameters pk, the master secret key msk, and an identity ID, and outputs a decryption key $sk_{ID}$ corresponding to the identity ID.

Enc algorithm takes as input the public parameters pk, a message m in a message space msg, and an identity ID', and outputs a ciphertext $ct_{ID'}$.

Dec algorithm takes as input the public parameters pk, the decryption key $sk_{ID}$ for the identity ID, and the ciphertext $ct_{ID'}$ encrypted under the identity ID', and outputs either a message m' ∈ msg or a distinguished symbol ⊥ which indicates that decryption failed.

Delegate algorithm takes as input the public parameters pk, a secret key $sk_{ID}$ for a hierarchical identity ID of a length L, and (L+1)th $ID_{L+1}$, and outputs either a secret key $sk_{ID'}$ for a hierarchical identity ID' := (ID, $ID_{L+1}$) of a length (L+1) or a distinguished symbol ⊥ which indicates that key generation failed.

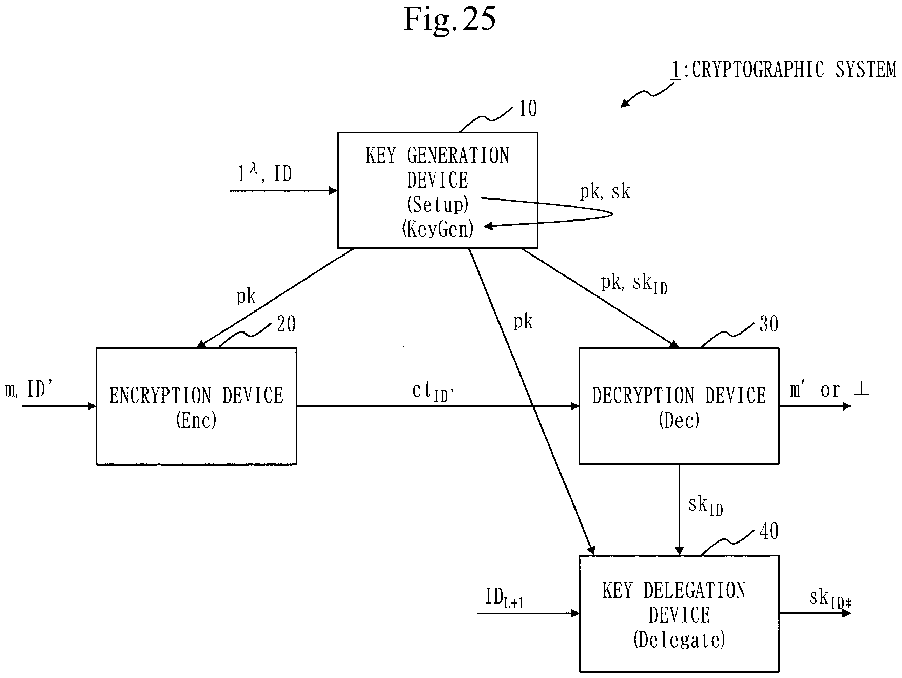

A configuration of a cryptographic system 1 according to Embodiment 5 will be described referring to Fig. 25.

The cryptographic system 1 is provided with a key generation device 10, an encryption device 20, a decryption device 30, and a key delegation device 40. The key generation device 10, the encryption device 20, the decryption device 30, and the key delegation device 40 are connected to each other via a transmission line.

The key delegation device 40 takes as input public parameters pk, a secret key $sk_{ID}$ for a hierarchical identity ID of a length L, and (L+1)th $ID_{L+1}$, and executes Delegate algorithm to generate either a secret key $sk_{ID'}$ for a hierarchical identity ID' := (ID, $ID_{L+1}$) of a length (L+1) or a distinguished symbol ⊥ which indicates that key generation failed.

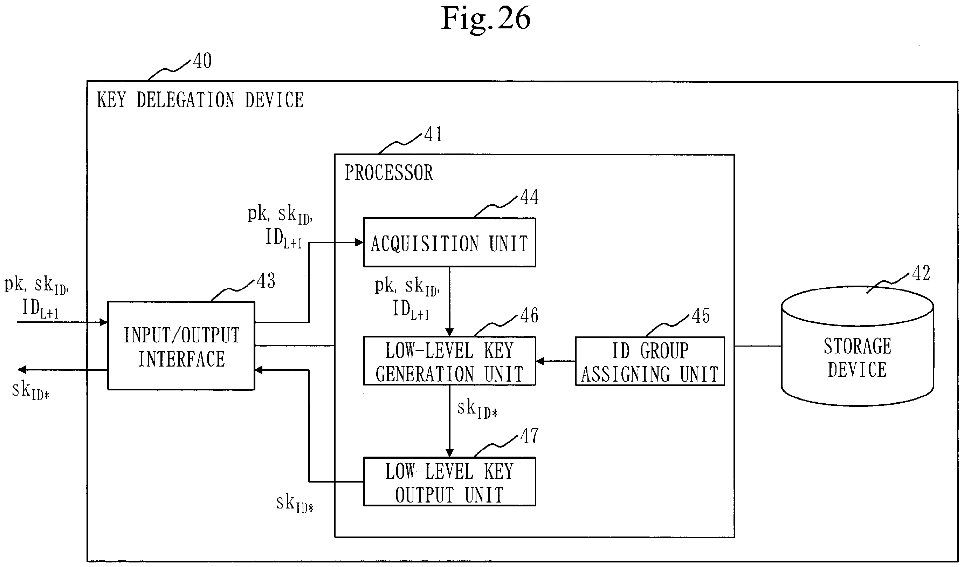

A configuration of the key delegation device 40 according to Embodiment 5 will be described referring to Fig. 26.

The key delegation device 40 is provided with hardware devices which are a processor 41, a storage device 42, and an input/output interface 43. The processor 41 is connected to the other hardware devices via signal lines and controls these other hardware devices.

The key delegation device 40 is provided with an acquisition unit 44, an ID group assigning unit 45, a low-level key generation unit 46, and a low-level key output unit 47, as function configuration elements. Functions of the acquisition unit 44, ID group assigning unit 45, low-level key generation unit 46, and low-level key output unit 47 are implemented by software.

A program that implements the functions of the individual units of the key delegation device 40 is stored in the storage device 42. This program is read by the processor 41 and executed by the processor 41. Thus, the functions of the individual units of the key delegation device 40 are implemented.

*** Description of Operation ***

An operation of the cryptographic system 1 according to Embodiment 5 will be described referring to Figs. 19 to 23, Fig. 26, and Fig. 27. Operations of Embodiment 5 are equivalent to processes of methods and programs, as with Embodiment 2. An operation of the key delegation device 40 according to Embodiment 5 corresponds to a key delegation method according to Embodiment 5 and processes of a key delegation program according to Embodiment 5.

Note that Dec algorithm is the same as that of Embodiment 2 and accordingly its description will be omitted.

First, 1-bit HIBE will be described.

In the following description, when IDt is expressed as a subscript, this IDt signifies $ID_t$. When ID't is expressed as a subscript, this ID't signifies $ID'_i$.

Setup algorithm according to Embodiment 5 will be described referring to Figs. 19 and 21.

(Step S51: IPG Generation Process)

A master key generation unit 14 receives as input a security parameter $1^\lambda$ and a value d ≥ 2, which is a hierarchical number. The master key generation unit 14 takes as input the received security parameter $1^\lambda$ and 2d and executes IPG generation algorithm $Gen^{IPG}$ ($1^\lambda$, 2d) to generate a master key pair of public parameters $pk^{IPG}$ and a master secret key $msk^{IPG}$ indicated in formula 186.

[Formula 186]

$$
(pk^{IPG} := ((\mathbb{G}_0, \hat{\mathbb{G}}_0, g_0, \hat{g}_0, e_0),
$$

$$
(\mathbb{G}_{t,\iota}, \hat{\mathbb{G}}_{t,\iota}, g_{t,\iota}, \hat{g}_{t,\iota}, e_{t,\iota})_{t\in[d],\iota\in[0,1]},
$$

$$
\mathbb{G}_T),
$$

$$
msk^{IPG} := (\phi_{t,\iota}))_{t\in[d],\iota\in[0,1]})
$$

$$
\xleftarrow{\quad R \quad} Gen^{IPG}(1^\lambda, 2d)
$$

(Step S52: Secret Information Generation Process)

The master key generation unit 14 generates secret information $s_0$ which is a uniform random.

The master key generation unit 14 generates an element $h_T$ by setting the secret information $s_0$ to an element

$g_T$ of a group $G_T$, as indicated in formula 187.

[Formula 187]

$$h_T := g_T^{s_0}$$

(Step S53: Key Generation Random Generation Process)

The master key generation unit 14 generates a key generation random $\tau_{t,\iota}$ which is a uniform random, for each integer t of t $\in$ [d] and each integer $\iota$ of $\iota \in [0, 1]$.

The master key generation unit 14 generates an element $h^\wedge_{t,\iota}$ for each integer t of t $\in$ [d] and each integer $\iota$ of $\iota \in [0, 1]$ by setting a key generation random $\tau_{t,\iota}$ to an element $g^\wedge_{t,\iota}$ of a group $G^\wedge_{t,\iota}$, as indicated in Formula 188.

[Formula 188]

$$\hat{h}_{t,\iota} := \hat{g}_{t,\iota}^{\tau_{t,\iota}}$$

The master key generation unit 14 also generates an element $h_{t,\iota}$, for each integer t of t $\in$ [d] and each integer $\iota$ of $\iota \in [0, 1]$ by setting a key generation random $\tau_{t,\iota}$ to an element $g_{t,\iota}$ of a group $G_{t,\iota}$, as indicated in Formula 189.

[Formula 189]

$$h_{t,\iota} := g_{t,\iota}^{1/\tau_{t,\iota}}$$

(Step S54: Master Key Generation Process)

Using the public parameters $pk^{IPG}$ generated in step S51, the element $h_T$ generated in step S52, and the element $h^\wedge_{t,\iota}$ and the element $h_{t,\iota}$ generated in step S53, the master key generation unit 14 generates public parameters $pk := ((G_{t,\iota}, G^\wedge_{t,\iota}, h_{t,\iota}, h^\wedge_{t,\iota}, e_{t,\iota})_{t\in[d],\iota\in[0,1]}, G_T, h_T)$. The key output unit 16 outputs the public parameters pk to the encryption device 20 and the decryption device 30 by outputting the public parameters pk to an external public server or the like via the input/output interface 13.

Using the secret information $s_0$ generated in step S52, the master key generation unit 14 generates a master secret key msk := $s_0$. The master key generation unit 14 writes the generated master secret key msk to a storage device 12.

That is, the master key generation unit 14 generates the master key pair by executing the Setup algorithm indicated in formula 190.

[Formula 190]

$$\text{Setup}(1^\lambda):$$

$$(\text{pk}^{\text{IPG}} := ((\mathbb{G}_0, \hat{\mathbb{G}}_0, g_0, \hat{g}_0, e_0),$$

$$(\mathbb{G}_{t,\iota}, \hat{\mathbb{G}}_{t,\iota}, g_{t,\iota}, \hat{g}_{t,\iota}, e_{t,\iota})_{t \in [d], \iota \in [0,1]},$$

$$\mathbb{G}_T),$$

$$\text{msk}^{\text{IPG}} := (\phi_{t,\iota}))_{t \in [d], \iota \in [0,1]})$$

$$\xleftarrow{\quad R \quad} \text{Gen}^{\text{IPG}}(1^\lambda, 2d),$$

$$s_0 \xleftarrow{\quad U \quad} \mathbb{F}_q, \quad h_T := g_T^{s_0},$$

$$\tau_{t,\iota} \xleftarrow{\quad U \quad} \mathbb{F}_q, \quad \hat{h}_{t,\iota} := \hat{g}_{t,\iota}^{\tau_{t,\iota}}, \quad h_{t,\iota} := g_{t,\iota}^{1/\tau_{t,\iota}} \text{ for all } t, \iota,$$

$$\text{return pk} := ((\mathbb{G}_{t,\iota}, \hat{\mathbb{G}}_{t,\iota}, h_{t,\iota}, \hat{h}_{t,\iota}, e_{t,\iota})_{t \in [d], \iota \in [0,1]}, \mathbb{G}_T, h_T),$$

$$\text{msk} := s_0.$$

KeyGen algorithm according to Embodiment 5 will be described referring to Figs. 19 and 22.

(S61: ID Receipt Process)

A decryption key generation unit 15 receives as input the identity ID of a user who uses the decryption key $\text{sk}_{\text{ID}}$, via the input/output interface 13. The identity ID is inputted by, for example, a user of the key generation device 10 via an input device.

Assume that in this case identity $\text{ID} := (\text{ID}_t)_{t \in [L]}$. Note that $L < d$. Also, each $\text{ID}_t$ is 0 or 1.

(Step S62: ID Group Assigning Process)

An ID group assigning unit 17 assigns $\text{ID}_t$ for each integer t of $t \in [L]$ to the group $\text{G}_{t,\text{ID}t}$. The ID group assigning unit 17 takes a direct product of a group $\text{G}_{t,\text{ID}t}$ for each integer t of $t \in [L]$ as an ID group $\text{G}_{\text{ID}}$. Namely, the ID group assigning unit 17 generates the ID group $\text{G}_{\text{ID}}$, as indicated in formula 191.

[Formula 191]

$$\mathbb{G}_{ID} := \mathbb{G}_{1,ID_1} \times \cdots \times \mathbb{G}_{L,ID_L}$$

The ID group assigning unit 17 generates an element $h_{\text{ID}}$, as indicated in formula 192.

[Formula 192]

$$h_{ID} := (h_{t,ID_t}) \in \mathbb{G}_{ID}$$

(Step S63: Distributed Information Generation Process)

The decryption key generation unit 15 generates distributed information $s^\rightarrow$, as indicated in formula 193. The distributed information $s^\rightarrow$ is information in which the secret information $s_0$ is distributed.

[Formula 193]

$$\vec{s} := (s_t)_{t \in [L]} \in \mathbb{F}_q^L \text{ such that } s_0 = \sum_{t=1}^{L} s_t$$

(Step 64: Key Element Generation Process)

The decryption key generation unit 15 generates a key element k by setting the distributed information $s^\rightarrow$ generated in step S63 to the element $h_{ID}$ generated in step S62, as indicated in Formula 194.

[Formula 194]

$$k := h_{ID}^{\vec{s}}$$

(Step S65: Key Output Process)

A key output unit 16 outputs the decryption key $sk_{ID}$ including the identity ID received in step S61 and the key element k generated in step S64 to the decryption device 30 via the input/output interface 13.
That is, the decryption key generation unit 15 generates the decryption key $sk_{ID}$ by executing the KeyGen algorithm indicated in formula 195.

[Formula 195]

$$\text{KeyGen}(\text{pk}, \text{sk}, ID := (ID_t)_{t\in[L]}):$$

$$/* \text{ ID-group setup } */$$

$$\mathbb{G}_{ID} := \mathbb{G}_{1,ID_1} \times \cdots \times \mathbb{G}_{L,ID_L},$$

$$h_{ID} := (h_{t,ID_t}) \in \mathbb{G}_{ID},$$

$$/* \text{ Group element encoding } */$$

$$\text{choose random } \vec{s} := (s_t)_{t\in[L]} \in \mathbb{F}_q^L \text{ such that } s_0 = \sum_{t=1}^{L} s_t,$$

$$k := h_{ID}^{\vec{s}},$$

$$\text{return sk}_{ID} := (ID, k).$$

Enc algorithm according to Embodiment 5 will be described referring to Figs. 20 and 23.

(Step S71: Acquisition Process)

An acquisition unit 24 acquires, via an input/output interface 23, the public parameters pk generated by the key generation device 10. The acquisition unit 24 also receives as input a message m being an encryption target and the identity ID' being a decryption condition. The message m and the identity ID' are inputted by, for example, a user of the encryption device 20 via the input device.
Assume that identity ID' := (ID'$_t$)$_{t\in[L]}$. Note that L < d. Also, each ID$_t$ is 0 or 1.

(Step S72: ID Group Assigning Process)

An ID group assigning unit 27 assigns ID'$_t$ for each integer t of t $\in$ [L] to a group G^$_{t,IDt}$. The ID group assigning unit 27 takes a direct product of a group G^$_{t,ID't}$ for each integer t of t $\in$ [L] as an ID group G^$_{ID}$. Namely, the ID group assigning unit 27 generates the ID group G^$_{ID}$, as indicated in formula 196.

[Formula 196]

$$\hat{\mathbb{G}}_{ID} := \hat{\mathbb{G}}_{1,ID'_1} \times \cdots \times \hat{\mathbb{G}}_{L,ID'_L}$$

The ID group assigning unit 27 generates an element h^$_{ID}$, as indicated in formula 197.

[Formula 197]

$$\hat{h}_{ID} := (\hat{h}_{L,ID'_L}) \in \hat{\mathbb{G}}_{ID}$$

(Step S73: Ciphertext Generation Process)

A ciphertext generation unit 25 generates elements of a ciphertext $ct_{ID'}$ using the public parameters pk acquired in step S71 and the element $h^{\wedge}_{ID}$ generated in step S72. The ciphertext generation unit 25 generates the elements of the ciphertext $ct_{ID'}$ using a generation element of an element X of the group $G_T$ and a generation element of an element $Y^{\wedge}$ of a group $G^{\wedge}_t$. The element X refers to the element $h_T$ included in the public parameters pk. The element $Y^{\wedge}$ refers to the element $h^{\wedge}_{ID}$ generated in step S72.
The ciphertext generation process includes processes of step S731 to step S733.

(Step S731: Conversion Information Generation Process)

A conversion information generation unit 251 generates an encryption random $\zeta$ which is a uniform random.
Using the element $h_T$ and the encryption random $\zeta$, the conversion information generation 251 generates conversion information z, as indicated in formula 198.

[Formula 198]

$$z := h_T^{\zeta}$$

(Step S732: First Cipher Element Generation Process)

A first cipher element generation unit 252 generates a cipher element $c_T$ which is an element of the ciphertext $ct_{ID'}$ by setting the message m to the conversion information z generated in step S731, as indicated in formula 199.

[Formula 199]

$$c_T := z \cdot m$$

(Step S733: Second Cipher Element Generation Process)

A second cipher element generation unit 253 generates a cipher element c which is an element of the ciphertext $ct_{ID'}$ by setting the encryption random $\zeta$ to the element $h^{\wedge}_{ID}$ which is the element $Y^{\wedge}$, as indicated in formula 200.

[Formula 200]

$$c := \hat{h}_{ID}^{\zeta}$$

(Step S74: Ciphertext Output Process)

A ciphertext output unit 26 outputs the ciphertext $ct_{ID'}$ having, as cipher elements, the identity ID' received in step S71 and the cipher elements $c_T$ and c generated in step S73, to the decryption device 30 via the input/output interface 23.
That is, the encryption device 20 generates the ciphertext $ct_{ID'}$ by executing the Enc algorithm indicated in formula 201.

[Formula 201]

$$\mathrm{Enc}(\mathrm{pk}, m, ID' := (ID'_t)_{t \in [L]}):$$

$$/\!* \text{ ID-group setup } *\!/$$

$$\hat{\mathbb{G}}_{ID} := \hat{\mathbb{G}}_{1,ID'_1} \times \cdots \times \hat{\mathbb{G}}_{L,ID'_L},$$

$$\hat{h}_{ID} := (\hat{h}_{L,ID'_L}) \in \hat{\mathbb{G}}_{ID},$$

$$/\!* \text{ Group element encoding } *\!/$$

$$\zeta \xleftarrow{\ \mathrm{U}\ } \mathbb{F}_q, \quad c := \hat{h}_{ID}^{\zeta}, \quad z := h_T^{\zeta}, \quad c_T := z \cdot m,$$

$$\text{return ct}_{ID} := (ID', c, c_T).$$

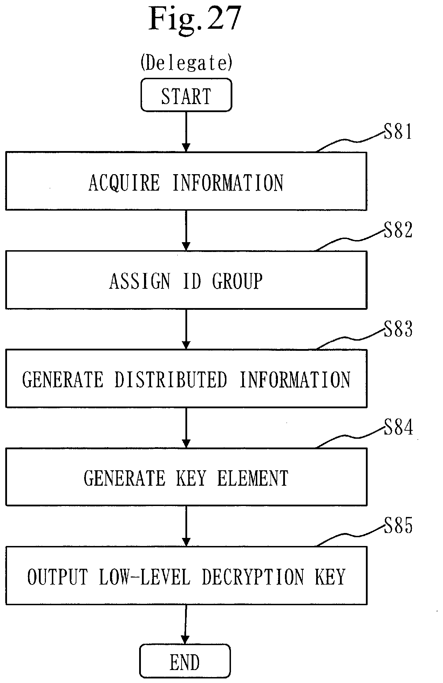

Delegate algorithm according to Embodiment 5 will be described referring to Figs. 26 and 27.

Delegate algorithm is executed by the key delegation device 40.

(Step S81: Acquisition Process)

The acquisition unit 44 acquires, via the input/output interface 43, the public parameters pk generated by the key generation device 10 and the decryption key $sk_{ID} := k$ for which a low-level key is to be generated. The acquisition unit 44 also receives as input an identity $ID_{L+1} \in \{0, 1\}$ of a user who uses a low-level decryption key $sk_{ID^*}$ of the decryption key $sk_{ID}$, via the input/output interface 43.

(Step S82: ID Group Assigning Process)

The ID group assigning unit 45 takes $ID^* := (ID, ID_{L+1})$. The ID group assigning unit 45 also generates an ID group $G_{ID^*}$, as indicated in formula 202.

[Formula 202]

$$\mathbb{G}_{ID^*} := \mathbb{G}_{ID} \times \mathbb{G}_{L+1,ID_{L+1}}$$

The ID group assigning unit 45 generates an element $k^+$ and an element $h_{ID^*}$, as indicated in formula 203.

[Formula 203]

$$k_{ID}^+ := (k_{ID}, 1),$$

$$h_{ID^*} := (h_{t,ID_t}) \in \mathbb{G}_{ID^*}$$

(Step S83: Distributed Information Generation Process)

The low-level key generation unit 46 generates distributed information $\tau^{\rightarrow\prime}$, as indicated in formula 204.

[Formula 204]

$$\vec{\tau}' := (\tau'_t) \xleftarrow{\quad U \quad} \{\sum_{t\in[L+1]}\tau'_t = 0\}$$

(Step 84: Key Element Generation Process)

The low-level key generation unit 46 generates a key element $k_{ID^*}$ by setting the distributed information $\tau^{\rightarrow\prime}$ generated in step S83 to the element $h_{ID^*}$ generated in step S82, as indicated in Formula 205.

[Formula 205]

$$k_{ID^*} := k_{ID}^+ \cdot h_{ID^*}^{\vec{\tau}'} \in \mathbb{G}_{ID^*}$$

(Step S85: Key Output Process)

The low-level key output unit 47 outputs the low-level decryption key $sk_{ID^*}$ including the identity ID* and the key element $k_{ID^*}$ which is generated in step S64 to the decryption device 30 via the input/output interface 13.
That is, the decryption key generation unit 15 generates the low-level decryption key $sk_{ID^*}$ by executing the Delegate algorithm indicated in formula 206.

[Formula 206]

$$\text{Delegate}(pk, sk_{ID}, ID_{L+1} \in \{0,1\}):$$
$$/* \text{ ID-group setup }*/$$
$$ID^* := (ID, ID_{L+1}), \ \mathbb{G}_{ID^*} := \mathbb{G}_{ID} \times \mathbb{G}_{L+1, ID_{L+1}},$$
$$k_{ID}^+ := (k_{ID}, 1), \ h_{ID^*} := (h_{t,ID_t}) \in \mathbb{G}_{ID^*}$$
$$/* \text{ Group element encoding }*/$$
$$\vec{\tau}' := (\tau'_t) \xleftarrow{\quad U \quad} \{\sum_{t\in[L+1]}\tau'_t = 0\},$$
$$k_{ID^*} := k_{ID}^+ \cdot h_{ID^*}^{\vec{\tau}'} \in \mathbb{G}_{ID^*}$$
$$\text{return } sk_{ID^*} := (ID^*, k_{ID^*}).$$

Description will be made on n (n ≥ 1)-bit HIBE to which 1-bit HIBE described above is applied.
The n-bit HIBE scheme is configured using 1-bit HIBE Setup algorithm, 1-bit HIBE KeyGen algorithm, 1-bit HIBE Enc algorithm, 1-bit HIBE Dec algorithm, and 1-bit HIBE Delegate algorithm.

In describing the n-bit HIBE scheme, 1-bit HIBE Setup algorithm, 1-bit HIBE KeyGen algorithm, 1-bit HIBE Enc algorithm, 1-bit HIBE Dec algorithm, and 1-bit HIBE Delegate algorithm which are mentioned above will be referred to as obHIBE_Setup, obHIBE_KeyGen, obHIBE_Enc, obHIBE_Dec, and obHIBE_Delegate, respectively.

In contrast, n-bit HIBE Setup algorithm, n-bit HIBE KeyGen algorithm, n-bit HIBE Enc algorithm, n-bit HIBE Dec algorithm, and n-bit HIBE Delegate algorithm will be referred to as nbHIBE_Setup, nbHIBE KeyGen, nbHIBE Enc, nbHIBE Dec, and nbHIBE_Delegate, respectively.

Description will be made on nbHIBE_Setup.

The master key generation unit 14 receives as input the security parameter $1^\lambda$, the value d which is a hierarchical number, and the value n which is a bit number.

The master key generation unit 14 takes as input the security parameter $1^\lambda$ and a value d × n and executes obHIBE_Setup to generate public parameters $pk_{ob}$ and a master secret key $msk_{ob}$. The master key generation unit 14 takes the public parameters $pk_{ob}$ as public parameters pk of the n-bit HIGE scheme and the master secret key $msk_{ob}$ as a master secret key msk of the n-bit HIBE scheme.

That is, master key generation unit 14 generates a master key pair by executing nbHIBE_Setup indicated in Formula 207.

[Formula 207]

$$\text{nbHIBE\_Setup}(1^\lambda, d, n):$$

$$(pk_{ob}, msk_{ob}) \xleftarrow{R} \text{obHIBE\_Setup}(1^\lambda, dn),$$

$$\text{return } pk := pk_{ob}, \ msk := msk_{ob}.$$

Description will be made on nbHIBE KeyGen.

The decryption key generation unit 15 receives as input the identity ID of a user who uses the decryption key $sk_{ID}$ via the input/output interface 13. Assume that identity ID := $(ID_t := (ID_{t,j}))_{t\in[L], j\in[n]}$. Note that L < d. Also, each $ID_{t,j}$ is 0 or 1.

$ID^\wedge := (ID_{t,j})_{t\in[L], j\in[n]}$ is treated as a hierarchical 1-bit identity having a hierarchical number Ln. The decryption key generation unit 15 takes as input the public parameters pk and the master secret key msk which are generated by nbHIBE Setup, and the identity $ID^\wedge$, and executes obHIBE KeyGen to generate the decryption key $sk_{ID}$.

Namely, the decryption key generation unit 15 generates the decryption key $sk_{ID}$ by executing obHIBE_KeyGen indicated in formula 208.

[Formula 208]

$$\text{nbHIBE\_KeyGen}(pk, sk, ID := (ID_t := (ID_{t,j})_{t\in[L], j\in[n]})):$$

$$ID^\wedge := (ID_{t,j})_{t\in[L], j\in[n]}$$

is hierarchical one-bit identities of depth $Ln$,

$$\text{return } sk_{ID} \xleftarrow{R} \text{obHIBE\_KeyGen}(pk, sk, ID^\wedge).$$

Description will be made on nbHIBE_Enc.

The acquisition unit 24 acquires the public parameters pk via an input/output interface 23. The acquisition unit 24 also receives as input the message m being an encryption target and the identity ID' being a decryption condition. Assume that the identity ID' := $(ID't := (ID'_{t,j}))_{t\in[L], j\in[n]}$.

$ID'^* := (ID'_{t,j})_{t\in[L], j\in[n]}$ is treated as a hierarchical 1-bit identity having a hierarchical number Ln. The ciphertext generation unit 25 and the ID group assigning unit 27 take as input the public parameters pk, the message m, and the identity $ID'^*$ and execute obHIBE_Enc to generate the ciphertext $ct_{ID'}$.

That is, the encryption device 20 generates the ciphertext $ct_{ID'}$ by executing the nbHIBE_Enc indicated in formula 209.

[Formula 209]

$$\text{nbHIBE\_Enc}(pk, m \in \mathbb{G}_T, ID' := (ID'_t := (ID'_{t,j})_{t\in[L],j\in[n]}):$$

$$\text{return } ct_{ID} := \text{obHIBE\_Enc }(pk, m \in \mathbb{G}_T,$$

$$ID^{\wedge\prime} := (ID_t^{\wedge\prime} := (ID_{t,j}^{\wedge\prime})_{t\in[L],j\in[n]}).$$

Description will be made on nbHIBE_Dec.

An acquisition unit 34 acquires the public parameters pk, the decryption key $sk_{ID}$, and the ciphertext $ct_{ID'}$ via the input/output interface 33.

A decryption unit 35 takes as input the public parameters pk, the decryption key $sk_{ID*}$ obtained by replacing ID in the decryption key $sk_{ID}$ by ID*, and the ciphertext $ct_{ID'*}$ obtained by replacing ID' of the ciphertext $ct_{ID'}$ by ID'*, and executes obHIBE Dec to generate the message m'.

That is, the decryption device 30 executes nbHIBE_Dec indicated in formula 210 to decrypt the ciphertext $ct_{ID'}$ by the decryption key $sk_{ID}$.

[Formula 210]

$$\text{nbHIBE\_Dec}(pk, sk_{ID}, ct_{ID}):$$

$$\text{return obHIBE\_Dec }(pk, sk_{ID^{\wedge}}, ct_{ID^{\wedge}}).$$

Description will be made on nbHIBE Delegate.

The acquisition unit 44 acquires the public parameters pk and the decryption key $sk_{ID}$ via the input/output interface 43. The acquisition unit 44 also receives as input the identity $ID_{L+1} \in \{0, 1\}^n$ via the input/output interface 43.

The ID group assigning unit 45 and the low-level key generation unit 46 take the identity $ID_{L+1}$ as $(ID_{L+1,j})_{j\in[n]}$ and the decryption key $sk_{ID}$ as $sk_0$. For each integer j of $j \in [n]$, the ID group assigning unit 45 and the low-level key generation unit 46 take as input the public parameters pk, a decryption key $sk_{j-1}$, and an identity $ID_{L+1,j}$ and execute obHIBE_Delegate to generate a decryption key $sk_j$. The low-level key output unit 47 then outputs a decryption key $sk_n$ as a low-level decryption key $sk_{ID'}$.

That is, the decryption key generation unit 15 generates the low-level decryption key $sk_{ID'}$ by executing the nbHIBE_Delegate indicated in formula 211.

[Formula 211]

$$\text{nbHIBE\_Delegate}(\text{pk}, \text{sk}_{ID}, ID_{L+1} \in \{0,1\}^n):$$

$$\text{prase } ID_{L+1} \text{ as } (ID_{L+1,j})_{j\in[n]},$$

$$\text{iterate obHIBE\_Delegate } n\text{-times as:}$$

$$\text{sk}_0 := \text{sk}_{ID},$$

$$\text{for } j \in [n], \text{ sk}_j \xleftarrow{\ R\ } \text{obHIBE\_Delegate } (\text{pk}, \text{sk}_{j-1}, ID_{L+1,j} \in \{0,1\}),$$

$$ID' := (ID, ID_{L+1}) : \text{depth } L+1 \text{ hierarchical identities,}$$

$$\text{return sk}_{ID^*} := \text{sk}_n.$$

*** Effect of Embodiment 5 ***

As described above, the cryptographic system 1 according to Embodiment 5 implements the HIBE scheme using IPG. Therefore, it is possible to indicate security from the isogeny problem hardness.

The cryptographic system 1 according to Embodiment 5 generates a ciphertext $ct_\Gamma$ using the element $Y^\wedge$ which is a generation element converted by a key generation random $\tau_{t,}{}^1$ . Therefore, it is possible to indicate security from the pairing problem hardness.

Embodiment 6.

In Embodiment 6, high-security Boneh-Boyen type 1-bit HIBE will be described.

In Embodiment 6, description on matters that are identical with their counterparts of Embodiment 5 will be omitted, and differences from Embodiment 5 will be described.

*** Description of Operation ***

An operation of a cryptographic system 1 according to Embodiment 6 will be described referring to Fig. 5, Fig. 10, Figs. 19 to 23, Fig. 26, and Fig. 27. Operations of Embodiment 6 are equivalent to processes of methods and programs, as with Embodiment 5.

Setup algorithm according to Embodiment 6 will be described referring to Figs. 19 and 21.

(Step S51: IPG Generation Process)

A master key generation unit 14 receives as input a security parameter $1^\lambda$ and a value d $\geq$ 2, which is a hierarchical number, via an input/output interface 13. The master key generation unit 14 takes as input the received security parameter $1^\lambda$ and 4d and executes IPG generation algorithm $\text{Gen}^{IPG}$ ($1^\lambda$, 4d) to generate a master key pair of public parameters $\text{pk}^{IPG}$ and a master secret key $\text{msk}^{IPG}$ indicated in formula 212.

[Formula 212]

$$(\mathrm{pk}^{\mathrm{IPG}} := (((\mathbb{G}_{t,\iota}^{L}, \hat{\mathbb{G}}_{t,\iota}^{L}, g_{t,\iota}^{L}, \hat{g}_{t,\iota}^{L}, e_{t,\iota}^{L}),$$

$$(\mathbb{G}_{t,\iota}^{R}, \hat{\mathbb{G}}_{t,\iota}^{R}, g_{t,\iota}^{R}, \hat{g}_{t,\iota}^{R}, e_{t,\iota}^{R}))_{t \in [d], \iota \in [0,1]},$$

$$\mathbb{G}_{T}),$$

$$\mathrm{msk}^{\mathrm{IPG}} := (\phi_{t,\iota}^{L}, \phi_{t,\iota}^{R})_{t \in [d], \iota \in [0,1]})$$

$$\xleftarrow{\quad R \quad} \mathrm{Gen}^{\mathrm{IPG}}(1^{\lambda}, 4dn)$$

(Step S52: Secret Information Generation Process)

The master key generation unit 14 generates secret information $\pi$ and secret information $\tau$ which are uniform randoms.

The master key generation unit 14 generates an element $h_T$ by setting the secret information $\pi$ and the secret information $\tau$ to an element $g_T$ of a group $G_T$, as indicated in formula 213.

[Formula 213]

$$h_T := g_T^{\pi\tau}$$

The master key generation unit 14 also generates an element $f^L_{t,\iota}$, an element $f^R_{t,\iota}$, and an element $u^{L\iota}$, for each integer t of t $\in$ [d] and each integer $\iota$ of $\iota \in [0, 1]$ using the secret information $\pi$ and the secret information $\tau$, as indicated in formula 214.

[Formula 214]

$$f_{t,\iota}^{L} := (g_{t,\iota}^{L})^{\pi},$$

$$\hat{f}_{t,\iota}^{R} := (\hat{g}_{t,\iota}^{R})^{\pi},$$

$$u_{\iota}^{L} := (g_{1,\iota}^{L})^{\pi\tau}$$

(Step S53: Key Generation Random Generation Process)

The master key generation unit 14 generates a key generation random $\sigma_{t,\iota}$, which is a uniform random, for each integer t of t $\in$ [d] and each integer i of i $\in$ [0, 1].

The master key generation unit 14 generates an element $h^{\wedge R}_{t,\iota}$ for each integer t of t $\in$ [d] and each integer i of i $\in$ [0, 1] by setting the key generation random $\sigma_{t,\iota}$ to an element $g^{\wedge R}_{t,\iota}$ of a group $G^{\wedge R}_{t,\iota}$, as indicated in formula 215.

[Formula 215]

$$\hat{h}_{t,\iota}^{R} := (\hat{g}_{t,\iota}^{R})^{\sigma_{t,\iota}}$$

The master key generation unit 14 also generates an element $h^L_{t,\iota}$ for each integer t of t $\in$ [d] and each integer $\iota$ of $\iota \in [0, 1]$ by setting the key generation random $\sigma_{t,\iota}$ to an element $g^L_{t,\iota}$ of a group $G^L_{t,\iota}$ as indicated in formula 216.

[Formula 216]

$$h_{t,\iota}^{L} := (g_{t,\iota}^{L})^{\sigma_{t,\iota}}$$

(Step S54: Master Key Generation Process)

Using the public parameters pk$^{IPG}$ generated in step S51; the element $h_T$, element $f^L_{t,\iota}$, element $f^{\wedge R}_{t,\iota}$, and element $u^{L\iota}$, generated in step S52; and the element $h^{\wedge R}_{t,\iota}$ and element $h^L_{t,\iota}$ generated in step S53, the master key generation unit 14 generates public parameters

$$\text{pk} := (((G^L_{t,\iota}, G^{\wedge L}_{t,\iota}, f^L_{t,\iota}, h^L_{t,\iota}, g^{\wedge L}_{t,\iota}, e^L_{t,\iota}), (G^R_{t,\iota}, G^{\wedge R}_{t,\iota}, g^R_t, f^{\wedge R}_{t,\iota}, h^{\wedge R}_{t,\iota,\iota}, e^R_{t,\iota}))_{t\in[d],\iota\in[0,1]}, G_T, h_T).$$

A key output unit 16 outputs the public parameters pk to an encryption device 20 and a decryption device 30 by outputting the public parameters pk to an external public server or the like via the input/output interface 13.

Using the element $u^{L\iota}$ generated in step S52, the master key generation unit 14 generates a master secret key $\text{msk} := (u^L_\iota)_{\iota\in[0,1]}$. The master key generation unit 14 also writes the generated master secret key msk to a storage device 12.

That is, the master key generation unit 14 generates master key pair by executing the Setup algorithm indicated in formula 217.

[Formula 217]

$$\text{Setup}(1^\lambda, d):$$

$$(\text{pk}^{\text{IPG}} := (((\mathbb{G}_{t,\iota}^L, \hat{\mathbb{G}}_{t,\iota}^L, g_{t,\iota}^L, \hat{g}_{t,\iota}^L, e_{t,\iota}^L),$$

$$(\mathbb{G}_{t,\iota}^R, \hat{\mathbb{G}}_{t,\iota}^R, g_{t,\iota}^R, \hat{g}_{t,\iota}^R, e_{t,\iota}^R))_{t \in [d], \iota \in [0,1]},$$

$$\mathbb{G}_T),$$

$$\text{msk}^{\text{IPG}} := ((\phi_{t,\iota}^L, \phi_{t,\iota}^R)_{t \in [d], \iota \in [0,1]})$$

$$\xleftarrow{\quad R \quad} \text{Gen}^{\text{IPG}}(1^\lambda, 4dn),$$

$$\text{for } t \in [d], \iota \in [0,1]$$

$$\pi, \tau, \sigma_{t,\iota} \xleftarrow{\quad U \quad} \mathbb{F}_q,$$

$$f_{t,\iota}^L := (g_{t,\iota}^L)^\pi, \quad \hat{f}_{t,\iota}^R := (\hat{g}_{t,\iota}^R)^\pi, \quad u_\iota^L := (g_{1,\iota}^L)^{\pi\tau},$$

$$\hat{h}_{t,\iota}^R := (\hat{g}_{t,\iota}^R)^{\sigma_{t,\iota}}, \quad h_{t,\iota}^L := (g_{t,\iota}^L)^{\sigma_{t,\iota}},$$

$$h_T := g_T^{\pi\tau}$$

$$\text{return pk} := (((\mathbb{G}_{t,\iota}^L, \hat{\mathbb{G}}_{t,\iota}^L, f_{t,\iota}^L, h_{t,\iota}^L, \hat{g}_{t,\iota}^L, e_{t,\iota}^L),$$

$$(\mathbb{G}_{t,\iota}^R, \hat{\mathbb{G}}_{t,\iota}^R, g_{t,\iota}^R, \hat{f}_{t,\iota}^R, \hat{h}_{t,\iota}^R, e_{t,\iota}^R))_{t \in [d], \iota \in [0,1]}, \mathbb{G}_T, h_T),$$

$$\text{msk} := (u_\iota^L)_{\iota \in [0,1]}.$$

KeyGen algorithm according to Embodiment 6 will be described referring to Figs. 19 and 22.

(S61: ID Receipt Process)

The decryption key generation unit 15 receives as input an identity ID of a user who uses a decryption key $sk_{ID}$, via the input/output interface 13. The identity ID is inputted by, for example, a user of the key generation device 10 via an input device.

Assume that identity ID := $(ID_t)_{t \in [L]}$. Note that L < d. Also, each $ID_t$ is 0 or 1.

(Step S62: ID Group Assigning Process)

An ID group assigning unit 17 assigns $ID_t$ for each integer t of t $\in$ [L] to a group $G^L_{t,IDt}$ and a group $G^R_{t,IDt}$. The ID group assigning unit 17 takes a direct product of the group $G^L_{t,IDt}$ for each integer t of t $\in$ [L] as an ID group $G^L_{ID}$, and a direct product of the group $G^R_{t,IDt}$ for each integer t of t $\in$ [L] as an ID group $G^R_{ID}$. Namely, the ID group assigning unit 17 generates the ID group $G^L_{ID}$ and the ID group $G^R_{ID}$, as indicated in formula 218.

[Formula 218]

$$\mathbb{G}_{ID}^{L} := \mathbb{G}_{1,ID_1}^{L} \times \cdots \times \mathbb{G}_{L,ID_L}^{L},$$

$$\mathbb{G}_{ID}^{R} := \mathbb{G}_{1,ID_1}^{R} \times \cdots \times \mathbb{G}_{L,ID_L}^{R},$$

The ID group assigning unit 17 generates an element $g_{ID}^{L}$, an element $f_{ID}^{L}$, an element $h_{ID}^{L}$, and an element $g_{ID}^{R}$, as indicated in formula 219.

[Formula 219]

$$g_{ID}^{L} := (g_{t,ID_t}^{L}) \in \mathbb{G}_{ID}^{L},$$

$$f_{ID}^{L} := (f_{t,ID_t}^{L}) \in \mathbb{G}_{ID}^{L},$$

$$h_{ID}^{L} := (h_{t,ID_t}^{L}) \in \mathbb{G}_{ID}^{L},$$

$$g_{ID}^{R} := (g_{t,ID_t}^{R}) \in \mathbb{G}_{ID}^{R}$$

(Step S63: Distributed Information Generation Process)

A decryption key generation unit 15 generates distributed information $\vec{\tau}$, as indicated in formula 220.

[Formula 220]

$$\vec{\tau} := (\tau_t) \xleftarrow{\;U\;} \{\sum_{t\in[L]} \tau_t = 0\}$$

(Step 64: Key Element Generation Process)

The decryption key generation unit 15 generates a key element $k := \{v_{ID}^{L} \cdot F^{L}(ID)^{\vec{r}}, (g_{ID}^{R})\}$ by employing the distributed information $\vec{\tau}$ generated in step S63 and a uniform random $\vec{r} := (r_t)_{t\in[L]}$ for the element $g_{ID}^{L}$, element $f_{ID}^{L}$, element $h_{ID}^{L}$, and element $g_{ID}^{R}$ generated in step S62, as indicated in formula 221.

[Formula 221]

$$F^L(ID) := (f_{ID}^L)^{ID} \cdot h_{ID}^L \in \mathbb{G}_{ID}^L,$$

$$u_{ID_1}^{+L} := (u_{ID_1}^L, 1, \ldots, 1) \in \mathbb{G}_{ID},$$

$$v_{ID}^L := u_{ID_1}^{+L} \cdot (g_{ID}^L)^{\vec{r}},$$

$$\vec{r} := (r_t) \xleftarrow{\ U\ } \mathbb{F}_q^L,$$

$$k := (v_{ID}^L \cdot F^L(ID)^{\vec{r}}, (g_{ID}^R)^{\vec{r}}) \in \mathbb{G}_{ID}^L \times \mathbb{G}_{ID}^R$$

(Step S65: Key Output Process)

The key output unit 16 outputs the decryption key $sk_{ID}$ including the identity ID received in step S61 and the key element k generated in step S64 to the decryption device 30 via the input/output interface 13.

That is, the decryption key generation unit 15 generates the decryption key $sk_{ID}$ by executing the KeyGen algorithm indicated in formula 222.

[Formula 222]

$$\mathrm{KeyGen}(\mathrm{pk}, \mathrm{sk}, ID := (ID_t)_{t \in [L]}):$$

/* ID-group setup */

$$\mathbb{G}^L_{ID} := \mathbb{G}^L_{1,ID_1} \times \cdots \times \mathbb{G}^L_{L,ID_L},$$

$$\mathbb{G}^R_{ID} := \mathbb{G}^R_{1,ID_1} \times \cdots \times \mathbb{G}^R_{L,ID_L},$$

$$g^L_{ID} := (g^L_{t,ID_t}) \in \mathbb{G}^L_{ID},$$

$$f^L_{ID} := (f^L_{t,ID_t}) \in \mathbb{G}^L_{ID},$$

$$h^L_{ID} := (h^L_{t,ID_t}) \in \mathbb{G}^L_{ID},$$

$$g^R_{ID} := (g^R_{t,ID_t}) \in \mathbb{G}^R_{ID},$$

/* Group element encoding */

$$\vec{\tau} := (\tau_t) \xleftarrow{U} \{\textstyle\sum_{t \in [L]} \tau_t = 0\},$$

$$F^L(ID) := (f^L_{ID})^{ID} \cdot h^L_{ID} \in \mathbb{G}^L_{ID},$$

$$u^{+L}_{ID_1} := (u^L_{ID_1}, 1, \ldots, 1) \in \mathbb{G}_{ID},$$

$$v^L_{ID} := u^{+L}_{ID_1} \cdot (g^L_{ID})^{\vec{\tau}},$$

$$\vec{r} := (r_t) \xleftarrow{U} \mathbb{F}^L_q,$$

$$k := (v^L_{ID} \cdot F^L(ID)^{\vec{r}}, (g^R_{ID})^{\vec{r}}) \in \mathbb{G}^L_{ID} \times \mathbb{G}^R_{ID},$$

$$\mathrm{return}\ \mathrm{sk}_{ID} := (ID, k).$$

Enc algorithm according to Embodiment 6 will be described referring to Figs. 20 and 23.

(Step S71: Acquisition Process)

An acquisition unit 24 acquires, via an input/output interface 23, the public parameters pk generated by a key generation device 10. The acquisition unit 24 also receives as input a message m being an encryption target and an identity ID' being a decryption condition. The message m and the identity ID' are inputted by, for example, a user of the encryption device 20 via the input device.

Assume that identity ID' := $(ID'_t)_{t \in [L]}$. Note that L < d. Also, each ID't is 0 or 1.

(Step S72: ID Group Assigning Process)

An ID group assigning unit 27 assigns $ID'_t$ for each integer t of $t \in [L]$ to a group $G^{\wedge L}_{t,IDt}$ and a group $G^{\wedge R}_{t,IDt}$. The ID group assigning unit 27 takes a direct product of a group $G^{\wedge L}_{t,ID't}$ for each integer t of $t \in [L]$ as an ID group $G^{\wedge L}_{ID}$ and a direct product of a group $G^{\wedge R}_{t,ID't}$ for each integer t of $t \in [L]$ as an ID group $G^{\wedge R}_{ID}$. Namely, the ID group assigning unit 27 generates the ID group $G^{\wedge L}_{ID}$ and the ID group $G^{\wedge R}_{Id}$, as indicated in formula 223.

[Formula 223]

$$\hat{\mathbb{G}}^L_{ID} := \hat{\mathbb{G}}^L_{1,ID_1} \times \cdots \times \hat{\mathbb{G}}^L_{L,ID_L},$$

$$\hat{\mathbb{G}}^R_{ID} := \hat{\mathbb{G}}^R_{1,ID_1} \times \cdots \times \hat{\mathbb{G}}^R_{L,ID_L},$$

The ID group assigning unit 27 generates an element $g^{\wedge L}_{ID}$, an element $f^{\wedge R}_{ID}$, and an element $h^{\wedge R}_{ID}$, as indicated in formula 224.

[Formula 224]

$$\hat{g}^L_{ID} := (\hat{g}^L_{t,ID_t}) \in \hat{\mathbb{G}}^L_{ID},$$

$$\hat{f}^R_{ID} := (\hat{f}^R_{t,ID_t}) \in \mathbb{G}^R_{ID},$$

$$\hat{h}^R_{ID} := (\hat{h}^R_{t,ID_t}) \in \mathbb{G}^R_{ID}$$

(Step S73: Ciphertext Generation Process)

A ciphertext generation unit 25 generates elements of a ciphertext $ct_{ID}$ using the public parameters pk acquired in step S71 and the element $g^{\wedge L}_{ID}$, element $f^{\wedge R}_{ID}$, and element $h^{\wedge R}_{ID}$ which are generated in step S72. The ciphertext generation unit 25 generates the elements of the ciphertext $ct_{ID}$ using a generation element of an element X of the group $G_T$ and a generation element of an element $Y^{\wedge}$ of a group $G^{\wedge}_t$. The element X refers to the element $h_T$ included in the public parameters pk. The element $Y^{\wedge}$ refers to the element $g^{\wedge L}_{ID}$, element $f^{\wedge R}_{ID}$, and element $H^{\wedge R}_{ID}$ which are generated in step S72.

The ciphertext generation process includes processes of step S731 to step S733.

(Step S731: Conversion Information Generation Process)

A conversion information generation unit 251 generates an encryption random $\zeta$ which is a uniform random.

Using the element $h_T$ and the encryption random $\zeta$, the conversion information generation 251 generates conversion information z, as indicated in formula 225.

[Formula 225]

$$z := h_T^{\zeta}$$

(Step S732: First Cipher Element Generation Process)

A first cipher element generation unit 252 generates a cipher element $c_T$ which is an element of the ciphertext $ct_{ID'}$ by setting the message m to the conversion information z generated in step S731, as indicated in formula 226.

[Formula 226]

$$c_T := z \cdot m$$

(Step S733: Second Cipher Element Generation Process)

A second cipher element generation unit 253 generates a cipher element $c := \{(g^{\wedge L}{}_{ID})^{\zeta}, F^{\wedge R}(ID)^{\zeta}\}$ which is an element of the ciphertext $ct_{ID'}$ by setting the encryption random $\zeta$ to the element $g^{\wedge L}{}_{ID}$, element $f^{\wedge R}{}_{ID}$, and element $h^{\wedge R}{}_{ID}$ which are each the element $Y^{\wedge}$, as indicated in formula 227.

[Formula 227]

$$\hat{F}^R(ID) := (\hat{f}_{ID}^R)^{ID} \cdot \hat{h}_{ID}^R \in \hat{\mathbb{G}}_{ID}^R,$$

$$\zeta \xleftarrow{\quad U \quad} \mathbb{F}_q,$$

$$c := ((\hat{g}_{ID}^L)^{\zeta}, \hat{F}^R(ID)^{\zeta}) \in \hat{\mathbb{G}}_{ID}^L \times \hat{\mathbb{G}}_{ID}^R$$

(Step S74: Ciphertext Output Process)

A ciphertext output unit 26 outputs the ciphertext $ct_{ID'}$ having, as cipher elements, the identity ID' received in step S71 and the cipher elements $c_T$ and c generated in step S73, to the decryption device 30 via the input/output interface 23.

That is, the encryption device 20 generates the ciphertext $ct_{ID'}$ by executing the Enc algorithm indicated in formula 228.

[Formula 228]

$$\mathrm{Enc}(\mathrm{pk}, m, ID' := (ID'_t)_{t\in[L]}):$$

/* ID-group setup */

$$\hat{\mathbb{G}}^L_{ID} := \hat{\mathbb{G}}^L_{1,ID_1} \times \cdots \times \hat{\mathbb{G}}^L_{L,ID_L},$$

$$\hat{\mathbb{G}}^R_{ID} := \hat{\mathbb{G}}^R_{1,ID_1} \times \cdots \times \hat{\mathbb{G}}^R_{L,ID_L},$$

$$\hat{g}^L_{ID} := (\hat{g}^L_{t,ID_t}) \in \hat{\mathbb{G}}^L_{ID},$$

$$\hat{f}^R_{ID} := (\hat{f}^R_{t,ID_t}) \in \hat{\mathbb{G}}^R_{ID},$$

$$\hat{h}^R_{ID} := (\hat{h}^R_{t,ID_t}) \in \hat{\mathbb{G}}^R_{ID},$$

/* Group element encoding */

$$\hat{F}^R(ID) := (\hat{f}^R_{ID})^{ID} \cdot \hat{h}^R_{ID} \in \hat{\mathbb{G}}^R_{ID}, \quad \zeta \xleftarrow{U} \mathbb{F}_q,$$

$$c := ((\hat{g}^L_{ID})^\zeta, \hat{F}^R(ID)^\zeta) \in \hat{\mathbb{G}}^L_{ID} \times \hat{\mathbb{G}}^R_{ID},$$

$$z := h^\zeta_T, \quad c_T := z \cdot m,$$

$$\mathrm{return~ct}_{ID} := (ID',c,c_T).$$

Dec algorithm according to Embodiment 6 will be described referring to Figs. 5 and 10.
Processes of step S41 and step S42 and processes of step S44 and step S45 are the same as those in Embodiment 5.

(Step S43: Decryption Process)

A decryption unit 35 generates a message m' by decrypting the ciphertext $ct_{ID'}$ by the decryption key $sk_{ID}$ received in step S41.
The decryption process includes processes of step S431 and step S432.

(Step S431: Conversion Information Generation Process)

A conversion information generation unit 351 generates conversion information z' using the element $k := \{v^L_{ID} \cdot F^L(ID)^{r\rightarrow}, (g^R_{ID})\}$ included in the decryption key $sk_{ID}$ and the cipher element $c := \{(g^{\wedge L}_{ID})^\zeta, F^{\wedge R}(ID)^\zeta\}$ included in the ciphertext $ct_{ID'}$, as indicated in formula 229. Note that $k^L := {}^L_{ID} \cdot F^L(ID)^{R\rightarrow}$ and that $k^R := (g^R_{ID})$. Also note that $c^L := (g^{\wedge L}_{ID})^\zeta$ and that $c^R := F^{\wedge R}(ID)^\zeta$.

[Formula 229]

$$k := (v_{ID}^L \cdot F^L(ID)^{\vec{r}}, (g_{ID}^R)^{\vec{r}}),$$

$$k^L := v_{ID}^L \cdot F^L(ID)^{\vec{r}}, \quad k^R := (g_{ID}^R)^{\vec{r}},$$

$$c := ((\hat{g}_{ID}^L)^{\zeta}, \hat{F}^R(ID)^{\zeta}),$$

$$c^L := (\hat{g}_{ID}^L)^{\zeta}, \quad c^L := \hat{F}^R(ID)^{\zeta},$$

$$z' := \frac{e_{ID}^L(k^L, c^L)}{e_{ID}^R(k^R, c^R)}$$

Since formula 230 holds, if the decryption key $sk_{ID}$ can decrypt the ciphertext $ct_{ID'}$, then the conversion information z' and the conversion information z are identical.

[Formula 230]

$$\frac{e_{ID}^L(k^L, c^L)}{e_{ID}^R(k^R, c^R)}$$

$$= \frac{e_{ID}^L(v_{ID}^L \cdot F^L(ID)^{\vec{r}}, (\hat{g}_{ID}^L)^{\varsigma})}{e_{ID}^R((g_{ID}^R)^{\vec{r}}, \hat{F}^R(ID)^{\varsigma})}$$

$$= e_{ID}^L(v_{ID}^L, (\hat{g}_{ID}^L)^{\varsigma})$$

$$= e_{ID}^L(u_{ID_1}^{+L}(g_{ID}^L)^{\vec{\tau}}, (\hat{g}_{ID}^L)^{\varsigma})$$

$$= e_{ID}^L(u_{ID_1}^{+L}, (\hat{g}_{ID}^L)^{\varsigma}) \cdot e_{ID}^L((g_{ID}^L)^{\vec{\tau}}, (\hat{g}_{ID}^L)^{\varsigma})$$

$$= e_{1,ID_1}^L(u_{ID_1}^{+L}, \hat{g}_{1,ID_1}^L)^{\varsigma} \cdot e_0(g_0, \hat{g}_0)^{\varsigma \sum_{j \in [n]} \tau_j}$$

$$= e_{1,ID_1}^L((g_{1,ID_1}^L)^{\pi\tau}, \hat{g}_{1,ID_1}^L)^{\varsigma}$$

$$= (g_T^{\pi\tau})^{\varsigma}$$

$$= h_T^{\varsigma}$$

$$= z$$

(Step S432: Message Generation Process)

A message generation unit 352 generates the message m' using the conversion information z' generated in step S431 and the cipher element $c_T$ included in the ciphertext $ct_{ID'}$, as indicated in formula 231.

[Formula 231]

$$m' := c_T \cdot (z')^{-1}$$

That is, the decryption device 30 executes the Dec algorithm indicated in formula 232 to decrypt the ciphertext $ct_{ID'}$ by the decryption key $sk_{ID}$.

[Formula 232]

$$\mathrm{Dec}(\mathrm{pk}, \mathrm{sk}_{ID}, \mathrm{ct}_{ID}):$$

$$\mathrm{if}\ ID = ID'$$

$$k^L := v_{ID}^L \cdot F^L(ID)^{\vec{r}}, \ k^R := (g_{ID}^R)^{\vec{r}},$$

$$c^L := (\hat{g}_{ID}^L)^{\zeta}, \ c^L := \hat{F}^R(ID)^{\zeta},$$

$$z' := \frac{e_{ID}^L(k^L, c^L)}{e_{ID}^R(k^R, c^R)}, \ m' := c_T \cdot (z')^{-1}$$

$$\mathrm{return}\ m',$$

$$\mathrm{otherwise,\ return}\ \perp.$$

Delegate algorithm according to Embodiment 6 will be described referring to Figs. 26 and 27.
Delegate algorithm is executed by a key delegation device 40.

(Step S81: Acquisition Process)

An acquisition unit 44 acquires, via an input/output interface 43, the public parameters pk generated by the key generation device 10 and the decryption key $\mathrm{sk}_{ID} := (ID, k^L, k^R)$ for which a low-level key is to be generated. Note that $k^L := {}^L_{ID} \cdot F^L(ID)^{\vec{r}}$ and that $k^R := (g^R_{ID})$. The acquisition unit 44 also receives as input an identity $ID_{L+1} \in \{0, 1\}$ of a user who uses a low-level decryption key $\mathrm{sk}_{ID'}$ of the decryption key $\mathrm{sk}_{ID}$, via the input/output interface 43.

(Step S82: ID Group Assigning Process)

An ID group assigning unit 45 takes $ID' := (ID, ID_{L+1})$. The ID group assigning unit 45 also generates an ID group $G^L_{ID'}$ and an ID group $G^R_{ID'}$, as indicated in formula 233.

[Formula 233]

$$\mathbb{G}^L_{ID*} := \mathbb{G}^L_{ID} \times \mathbb{G}^L_{L+1, ID_{L+1}},$$

$$\mathbb{G}^R_{ID*} := \mathbb{G}^R_{ID} \times \mathbb{G}^R_{L+1, ID_{L+1}}$$

The ID group assigning unit 45 generates an element $k^{+L}$, an element $g^L_{ID'}$, an element $k^{+R}$, and an element $g^R_{ID'}$, as indicated in formula 234.

[Formula 234]

$$k^{+L} := (k^L, 1), \quad g_{ID^*}^L := (g_{ID}^L, g_{L+1,ID_{L+1}}^L) \in \mathbb{G}_{ID^*}^L,$$

$$k^{+R} := (k^R, 1), \quad g_{ID^*}^R := (g_{ID}^R, g_{L+1,ID_{L+1}}^R) \in \mathbb{G}_{ID^*}^R$$

(Step S83: Distributed Information Generation Process)

A low-level key generation unit 46 generates distributed information $\tau^{\rightarrow}$', as indicated in formula 235.

[Formula 235]

$$\vec{\tau}' := (\tau_t') \xleftarrow{\ U\ } \{\sum\nolimits_{t \in [L+1]} \tau_t' = 0\} \in \mathbb{F}_q^{L+1}$$

(Step 84: Key Element Generation Process)

The low-level key generation unit 46 generates the key element k := {k$^L$, k$^R$} by setting the distributed information $\tau^{\rightarrow}$' generated in step S83 and a uniform random r$^{\rightarrow}$" to the element element k$^{+L}$, element g$^L$$_{\text{ID}'}$, element k$^{+R}$, and element g$^R$$_{\text{iD}'}$ which are generated in step S82, as indicated in Formula 236.

[Formula 236]

$$k'^L := k^{+L} \cdot (g_{ID^*}^L)^{\vec{r}'},$$

$$k'^R := k^{+R} \cdot (g_{ID^*}^R)^{\vec{r}'}$$

(Step S85: Key Output Process)

A low-level key output unit 47 outputs the low-level decryption key sk$_{\text{ID}'}$ including the identity ID' and the key element k which is generated in step S84 to the decryption device 30 via the input/output interface 13.
That is, the decryption key generation unit 15 generates the low-level decryption key $_S$k$_{\text{ID}'}$ by executing the Delegate algorithm indicated in formula 237.

[Formula 237]

$$\text{Delegate}(pk, sk_{ID}, ID_{L+1} \in \{0,1\}):$$

/* ID-group setup */

$$ID^* := (ID, ID_{L+1}),$$

$$\mathbb{G}^L_{ID^*} := \mathbb{G}^L_{ID} \times \mathbb{G}^L_{L+1,ID_{L+1}}, \quad \mathbb{G}^R_{ID^*} := \mathbb{G}^R_{ID} \times \mathbb{G}^R_{L+1,ID_{L+1}}$$

$$k^{+L} := (k^L, 1), \quad g^L_{ID^*} := (g^L_{ID}, g^L_{L+1,ID_{L+1}}) \in \mathbb{G}^L_{ID^*},$$

$$k^{+R} := (k^R, 1), \quad g^R_{ID^*} := (g^R_{ID}, g^R_{L+1,ID_{L+1}}) \in \mathbb{G}^R_{ID^*},$$

/* Group element encoding */

$$\vec{\tau}' := (\tau'_t) \xleftarrow{\quad U \quad} \{\sum_{t \in [L+1]} \tau'_t = 0\} \in \mathbb{F}^{L+1}_q,$$

$$\vec{r}' := (r'_t) \xleftarrow{\quad U \quad} \mathbb{F}^{L+1}_q,$$

$$k'^L := k^{+L} \cdot (g^L_{ID^*})^{\vec{r}'}, \quad k'^R := k^{+R} \cdot (g^R_{ID^*})^{\vec{r}'},$$

$$k_{ID^*} := (k'^L, k'^R)$$

$$\text{return } sk_{ID^*} := (ID^*, k_{ID^*}).$$

*** Effect of Embodiment 6 ***

As described above, the cryptographic system 1 according to Embodiment 6 implements the HIBE scheme using IPG. Therefore, it is possible to indicate security from the isogeny problem hardness.

The cryptographic system 1 according to Embodiment 6 generates a ciphertext $ct_\Gamma$ using the element $Y^\wedge$ which is a generation element converted by the key generation random $\sigma_{t,}{}^\iota$ . Therefore, it is possible to indicate security from the pairing problem hardness.

**Reference Signs List**

1: cryptographic system; 10: key generation device; 11: processor; 12: storage device; 13: input/output interface; 14: master key generation unit; 15: decryption key generation unit; 16: key output unit 16; 17: ID group assigning unit; 18: electronic circuit; 20: encryption device; 21: processor; 22: storage device; 23: input/output interface; 24: acquisition unit; 25: ciphertext generation unit; 26: ciphertext output unit; 27: ID group assigning unit; 28: electronic circuit; 30: decryption device; 31: processor; 32: storage device; 33: input/output interface; 34: acquisition unit; 35: decryption unit; 36: message output unit; 38: electronic circuit; 40: key delegation device; 41: processor; 42: storage device; 43: input/output interface; 44: acquisition unit; 45: ID group assigning unit; 46: low-level key generation unit; 47: low-level key output unit; 48: electronic circuit

**Claims**

1. An encryption device in a cryptographic system that uses a group $G_0$, a group $G_t$ associated with the group $G_0$, a group $G^\wedge_0$, a group $G^\wedge_t$ associated with the group $G^\wedge_0$, and a group $G_T$ associated with the group $G_0$ and the group $G^\wedge_0$ by pairing operation $e_0$ and associated with the group $G_t$ and the group $G^\wedge_t$ by pairing operation $e_t$, the encryption device comprising

   a ciphertext generation unit to generate a ciphertext ct using an element X of the group $G_T$ and an element $Y^\wedge$ of the group $G^\wedge_t$, at least either one of the element X and the element $Y^\wedge$ being generated through conversion of a generator by a key generation random,
   wherein the ciphertext generation unit comprises:

   a first cipher element generation unit to generate a cipher element $c_T$ which is an element of the ciphertext ct, by setting a message m to conversion information z in which an encryption random $\zeta$ is set to the element X; and
   a second cipher element generation unit to generate a cipher element c which is an element of the ciphertext ct, by setting the encryption random $\zeta$ to the element $Y^\wedge$.

2. The encryption device according to claim 1,

   wherein the first cipher element generation unit generates the cipher element $c_T$ indicated in formula 1, and
   wherein the second cipher element generation unit generates the cipher element c indicated in formula 2.

[Formula 1]

$$c_T := z \cdot m$$

where

$$z := e_0(h_0, \hat{g}'_0)^\zeta,$$

$$X := e_0(h_0, \hat{g}'_0),$$

$$\hat{g}'_0 := \hat{g}_0^\gamma,$$

$\gamma$ is the key generation random,
$\hat{g}_0$ is an element of the group $G^\wedge_0$, and
$h_0$ is an element of the group $G_0$

[Formula 2]

$$c := \hat{g}_1^\zeta$$

where

$\hat{g}_1$ is an element $Y^\wedge$ of the group $G^\wedge_1$

3. The encryption device according to claim 1,
   wherein the cryptographic system uses the group $G_t$ and the group $G^\wedge_t$ for each integer t of t = 1, ..., w concerning an integer w of 2 or more,
   wherein the encryption device further comprises an ID group assigning unit to assign an attribute $x_j$ for each integer j of j = 1, ..., n concerning an integer n of 2 or more to w or less, to a different group in the group $G^\wedge_t$, and
   wherein the second cipher element generation unit generates the cipher element c by setting the encryption random $\zeta$ to an element in a group assigned to the attribute $x_j$ for each integer j of j = 1, ..., n by the ID group assigning unit.

4. The encryption device according to claim 3,
   wherein the cryptographic system uses, as the group $G_t$ and the group $G^\wedge_t$, a group $G_{t,\iota}$ and a group $G^\wedge_{t,\iota}$ for each integer t of t = 1, ..., n and each integer t of t = 0, 1,
   wherein the ID group assigning unit assigns an identity $ID'_j$ to the group $G^\wedge_{t,\iota}$ of t = j and $\iota = ID'_j$, the identity $ID'_j$ being the attribute $x_j$ for each integer j of j = 1, ..., n and being 0 or 1,
   wherein first cipher element generation unit generates the cipher element $c_T$ indicated in formula 3, and
   wherein the second cipher element generation unit generates the cipher element c indicated in formula 4.

[Formula 3]

$$c_T := z \cdot m$$

where

$$z := h_T^\zeta,$$

$$X := h_T := g_T^{s_0},$$

$g_T$ is an element of the group $G_T$, and
$s_0$ is a random

[Formula 4]

$$c := \hat{h}_{ID}^\zeta$$

where

$$\hat{h}_{ID} := (\hat{h}_{j,ID_j}),$$

$$\hat{h}_{j,\iota} := \hat{g}_{j,\iota}^{\tau_{j,\iota}},$$

$\hat{g}_{j,\iota}$ is an element $Y^\wedge$ of the group $G^\wedge_{t,\iota}$, and

$\tau_{j,\iota}$ is the key generation random

**5.** The encryption device according to claim 3,
wherein the cryptographic system uses, as the group $G_t$ and the group $G^\wedge_t$, a group $G_t$ and a group $G^\wedge_t$ for each integer t of t = 1, ..., d concerning an integer d of d = w,
wherein the ID group assigning unit assigns an attribute $x_t$ included in a set of attributes, $\Gamma$, to the group $G^\wedge_t$,
wherein first cipher element generation unit generates the cipher element $c_T$ indicated in formula 5, and
wherein the second cipher element generation unit generates the cipher element c indicated in formula 6.

[Formula 5]

$$c_T := z \cdot m$$

where

$$z := h_T^\varsigma,$$

$$X := h_T := g_T^{s_0},$$

$g_T$ is an element of the group $G_T$, and
$s_0$ is a random

[Formula 6]

$$c := (c_t)_{t \in \Gamma},$$
$$c_t := \hat{h}_t^\varsigma \quad t \in \Gamma$$

where

$$\hat{h}_t := \hat{g}_t^{\tau_t},$$

$\hat{g}_t$ is an element $Y^\wedge$ of the group $G^\wedge_t$, and
$\tau_t$ is the key generation random

**6.** The encryption device according to claim 3,
wherein the cryptographic system uses, as the group $G_t$ and the group $G^\wedge_t$, a group $G_{t,j,\iota}$ and a group $G^\wedge_{t,j,\iota}$ for

each integer t of t = 1, ..., d concerning an integer d of d = w, each integer j of j = 1, ..., n, and each integer $\iota$ of $\iota = 0, 1$,
wherein the ID group assigning unit assigns an attribute $x_t$ included in a set of attributes, $\Gamma$, to the group $G^\wedge_t$,
wherein the first cipher element generation unit generates the cipher element $c_T$ indicated in formula 7, and
wherein the second cipher element generation unit generates the cipher element c indicated in formula 8.

[Formula 7]

$$c_T := z \cdot m$$

where

$$z := h_T^{\zeta},$$

$$X := h_T := g_T^{s_0},$$

$g_T$ is an element of the group $G_T$, and
$s_0$ is a random

[Formula 8]

$$c := (c_t)_{(t, x_t := (x_{t,j}) \in \{0,1\}) \in \Gamma},$$

$$c_t := \hat{h}_{t,x_t}^{\zeta} \quad t \in \Gamma$$

where

$$\hat{h}_{t,x_t} := (\hat{h}_{t,j,x_{t,j}})_{j \in [n]}$$

$$\hat{h}_{t,j,\iota} := \hat{g}_{t,j,\iota}^{\tau_{t,j,\iota}},$$

$\hat{g}_{t,j,\iota}$ is an element $Y^{\wedge}$ of the group $G^{\wedge}_{j,t,\iota}$ , and

$\tau_{t,j,\iota}$ is the key generation random

7. The encryption device according to claim 3,
wherein the cryptographic system uses, as the group $G_t$ and the group $G^{\wedge}_t$, a group $G^L_{t,\iota}$ and a group $G^R_{t,\iota}$ , and
a group $G^{\wedge L}_{t,\iota}$ and a group $G^{\wedge R}_{t,\iota}$ , for each integer t of t = 1, ..., d concerning an integer d of d = w and each integer $\iota$ of $\iota = 0, 1,$
wherein the ID group assigning unit assigns an identity ID' to a group $G^{\wedge L}_{t,\iota}$ and a group $G^{\wedge R}_{t,\iota}$ where t = j and
$\iota = \mathrm{ID}',$ the identity ID' being the attribute $x_j$ for each integer j of j = 1, ..., L concerning an integer L of 1 or more to d or less, the identity ID' being 0 or 1,
wherein the first cipher element generation unit generates the cipher element $c_T$ indicated in formula 9, and
wherein the second cipher element generation unit generates the cipher element c indicated in formula 10.

[Formula 9]

$$c_T := z \cdot m$$

where

$$z := h_{\overline{T}}^{\zeta},$$

$$X := h_T := g_{\overline{T}}^{\pi\tau},$$

$g_T$ is an element of the group $G_T$, and
$\pi, \tau$ are respectively randoms

[Formula 10]

$$c := (c^L, c^R),$$
$$c^L := (\hat{g}_{ID}^L)^{\zeta},$$
$$c^R := \hat{F}^R(ID)^{\zeta}$$

where

$$\hat{g}_{ID}^L := (\hat{g}_{t,ID_t}^L),$$

$$\hat{F}^R(ID) := (\hat{f}_{ID}^R)^{ID}\hat{h}_{ID}^R,$$

$$\hat{f}_{ID}^R := (\hat{f}_{t,ID_t}^R),$$

$$\hat{f}_{t,\iota}^R := (\hat{g}_{t,\iota}^R)^{\pi},$$

$$\hat{h}_{ID}^R := (\hat{h}_{t,ID_t}^R),$$

$$\hat{h}_{t,\iota}^R := (\hat{g}_{t,\iota}^R)^{\sigma_{t,\iota}},$$

$\hat{g}_{t,\iota}^L, \hat{g}_{t,\iota}^R$ ι are an element Y^ of the group G^L$_{t,\iota}$ and an element Y^ of the group G^R$_{t,\iota}$ , respectively, and

$\sigma_{t,\iota}$ is the key generation random

8. A decryption device in a cryptographic system that uses a group $G_0$, a group $G_t$ associated with the group $G_0$, a group G^$_0$, a group G^$_t$ associated with the group G^$_0$, and a group $G_T$ associated with the group $G_0$ and the group G^$_0$ by pairing operation $e_0$ and associated with the group $G_t$ and the group G^$_t$ by pairing operation $e_t$, the decryption device comprising:
a ciphertext acquisition unit to acquire a ciphertext ct which is generated using an element X of the group $G_T$ and an element Y^ of the group G^$_t$, at least either one of the element X and the element Y^ being generated through conversion of a generator by a key generation random, the ciphertext ct including a cipher element $c_T$ and a cipher element c, wherein in the cipher element $c_T$, a message m is set to conversion information z in which an encryption random $\zeta$ is set to the element X, and in the cipher element c, the encryption random $\zeta$ is set to the element Y^; and a decryption unit to generate conversion information z' from a decryption key sk and the cipher element c, and to generate a message m' from the conversion information z' and the cipher element $c_T$, the decryption key sk including a key element k which is an element of the group G$_t$ converted by the key generation random.

9. The decryption device according to claim 8,
wherein the ciphertext acquisition unit acquires the ciphertext ct including the cipher element $c_T$ and the cipher element c which are indicated in formula 11, and
wherein the decryption unit generates the conversion information z' and the message m' as indicated in formula 12.

[Formula 11]

$$c_T := z \cdot m,$$

$$c := \hat{g}_1^{\zeta}$$

where

$$z := e_0(h_0, \hat{g}_0')^{\zeta},$$

$$X := e_0(h_0, \hat{g}_0'),$$

$$\hat{g}_0' := \hat{g}_0^{\gamma},$$

$\gamma$ is the key generation random,
$\hat{g}_0$ is an element of the group G^$_0$,
$h_0$ is an element of the group G$_0$, and
$\hat{g}_1$ is an element Y^ of the group G^$_1$

[Formula 12]

$$z' := e_1(k, c),$$
$$m' := c_T \cdot (z')^{-1}$$

where

$$k := \phi_1(h_0^{\gamma})$$

10. The decryption device according to claim 8,
wherein the cryptographic system uses the group G$_t$ and the group G^$_t$ for each integer t of t = 1, ..., w concerning an integer w of 2 or more,

wherein in the cipher element c, for each integer j of j = 1, ..., n concerning an integer n of 2 or more to w or less, an attribute $x_j$ is assigned to a different group in the group $G^\wedge_t$, and the encryption random $\zeta$ is set to an element in a group to which the attribute $x_j$ for each integer j is assigned, and

wherein in the key element k, for each integer j' of j' = 1, ..., n concerning the integer n, an attribute $x_{j'}$ is assigned to a different group in the group $G_t$, and the encryption random $\zeta$ is set to an element in a group to which the attribute $x_{j'}$ for each integer j' is assigned.

**11.** The decryption device according to claim 10,

wherein the cryptographic system uses, as the group $G_t$ and the group $G^\wedge_t$, a group $G_{t,\iota}$ and a group $G^\wedge_{t,\iota}$ for each integer t of t = 1, ..., n and each integer $\iota$ of $\iota = 0, 1,$

wherein the ciphertext acquisition unit acquires the ciphertext ct including the cipher element $c_T$ and the cipher element c which are indicated in formula 13, and

wherein the decryption unit generates the conversion information z' and the message m' as indicated in formula 14.

[Formula 13]

$$c_T := z \cdot m,$$

$$c := \hat{h}_{ID}^{\zeta}$$

where

$$z := h_T^{\zeta},$$

$$X := h_T := g_T^{s_0},$$

$$\hat{h}_{ID} := (\hat{h}_{j,ID_j}),$$

$$\hat{h}_{j,\iota} := \hat{g}_{j,\iota}^{\tau_{j,\iota}},$$

$g_T$ is an element of the group $G_T$,

$s_0$ is a random,

$\hat{g}_{j,\iota}$ is an element $Y^\wedge$ of the group $G^\wedge_{t,\iota}$, and

$\tau_{j,\iota}$ is the key generation random

[Formula 14]

$$z' := e_1(k,c),$$

$$m' := c_T \cdot (z')^{-1}$$

where

$$k := h_{ID}^{\vec{s}}$$

$$h_{ID} := (h_{j,ID_j}),$$

$$h_{j,\iota} := g_{j,\iota}^{1/\tau_{j,\iota}},$$

$$\vec{s} := (s_j) \in [n],$$

$$s_0 = \sum_{j=1}^{n} s_j,$$

$g_{j,\iota}$ is an element of the group $G_{j,\iota}$

12. The decryption device according to claim 10,
    wherein the cryptographic system uses, as the group $G_t$ and the group $G^{\wedge}_t$, a group $G_t$ and a group $G^{\wedge}_t$ for each integer t of t = 1, ..., d concerning an integer d of d = w,
    wherein the ciphertext acquisition unit acquires the ciphertext ct including the cipher element $c_T$ and the cipher element c which are indicated in formula 15, and
    wherein the decryption unit generates the conversion information z' and the message m', as indicated in formula 16.

[Formula 15]

$$c_T := z \cdot m,$$
$$c := (c_t)_{t \in \Gamma},$$
$$c_t := \hat{h}_t^{\varsigma} \quad t \in \Gamma$$

where

$$z := h_T^{\varsigma},$$

$$X := h_T := g_T^{s_0},$$

$$\hat{h}_t := \hat{g}_t^{\tau_t},$$

$g_T$ is an element of the group $G_T$,
$\hat{s}_0$ is a random,
$\hat{g}_t$ is an element $Y^\wedge$ of the group $G^\wedge{}_t$, and
$\tau_t$ is the key generation random

[Formula 16]

$$z' := \prod{}_{t:=\rho(i)\in\Gamma} e_t(k_i, c_t)^{\sigma_i},$$
$$m' := c_T \cdot (z')^{-1}$$

where

$$k := (k_i)_{i\in[L]},$$

$$k_i := h_t^{s_i} \quad t := \rho(i),$$

$$h_t := g_t^{1/\tau_t},$$

$$s_i = M_i \cdot \vec{u},$$

$$\vec{1} \cdot \vec{u} = s_0,$$

$$\sum{}_{\rho(i)\in\Gamma} \sigma_i \cdot M_i = \vec{1},$$

$g_t$ is an element of the group $G_t$,
$M_i$ is an $L$-row vector, and
$L$ is an integer of 1 or more

13. The decryption device according to claim 10,

wherein the cryptographic system uses, as the group $G_t$ and the group $G^\wedge{}_t$, a group $G_{t,j,\iota}$ and a group $G^\wedge{}_{t,j,\iota}$ for

each integer t of t = 1, ..., d concerning an integer d of d = w, each integer j of j = 1, ..., n, and each integer $\iota$ of $\iota = 0, 1,$
wherein the ciphertext acquisition unit acquires the ciphertext ct including the cipher element $c_T$ and the cipher element c which are indicated in formula 17, and
wherein the decryption unit generates the conversion information z' and the message m', as indicated in formula 18.

[Formula 17]

$$c_T := z \cdot m,$$

$$c := (c_t)_{(t,x_t := (x_{t,j}) \in \{0,1\}) \in \Gamma},$$

$$c_t := \hat{h}_{t,x_t}^{\zeta} \quad t \in \Gamma$$

where

$$z := h_T^{\zeta},$$

$$X := h_T := g_T^{s_0},$$

$$\hat{h}_{t,x_t} := (\hat{h}_{t,j,x_{t,j}})_{j \in [n]}$$

$$\hat{h}_{t,j,\iota} := \hat{g}_{t,j,\iota}^{\tau_{t,j,\iota}},$$

$g_T$ is an element of the group $T_G$,
$s_0$ is a random,
$\hat{g}_{t,j,\iota}$ is an element $Y^\wedge$ of the group $G^\wedge_{t,j,\iota}$, and
$\tau_{t,j,\iota}$ is the key generation random

[Formula 18]

$$z' := \prod_{t := \rho(i) = (t,v_i) \in \Gamma} e_{t,v_i}(k_i, c_t)^{\sigma_i},$$

$$m' := c_T \cdot (z')^{-1}$$

where

$$k := (k_i)_{i \in [L]},$$

$$k_i := h_{t,v_i}^{\vec{s}_i} \quad t := \rho(i),$$

$$h_{t,v_i} := \left( h_{t,j,v_{i,j}} \right)_{j \in [n]},$$

$$h_{t,j,\iota} := \hat{g}_{t,j,\iota}^{1/\tau_{t,j,\iota}},$$

$$\vec{s}_i = M_i \cdot \vec{u},$$

$$\vec{s}_i := (s_{i,j})_{j \in [n]} \text{ such that } s_i = \sum_{j=1}^{n} s_{i,j},$$

$$\vec{1} \cdot \vec{u} = s_0,$$

$$\sum_{\rho(i) \in \Gamma} \sigma_i \cdot M_i = \vec{1},$$

$g_{t,j,}$ is an element of the group $G_{t,j,\iota}$,
$M_i$ is an $L$-row vector, and
$L$ is an integer of 1 or more

14. The decryption device according to claim 10,

wherein the cryptographic system uses, as the group $G_t$ and the group $G^{\wedge}_t$, a group $G^L_{t,\iota}$ and a group $G^R_{t,t}$, and a group $G^{\wedge L}_{t,\iota}$ and a group $G^{\wedge R}_{t,\iota}$, for each integer t of t = 1, ..., d concerning an integer d of d = w and each integer $\iota$ of $\iota = 0, 1,$

wherein the ciphertext acquisition unit acquires the ciphertext ct including the cipher element $c_T$ and the cipher element c which are indicated in formula 19, and

wherein the decryption unit generates the conversion information z' and the message m', as indicated in formula 20.

[Formula 19]

$$c_T := z \cdot m,$$
$$c := (c^L, c^R),$$
$$c^L := (\hat{g}_{ID}^L)^{\varsigma},$$
$$c^R := \hat{F}^R(ID)^{\varsigma}$$

where

$$z := h_T^{\varsigma},$$

$$X := h_T := g_T^{\pi \tau},$$

$$\hat{g}_{ID}^L := (\hat{g}_{t,ID_t}^L),$$

$$\hat{F}^R(ID) := (\hat{f}_{ID}^R)^{ID} \hat{h}_{ID}^R,$$

$$\hat{f}_{ID}^R := (\hat{f}_{t,ID_t}^R),$$

$$\hat{f}_{t,\iota}^R := (\hat{g}_{t,\iota}^R)^\pi,$$

$$\hat{h}_{ID}^R := (\hat{h}_{t,ID_t}^R),$$

$$\hat{h}_{t,\iota}^R := (\hat{g}_{t,\iota}^R)^{\sigma_{t,\iota}},$$

$$ID_t = 0 \text{ or } 1,$$

$g_T$ is an element of the group $G_T$,

$\pi, \tau$ are respectively randoms,

$\hat{g}_{t,\iota}^L, \hat{g}_{t,\iota}^R$ are an element Y^ of the group G^L$_{t,\iota}$ and an element Y^ of the group G^R$_{t,\iota}$, respectively, and $\iota$

$\sigma_{t,\iota}$ is the key generation random

[Formula 20]

$$z' := \frac{e_{ID}^L(k^L, c^L)}{e_{ID}^R(k^R, c^R)},$$

$$m' := c_T \cdot (z')^{-1}$$

where

$$k^L := v_{ID}^L \cdot F^L(ID)^{\vec{r}},$$

$$v_{ID}^L := u_{ID_1}^{+L}(g_{ID}^L)^{\vec{r}}, \quad u_{ID_1}^{+L} := (u_{ID_1}^L, 1, ..., 1), \quad u_t^L := (g_{1,\iota}^L)^{\pi \tau},$$

$$g_{ID}^{L} := (g_{t,ID_t}^{L}),$$

$$F^{L}(ID) := (f_{ID}^{L})^{ID} h_{ID}^{L}, \, f_{ID}^{L} := (f_{t,ID_t}^{L}), \, f_{t,ID_t}^{L} := (g_{t,\iota}^{L})^{\pi}$$

$$h_{ID}^{L} := (h_{t,ID_t}^{L}), \, h_{t,ID_t}^{L} := (g_{t,\iota}^{L})^{\sigma_{t,\iota}}$$

$$k^{R} := (g_{ID}^{R})^{\vec{r}},$$

$$g_{ID}^{R} := (g_{t,ID_t}^{R}),$$

$$g_{t,\iota}^{L}, \, g_{t,\iota}^{R}$$ are an element of the group $GL_{t,\iota}$ and an element of the group $GR_{t,\iota}$, respectively, and $\vec{r} := (r_t)_{t \in [L]}$ is a random

15. An encryption method in a cryptographic system that uses a group $G_0$, a group $G_t$ associated with the group $G_0$, a group $G^\wedge_0$, a group $G^\wedge_t$ associated with the group $G^\wedge_0$, and a group $G_T$ associated with the group $G_0$ and the group $G^\wedge_0$ by pairing operation $e_0$ and associated with the group $G_t$ and the group $G^\wedge_t$ by pairing operation $e_t$, the encryption method comprising
a ciphertext generation process of generating a ciphertext ct using an element X of the group $G_T$ and an element $Y^\wedge$ of the group $G^\wedge_t$, at least either one of the element X and the element $Y^\wedge$ being generated through conversion of a generator by a key generation random,
wherein the ciphertext generation process comprises:

a first cipher element generation process of generating a cipher element $c_T$ which is an element of the ciphertext ct, by setting a message m to conversion information z in which an encryption random $\zeta$ is set to the element X; and
a second cipher element generation process of generating a cipher element c which is an element of the ciphertext ct, by setting the encryption random $\zeta$ to the element $Y^\wedge$.

16. An encryption program in a cryptographic system that uses a group $G_0$, a group $G_t$ associated with the group $G_0$, a group $G^\wedge_0$, a group $G^\wedge_t$ associated with the group $G^\wedge_0$, and a group $G_T$ associated with the group $G_0$ and the group $G^\wedge_0$ by pairing operation $e_0$ and associated with the group $G_t$ and the group $G^\wedge_t$ by pairing operation $e_t$, the encryption program causing a computer to execute
a ciphertext generation process of generating a ciphertext ct using an element X of the group $G_T$ and an element $Y^\wedge$ of the group $G^\wedge_t$, at least either one of the element X and the element $Y^\wedge$ being generated through conversion of a generator by a key generation random,
wherein the ciphertext generation process comprises:

a first cipher element generation process of generating a cipher element $c_T$ which is an element of the ciphertext ct, by setting a message m to conversion information z in which an encryption random $\zeta$ is set to the element X; and
a second cipher element generation process of generating a cipher element c which is an element of the ciphertext ct, by setting the encryption random $\zeta$ to the element $Y^\wedge$.

17. A decryption method in a cryptographic system that uses a group $G_0$, a group $G_t$ associated with the group $G_0$, a group $G^\wedge_0$, a group $G^\wedge_t$ associated with the group $G^\wedge_0$, and a group $G_T$ associated with the group $G_0$ and the group $G^\wedge_0$ by pairing operation $e_0$ and associated with the group $G_t$ and the group $G^\wedge$ by pairing operation $e_t$, the decryption method comprising:

a ciphertext acquisition process of acquiring a ciphertext ct which is generated using an element X of the group $G_T$ and an element $Y^\wedge$ of the group $G^\wedge_t$, at least either one of the element X and the element $Y^\wedge$ being generated

through conversion of a generator by a key generation random, the ciphertext ct including a cipher element $c_T$ and a cipher element c, wherein in the cipher element $c_T$, a message m is set to conversion information z in which an encryption random $\zeta$ is set to the element X, and in the cipher element c, the encryption random $\zeta$ is set to the element Y^; and

a decryption process of generating conversion information z' from a decryption key sk and the cipher element c, and generating a message m' from the conversion information z' and the cipher element $c_T$, the decryption key sk including a key element k which is an element of the group $G_t$ converted by the key generation random.

18. A decryption program in a cryptographic system that uses a group $G_0$, a group $G_t$ associated with the group $G_0$, a group $G^\wedge_0$, a group $G^\wedge_t$ associated with the group $G^\wedge_0$, and a group $G_T$ associated with the group $G_0$ and the group $G^\wedge_0$ by pairing operation $e_0$ and associated with the group $G_t$ and the group $G^\wedge$ by pairing operation $e_t$, the decryption program causing a computer to execute:

a ciphertext acquisition process of acquiring a ciphertext ct which is generated using an element X of the group $G_T$ and an element Y^ of the group $G^\wedge_t$, at least either one of the element X and the element Y^ being generated through conversion of a generator by a key generation random, the ciphertext ct including a cipher element $c_T$ and a cipher element c, wherein in the cipher element $c_T$, a message m is set to conversion information z in which an encryption random $\zeta$ is set to the element X, and in the cipher element c, the encryption random $\zeta$ is set to the element Y^; and

a decryption process of generating conversion information z' from a decryption key sk and the cipher element c, and generating a message m' from the conversion information z' and the cipher element $c_T$, the decryption key sk including a key element k which is an element of the group $G_t$ converted by the key generation random.

## Fig. 1

$$\begin{array}{ccc}
\mathbb{G}_0 \times \hat{\mathbb{G}}_0 & \xrightarrow{\;\; e_0 \;\;} & \mathbb{G}_T \\
\end{array}$$

$$\mathbb{G}_0 \times \hat{\mathbb{G}}_0 \; \xrightarrow{\phi_1} \; \mathbb{G}_1 \times \hat{\mathbb{G}}_1 \quad \circlearrowleft \quad \xrightarrow{e_1}$$

$$\phi_d \searrow \qquad \vdots \qquad e_d$$

$$\mathbb{G}_d \times \hat{\mathbb{G}}_d$$

# Fig. 2

$1^\lambda$, ID → KEY GENERATION DEVICE (Setup) (KeyGen) — 10

pk, msk

ENCRYPTION DEVICE (Enc) — 20

m, ID′ →

pk

$ct_{ID'}$

DECRYPTION DEVICE (Dec) — 30

pk, $sk_{ID}$

m′ or ⊥

# Fig. 3

EP 3 648 395 A1

# Fig. 4

EP 3 648 395 A1

# Fig. 5

DECRYPTION DEVICE 30

PROCESSOR 31

ACQUISITION UNIT 34

DECRYPTION KEY ACQUISITION UNIT 341

CIPHERTEXT ACQUISITION UNIT 342

$pk, sk_{ID}, ct_{ID'}$

DECRYPTION UNIT 35

CONVERSION INFORMATION GENERATION UNIT 351

MESSAGE GENERATION UNIT 352

MESSAGE OUTPUT UNIT 36

$m'$ or $\perp$

INPUT/OUTPUT INTERFACE 33

$pk, sk_{ID}, ct_{ID'}$

$m'$ or $\perp$

STORAGE DEVICE 32

# Fig. 6

(Setup)

```
START
```

GENERATE PARAMETERS OF IPG — S11

GENERATE HASH FUNCTION H — S12

GENERATE KEY
GENERATION RANDOM — S13

GENERATE MASTER KEY PAIR
OF pk AND sk — S14

```
END
```

EP 3 648 395 A1

# Fig. 7

$$\mathbb{G}_0 \times \hat{\mathbb{G}}_0 \xrightarrow[\;e_0\;]{\text{ENCRYPTION}} \mathbb{G}_T$$

DECRYPTION KEY GENERATION $\quad \phi_1$

$\circlearrowleft$

$e_1$ DECRYPTION

$$\mathbb{G}_1 \times \hat{\mathbb{G}}_1$$

# Fig. 8

(KeyGen)

```
START
```

↓ S21

```
RECEIVE INPUT
```

↓ S22

```
GENERATE KEY ELEMENT
```

↓ S23

```
OUTPUT DECRYPTION KEY
```

↓

```
END
```

# Fig. 9

(Enc)

```
          START
            |
            v                    S31
┌───────────────────────────┐
│    ACQUIRE  INFORMATION    │
└───────────────────────────┘
            |
            v                    S32
┌───────────────────────────────────┐
│      GENERATE  CIPHER  ELEMENTS    │
│                            S321    │
│  ┌─────────────────────────────┐   │
│  │    GENERATE  CONVERSION     │   │
│  │      INFORMATION  z         │   │
│  └─────────────────────────────┘   │
│              |            S322      │
│              v                      │
│  ┌─────────────────────────────┐   │
│  │ GENERATE  CIPHER  ELEMENT cT│   │
│  └─────────────────────────────┘   │
│              |            S323      │
│              v                      │
│  ┌─────────────────────────────┐   │
│  │ GENERATE  CIPHER  ELEMENT c │   │
│  └─────────────────────────────┘   │
└───────────────────────────────────┘
            |
            v                    S33
┌───────────────────────────┐
│     OUTPUT  CIPHERTEXT     │
└───────────────────────────┘
            |
            v
          END
```

## Fig.10

(Dec)

START

S41 — ACQUIRE INFORMATION

S411 — ACQUIRE DECRYPTION KEY

S412 — ACQUIRE CIPHERTEXT

S42 — DECRYPTABLE?

NO

YES — S43 DECRYPT CIPHERTEXT BY DECRYPTION KEY

S431 — GENERATE CONVERSION INFORMATION $z'$

S432 — GENERATE MESSAGE $m'$

S44 — OUTPUT MESSAGE $m'$

S45 — OUTPUT DISTINGUISHED SYMBOL ⊥

END

EP 3 648 395 A1

## Fig.11

KEY GENERATION DEVICE ～10

ELECTRONIC CIRCUIT ～18

MASTER KEY GENERATION UNIT ～14

DECRYPTION KEY GENERATION UNIT ～15

KEY OUTPUT UNIT ～16

INPUT/OUTPUT INTERFACE ～13

$1^\lambda$, ID

pk, $sk_{ID}$

$1^\lambda$

ID

pk, sk

$sk_{ID}$

pk

pk, $sk_{ID}$

EP 3 648 395 A1

# Fig.12

ENCRYPTION DEVICE 20

ELECTRONIC CIRCUIT 28

ACQUISITION UNIT 24

pk, m, ID'

CIPHERTEXT GENERATION UNIT 25

CONVERSION INFORMATION GENERATION UNIT 251

FIRST CIPHER ELEMENT GENERATION UNIT 252

SECOND CIPHER ELEMENT GENERATION UNIT 253

$ct_{ID}'$

CIPHERTEXT OUTPUT UNIT 26

pk, m, ID'

INPUT/OUTPUT INTERFACE 23

$ct_{ID}'$

pk, m, ID'

$ct_{ID}'$

# Fig.13

DECRYPTION DEVICE —30

ELECTRONIC CIRCUIT —38

pk, $sk_{ID}$, $ct_{ID}'$

ACQUISITION UNIT —34

DECRYPTION KEY ACQUISITION UNIT —341

CIPHERTEXT ACQUISITION UNIT —342

pk, $sk_{ID}$, $ct_{ID}'$

—33

pk, $sk_{ID}$, $ct_{ID}'$

INPUT/OUTPUT INTERFACE

$m'$ or $\perp$

35 —

DECRYPTION UNIT

CONVERSION INFORMATION GENERATION UNIT —351

MESSAGE GENERATION UNIT —352

$m'$ or $\perp$ —36

MESSAGE OUTPUT UNIT

$m'$ or $\perp$

EP 3 648 395 A1

## Fig. 14

$$ID \neq ID' \iff \mathbb{G}_{ID} \neq \mathbb{G}_{ID'} \iff \hat{\mathbb{G}}_{ID} \neq \hat{\mathbb{G}}_{ID'}$$

EP 3 648 395 A1

## Fig. 15

| $\mathbb{G}_{1,0}$ | $\mathbb{G}_{2,0}$ | $\cdots$ | $\mathbb{G}_{n-1,0}$ | $\mathbb{G}_{n,0}$ |
|---|---|---|---|---|
| $\mathbb{G}_{1,1}$ | $\mathbb{G}_{2,1}$ | $\cdots$ | $\mathbb{G}_{n-1,1}$ | $\mathbb{G}_{n,1}$ |

| $\hat{\mathbb{G}}_{1,0}$ | $\hat{\mathbb{G}}_{2,0}$ | $\cdots$ | $\hat{\mathbb{G}}_{n-1,0}$ | $\hat{\mathbb{G}}_{n,0}$ |
|---|---|---|---|---|
| $\hat{\mathbb{G}}_{1,1}$ | $\hat{\mathbb{G}}_{2,1}$ | $\cdots$ | $\hat{\mathbb{G}}_{n-1,1}$ | $\hat{\mathbb{G}}_{n,1}$ |

# Fig.16

$$ID := 0\ 1\ \cdots\ 1\ 0$$

$$\mathbb{G}_{ID} := \mathbb{G}_{1,0} \times \mathbb{G}_{2,1} \times \cdots \mathbb{G}_{n-1,1} \times \mathbb{G}_{n,0}$$

EP 3 648 395 A1

Fig.17

$$ID' := 0\ 1\ \cdots\ 1\ 0$$

$$\hat{\mathbb{G}}_{ID} := \hat{\mathbb{G}}_{1,0} \times \hat{\mathbb{G}}_{2,1} \times \cdots \hat{\mathbb{G}}_{n-1,1} \times \hat{\mathbb{G}}_{n,0}$$

EP 3 648 395 A1

Fig.18

EP 3 648 395 A1

Fig.19

# Fig.20

ENCRYPTION DEVICE 20

PROCESSOR 21

pk, m, ID'

ACQUISITION UNIT 24

pk, m, ID'

CIPHERTEXT GENERATION UNIT 25

CONVERSION INFORMATION GENERATION UNIT 251

FIRST CIPHER ELEMENT GENERATION UNIT 252

SECOND CIPHER ELEMENT GENERATION UNIT 253

ID GROUP ASSIGNING UNIT 27

STORAGE DEVICE 22

INPUT/OUTPUT INTERFACE 23

pk, m, ID'

$ct_{ID'}$

$ct_{ID'}$

CIPHERTEXT OUTPUT UNIT 26

$ct_{ID'}$

EP 3 648 395 A1

# Fig.21

(Setup)

```
      START
        │
        ▼                    ╭─ S51
┌──────────────────────────┐
│ GENERATE PARAMETERS OF IPG│
└──────────────────────────┘
        │
        ▼                    ╭─ S52
┌──────────────────────────┐
│ GENERATE SECRET INFORMATION│
└──────────────────────────┘
        │
        ▼                    ╭─ S53
┌──────────────────────────┐
│      GENERATE KEY        │
│   GENERATION RANDOM       │
└──────────────────────────┘
        │
        ▼                    ╭─ S54
┌──────────────────────────┐
│   GENERATE MASTER KEY     │
│   PAIR OF pk AND sk       │
└──────────────────────────┘
        │
        ▼
       END
```

EP 3 648 395 A1

# Fig.22

(KeyGen)

START

```
          ↓
┌──────────────────────────────┐  S61
│         RECEIVE  INPUT        │
└──────────────────────────────┘
          ↓
┌──────────────────────────────┐  S62
│        ASSIGN  ID GROUP       │
└──────────────────────────────┘
          ↓
┌──────────────────────────────┐  S63
│ GENERATE DISTRIBUTED INFORMATION │
└──────────────────────────────┘
          ↓
┌──────────────────────────────┐  S64
│       GENERATE KEY ELEMENT    │
└──────────────────────────────┘
          ↓
┌──────────────────────────────┐  S65
│      OUTPUT DECRYPTION KEY     │
└──────────────────────────────┘
          ↓
```

END

# Fig.23

(Enc)

START

ACQUIRE INFORMATION — S71

ASSIGN ID GROUP — S72

GENERATE CIPHER ELEMENTS — S73

GENERATE CONVERSION INFORMATION $z$ — S731

GENERATE CIPHER ELEMENT $c_T$ — S732

GENERATE CIPHER ELEMENT $c$ — S733

OUTPUT CIPHERTEXT — S74

END

EP 3 648 395 A1

# Fig.24

1:CRYPTOGRAPHIC SYSTEM

$1^\lambda$, S → KEY GENERATION DEVICE (Setup) (KeyGen) — 10

pk, sk

pk

pk, sk$_S$

ENCRYPTION DEVICE (Enc) — 20

m, Γ →

ct$_\Gamma$

DECRYPTION DEVICE (Dec) — 30

m' or ⊥

# Fig.25

# Fig.26

KEY DELEGATION DEVICE 40

PROCESSOR 41

pk, $sk_{ID}$, $ID_{L+1}$

ACQUISITION UNIT 44

pk, $sk_{ID}$, $ID_{L+1}$

LOW-LEVEL KEY GENERATION UNIT 46

$sk_{ID*}$

LOW-LEVEL KEY OUTPUT UNIT 47

ID GROUP ASSIGNING UNIT 45

STORAGE DEVICE 42

pk, $sk_{ID}$, $ID_{L+1}$

INPUT/OUTPUT INTERFACE 43

$sk_{ID*}$

$sk_{ID*}$

EP 3 648 395 A1

## Fig.27

(Delegate)

START

↓

ACQUIRE INFORMATION — S81

↓

ASSIGN ID GROUP — S82

↓

GENERATE DISTRIBUTED INFORMATION — S83

↓

GENERATE KEY ELEMENT — S84

↓

OUTPUT LOW-LEVEL DECRYPTION KEY — S85

↓

END

EP 3 648 395 A1

## INTERNATIONAL SEARCH REPORT

| International application No. |
|---|
| PCT/JP2017/026283 |

**A. CLASSIFICATION OF SUBJECT MATTER**
*H04L9/08*(2006.01)i

According to International Patent Classification (IPC) or to both national classification and IPC

**B. FIELDS SEARCHED**

Minimum documentation searched (classification system followed by classification symbols)
H04L9/08

Documentation searched other than minimum documentation to the extent that such documents are included in the fields searched
Jitsuyo Shinan Koho       1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | KOSHIBA, T., et al., Pairing Cryptography Meets Isogeny: A New Framework of Isogenous Pairing Groups, Cryptology ePrint Archive, Report 2016/1138, [online], 2016.12, [Retrieved on 2017-09-29.] Retrieved from the Internet <URL: http://ia.cr/2016/1138> | 1–18 |
| A | JP 2011-232475 A  (Mitsubishi Electric Corp. et al.), 17 November 2011 (17.11.2011), entire text & US 2013/0028415 A1   & WO 2011/135895 A1 & EP 2565862 A1       & CN 102859571 A & KR 10-2012-0139753 A | 1–18 |

☐ Further documents are listed in the continuation of Box C.       ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 29 September 2017 (29.09.17) | 10 October 2017 (10.10.17) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)